# EUROPEAN PATENT APPLICATION

(11) **EP 4 672 061 A1**
(43) Date of publication of application: **31.12.2025**
(21) Application number: 25171943.1
(22) Date of filing: 23.04.2025
(51) Int. Cl.: G06F 21/60, G06F 21/85

(54) **APPARATUS AND METHOD FOR SECURE COMMUNICATION AND INTEGRATION WITH SECURE AND NON-SECURE ROOT PORTS**

(30) Priority: 26.06.2024 US 202418755418
(71) Applicant: INTEL Corporation, Santa Clara, CA 95054 (US)
(72) Inventor: Thomas, Tessil, Cambridge CB1 3LE (GB); Altman, Asher, Bedford MA, 01730 (US); Makaram, Raghunandan, Northborough MA, 01532 (US); Aharon, Arie, Haifa (IL); Kakaiya, Utkarsh Y., El Dorado Hills CA, 95762 (US)
(74) Representative: Samson & Partner Patentanwälte mbB

(57) **Abstract**

Secure communication provided with secure and non-secure root ports. One embodiment comprises: a plurality of cores; a memory controller to couple to a memory; an interconnect fabric coupled to the plurality of cores and the memory controller; and a root complex to support end-to-end encrypted channels between devices, the root complex comprising: a root port to receive non-posted requests from a requestor device, the root port to associate a first tag value with a non-posted request to indicate whether the non-posted request is received over an end-to-end encrypted channel; and a bridge device to transmit the non-posted request with the first tag value and to subsequently receive a completion message including the first tag value, wherein the root port is to determine whether the completion message is to be encrypted in accordance with the end-to-end encrypted channel based on the first tag value.

## Description

### TECHNICAL FIELD

Examples described herein are generally related to techniques associated with implementing mutual authentication for secure communication and integration with secure and non-secure root ports.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (IO). It should be noted that the term instruction herein may refer to a macro-instruction, e.g., an instruction that is provided to the processor for execution, or to a micro-instruction, e.g., an instruction that results from a processor's decoder decoding macro-instructions.

### BRIEF DESCRIPTION OF THE DRAWINGS

FIG. 1 illustrates an embodiment of a computing system including an interconnect architecture.
FIG. 2 illustrates an embodiment of an interconnect architecture including a layered protocol stack.
FIG. 3 illustrates an embodiment of a request or packet to be generated or received within an interconnect architecture.
FIG. 4 illustrates an embodiment of a transmitter and receiver pair for an interconnect architecture.
FIGS. 5A and 5B are simplified block diagrams illustrating hop-by-hop and end-to-end encryption, respectively, in a Peripheral Component Interconnect Express (PCIe) system architecture.
FIG. 6A is a block diagram illustrating an example connected system showing secure stream and secure links in accordance with embodiments of the present disclosure.
FIG. 6B is a block diagram illustrating a system with sockets for a secure stream protocol according to at least one embodiment.
FIG. 6C is a simplified block diagram illustrating a system implementing an end-to-end secure stream protocol according to at least one embodiment.
FIG. 7 illustrates secure stream state machine, in accordance with various embodiments.
FIG. 8 illustrates Secure TLP Diagram, in accordance with various embodiments.
FIG. 9 illustrates a Secure TLP Prefix, in accordance with various embodiments.
FIG. 10 is a process flow diagram for forming a secure transaction layer packet for transmission across a secure stream in accordance with embodiments of the present disclosure.
FIG. 11 is an interaction diagram illustrating example counters and keys that may be used in a secure stream protocol according to at least one embodiment.
FIG. 12 illustrates a possible format of a TLP secure stream prefix that may be carried by each transaction according to at least one embodiment.
FIGS. 13-15 are interaction diagrams illustrating possible transactions in a secure stream protocol operating in restricted ordering mode using three streams according to at least one embodiment.
FIGS. 16A-C are schematic diagrams illustrating allowed and forbidden requests reordering in accordance with embodiments of the present disclosure.
FIG. 17 is a schematic diagram of an example integrity sync message for a secure link in accordance with embodiments of the present disclosure.
FIG. 18 is a schematic diagram of an integrity sync message for a non-link secure stream in accordance with embodiments of the present disclosure.
FIG. 19 is a schematic diagram of an integrity check fail message for a secure link in accordance with embodiments of the present disclosure.
FIG. 20 is a schematic diagram of an integrity check fail message for a non-link secure stream in accordance with embodiments of the present disclosure.
FIG. 21 is a schematic diagram of an example secure stream requester identifier (RID) association block in accordance with embodiments of the present disclosure.
FIG. 22 is a schematic diagram of an example secure stream address association block in accordance with embodiments of the present disclosure.
FIG. 23 illustrates an example device suitable for use to practice various aspects of the present disclosure, in accordance with various embodiments.
FIG. 24 illustrates an example of selective integrity and data encryption (IDE) streams and link IDE streams.
FIGS. 25A-B illustrates an embodiment including a requestor device, completer device, accelerator, and memory controller.
FIGS. 25C-D illustrate a method in accordance with embodiments of the invention.
FIG. 26 illustrates one embodiment for securely processing page requests from requestor devices.
FIG. 27 illustrates one embodiment described with respect to access control services (ACS) and a trusted security manager (TSM).
FIG. 28 illustrates one embodiment including input-output memory management unit (IOMMU) trackers and RID association registers.
FIG. 29 illustrates a method in accordance with some embodiments.
FIG. 30 illustrates one embodiment in which non-posted requests are tagged with selective stream identifiers.
FIGS. 31A-B illustrate a method in accordance with embodiments of the invention.

### DETAILED DESCRIPTION

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. Certain operations include accessing one or more memory locations, e.g., to store and/or read (e.g., load) data. A system may include a plurality of cores, e.g., with a proper subset of cores in each socket of a plurality of sockets, e.g., of a system-on-a-chip (SoC). Each core (e.g., each processor or each socket) may access data storage (e.g., a memory). Memory may include volatile memory (e.g., dynamic random-access memory (DRAM)) or (e.g., byte-addressable) persistent (e.g., non-volatile) memory (e.g., non-volatile RAM) (e.g., separate from any system storage, such as, but not limited, separate from a hard disk drive). One example of persistent memory is a dual in-line memory module (DIMM) (e.g., a non-volatile DIMM) (e.g., an Intel^{®} OptaneTM memory), for example, accessible according to a Peripheral Component Interconnect Express (PCIe) specification such the PCIe Base Specification Revision 6.0, Ver. 1.0, published in January 2022 ("the PCIe specification").

In some examples of computing, a virtual machine (VM) (e.g., guest) is an emulation of a computer system. For these examples, VMs may be based on a specific computer architecture and provide the functionality of an underlying physical computer system. VM implementations may involve specialized hardware, firmware, software, or a combination. In certain examples, a virtual machine monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM/hypervisor may manage the backend operation of these VMs by allocating the necessary computing, memory, storage, and other input/output (I/O) resources, such as, but not limited to, an input/output memory management unit (I/OMMU). The VMM may provide a centralized interface for managing the entire operation, status, and availability of VMs that are installed over a single host machine or spread across different and interconnected hosts.

However, it may be desirable to maintain security (e.g., confidentiality) of information for a virtual machine from the VMM and/or other virtual machine(s). Certain processors (e.g., a system-on-a-chip (SoC) including a processor) utilize their hardware to isolate virtual machines, for example, with each referred to as a "trust domain" (TD) or "trusted VM" (TVM). Certain processors support an instruction set architecture (ISA) (e.g., ISA extension) to implement trust domains. For example, Intel^{®} trust domain extensions (Intel^{®} TDX) that utilize architectural elements to deploy hardware-isolated VMs are referred to as trust domains (TDs). Similarly, Advanced Micro Devices (AMD) has released extensions for Secure Encrypted Virtualization (SEV) with Secure Nested Paging (SNP) (SEV-SNP) to deploy hardware-isolated VMs, referred to as "trusted VMs" or "secure VMs").

For the remainder of this disclosure, the terms "trust domain" (TD), "trusted VMs," and "secure VMs" are used interchangeably to refer to any VM or guest protected through hardware-based isolation.

According to some examples, a hardware processor and its ISA may implement management components (e.g., referred to as a trust domain manager or trusted security manager) which isolate trusted VMs from the VMM/hypervisor and/or other non-secure software (e.g., on the host platform). For these examples, a hardware processor and its ISA implement trusted execution environments to enhance confidential computing by helping protect the trusted VMs from a broad range of software attacks and reducing the trusted computing base (TCB). In certain examples, a hardware processor and its ISA enhances a cloud tenant's control of data security and protection. In some examples, a hardware processor and its ISA implement trusted VMs to enhance a cloud-service provider's (CSP) ability to provide managed cloud services without exposing tenant data to adversaries.

In some examples, a hardware processor and its ISA also support device I/O. For example, with an ISA (e.g., Intel^{®} TDX 2.0) supporting trust domain extensions (TDX) with device I/O (e.g., TDX-IO). For these examples, a hardware processor and its ISA that support device I/O (e.g., TDX-IO) enable the use (e.g., assignment) of a physical function (PF) and/or virtual function (VF) of a device to (e.g., only) a specific TD.

According to some examples, an I/O device is an accelerator. One or more types of accelerators may be utilized. For example, a first type of accelerator may be accelerator circuit, e.g., an In-Memory Analytics accelerator (IAX). A second type of accelerator supports a set of transformation operations on memory, e.g., a data streaming accelerator (DSA). For example, the accelerator is to generate and test cyclic redundancy check (CRC) checksum or Data Integrity Field (DIF) to support storage and networking applications and/or for memory compare and delta generate/merge to support VM migration, VM fast check-pointing, and software managed memory deduplication usages. A third type of accelerator supports security, authentication, and compression operations (e.g., cryptographic acceleration and compression operations), e.g., a QuickAssist Technology (QAT) accelerator.

In some examples, in order to establish a trust relationship between a device and a trusted VM, certain architectures require the trusted VM and/or a trusted security manager (e.g., Trusted Execution Environment (TEE) security manager (TSM)) to create a secure communication session between the device and the TSM (e.g., for the trust domain manger to allow a particular trusted VM to use the device or a subset of function(s) of the device). For these examples, in order to establish the trust relationship between a device and a trusted VM, certain architectures require the trusted VM and/or a TSM to use various specifications to include, but not limited to, a Distributed Management Task Force (DMTF) Secure Protocol and Data Model (SPDM) specification such as the SPDM specification, DSP0274, Ver. 1.0.1, published in March, 2021 by the Platform Management Components Intercommunication (PMCI) working group of the DMTF (hereinafter "the SPDM specification") to authenticate the device (e.g., and collect device measurement).

The TEE and/or the TSM may also use protocols and techniques described in the Peripheral Component Interconnect Special Interest Group (PCI-SIG) and/or the Trusted Device Interface Security Protocol (TDISP) to communicate with a device security manager (DSM) to manage a device's virtual function(s).

According to some examples, a SPDM messaging protocol used according to the SPDM specification defines a request-response messaging model between two endpoints to perform a message exchange, for example, where each SPDM request message shall be responded to with an SPDM response message. For these examples, an endpoint's (e.g., device's) "measurement" describes the process of calculating a cryptographic hash value of a piece of firmware/software or configuration data and tying the cryptographic hash value with the endpoint's identity through a use of digital signatures. This allows an authentication initiator to establish that the identity and measurement of the firmware/software and/or a configuration currently running on the endpoint.

In some examples, to help enforce security policies for a trusted VM, a secure processor mode such as Secure-Arbitration Mode (SEAM) is used by the host processor to implement a digitally signed, but not encrypted, security-services module. For example, a trust domain manager (TDM) may be hosted in a reserved, memory space identified by a SEAM-range register (SEAMRR). For this example, the processor may only allow access to a SEAM-memory range by software executing inside the SEAM-memory range, and all other software accesses and direct-memory access (DMA) from devices to this SEAM-memory range are aborted. In some examples, a SEAM module does not have any memory-access privileges to other protected, memory regions in a compute/host platform, including the System-Management Mode (SMM) memory or (e.g., Intel^{®} Software Guard Extensions (SGX)) protected memory.

TDISP message protocols may be used by a TEE security manager (TSM) in a confidential computing environment (e.g., an environment implementing TDX-IO or SEV-IO). Some implementations include a secure startup service module (S3M) of the SoC to establish secure communication sessions. In certain examples, a secure startup service circuit includes SPDM capability and stack/device attestation capability (e.g., to support TDX-IO, SEV-TIO, and other secure IO implementations).

It should be understood that the functionality described in this disclosure may be added to other confidential computing technology as a computing solution for I/O devices. For example, AMD Secure Encrypted Virtualization (e.g., SEV/SEV-ES/SEV-SNP) may use a certain component (e.g., a Platform Security Processor (PSP)) thereof to implement a TSM, for example, a whole TSM including two parts: (i) a manager that enforces the TEE isolation, and (ii) the PSP that handles communications with the device security manager (DSM). For example, ARM^{®} Realm Management Extension (RME) may use a certain component (e.g., one ARM^{®} core of a plurality of ARM^{®} cores) thereof to implement a TSM, for example, a whole TSM including two parts: (i) a trust domain manager that enforces the TEE isolation, and (ii) the ARM^{®} core that handles communications with the device security manager (DSM).

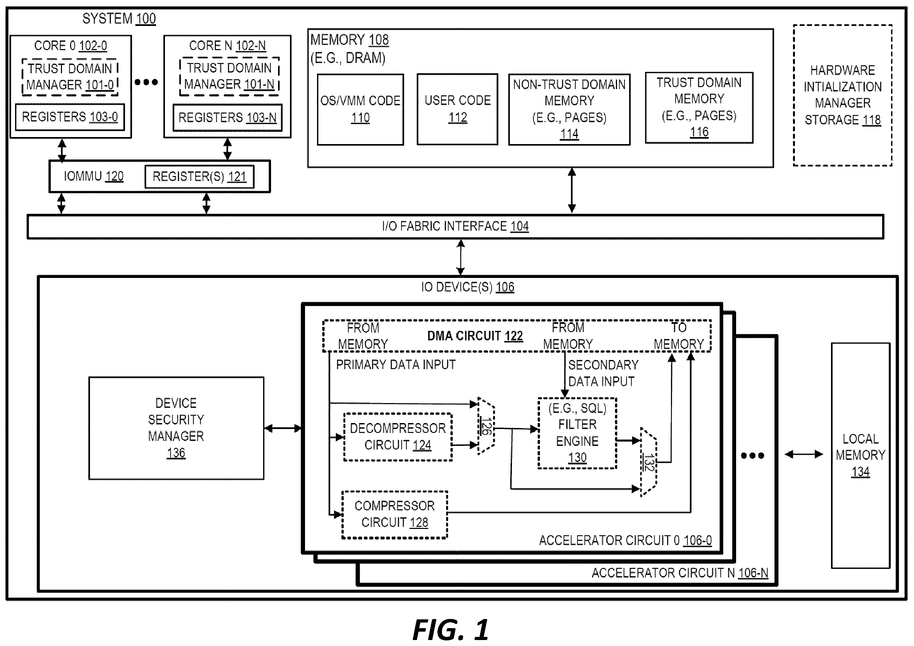

**Figure 1** illustrates an example system 100 which may be a computer system to implement techniques associated with TDX-IO, SEV-TIO, or other secure IO implementation on a single host computer system (e.g., a host server). According to some examples, system 100 may have all the elements or components shown in FIG. 1 co-located on a same physical machine (e.g., same host server or platform). In other words, the components of system 100 shown in FIG. 1 are local (e.g., on the same host server) as compared to at least some other components of system 100 (e.g., an I/O device from among I/O device(s) 106) which are remotely located. For these examples, as shown in Figure 1, system 100 includes a plurality of cores 102-0 to 102-N (e.g., where N is any positive integer greater than one, although single core examples may also be utilized) having a trust domain manager 101-0 to 101-N, a memory 108 (e.g., a system memory separate from a processor and/or core memory), an input/output memory management unit (IOMMU) 120 (e.g., circuit), one or more input/output (I/O) device(s) 106, and a secure startup service module (S3M) 138.

According to some examples, I/O device(s) 106 includes one or more accelerators (e.g., accelerator circuits 106-0 to 106-N (e.g., where N is any positive integer greater than one, although single accelerator circuit examples may also be utilized)). By way of example, and not limitation, the accelerator circuits 106-0 to 106-N may be general purpose graphics processing units (GPGPUs), data compression circuitry, and/or various types of machine-learning (ML) accelerators (e.g., devices capable of efficiently performing tensor operations such as matrix multiplication). Various types of IO devices 106 other than those specifically described herein may be coupled to the cores 102-0 to 102-N and memory 108 including, for example, persistent storage devices (e.g., solid state drives (SSDs), Flash memory devices, etc), network devices (e.g., Ethernet devices, Bluetooth devices), and display devices (e.g., supporting HDMI, DisplayPort, or other display standards).

Virtual machines (VM) or "guests" emulate a specific computer architecture and provide the functionality of an underlying physical computer system. Their implementations may involve specialized hardware, firmware, software, or combinations thereof. In certain examples, a virtual machine monitor (VMM) (also known as a hypervisor) is a software program that, when executed, enables the creation, management, and governance of VM instances and manages the operation of a virtualized environment on top of a physical host machine. For example, a VMM may facilitate the creation of multiple VMs, each with separate operating systems (OS) and applications. The VMM may manage the backend operation of these VMs by allocating the necessary computing, memory, storage, and other input/output (IO) resources, such as, but not limited to, an input/output memory management unit (IOMMU) (e.g., an IOMMU circuit). The VMM may provide a centralized interface for managing the entire operation, status, and availability of VMs that are installed over a single host machine or spread across different and interconnected hosts.

However, it may be desirable to protect the confidentiality of information for a virtual machine from the VMM and/or other virtual machine(s). Certain processors utilize their hardware and/or firmware to isolate a virtual machine to create a trust domain, also referred to as a "trusted VM", "trust zone", "secure environment", "trusted area", or "secure area." Regardless of the terminology used, the fundamental principle is secure isolation of a VM.

Certain processors support an instruction set architecture (ISA) (e.g., ISA extension) to implement trust domains. For example, Intel^{®} trust domain extensions (TDX) utilizes architectural elements to deploy trust domains comprising hardware-isolated virtual machines (VMs). In certain examples, a processor, that implements a trust domain manager, is to utilize the processor's hardware to isolate each trust domain, e.g., isolated from the hosting VMM and service OS environments. In certain examples, a trust domain manager is built using a combination of instruction-set-architecture (ISA) extensions, multi-key total-memory-encryption (MKTME) technology (e.g., circuitry), and a CPU-attested software module.

In certain examples, a hardware processor and its ISA (e.g., a trust domain manager thereof) isolates trusted VMs from the VMM (e.g., hypervisor) and/or other software external to the trust domain. In certain examples, a trust domain manager is executed in accordance with a host processor's ISA to implement trust domains which are protected from a broad range of software attacks. In certain examples, the trust domain manager enhances a cloud tenant's control of data security and protection enhances a cloud-service provider's (CSP) ability to provide managed cloud services without exposing tenant data to adversaries.

In certain examples, the trust domain manager also supports trusted device input/output (IO) implementations such as TDX-IO and SEV-TIO. In certain examples, the trust domain manager enables the use (e.g., assignment) of a physical function (PF) and/or a virtual function (VF) and/or an assignable device interface (ADI) for Scalable IO Virtualization (SIOV) of a device to a specific TD.

In certain examples, an IO device is an accelerator. One or more types of accelerators may be utilized. For example, a first type of accelerator may be accelerator circuit 106-0 from Figure 1, e.g., an In-Memory Analytics accelerator (IAA). A second type of accelerator supports a set of transformation operations on memory, e.g., a data streaming accelerator (DSA). For example, to generate and test cyclic redundancy check (CRC) checksum or Data Integrity Field (DIF) to support storage and networking applications and/or for memory compare and delta generate/merge to support VM migration, VM Fast check-pointing, and software managed memory deduplication usages. A third type of accelerator supports security, authentication, and compression operations (e.g., cryptographic acceleration and compression operations), e.g., a QuickAssist Technology (QAT) accelerator.

While various examples described herein use the term System-on-a-Chip or System-on-Chip ("SoC") to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems, the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP").

Certain trust domains (TDs) are used to host confidential computing workloads isolated from hosting environments. Certain trust domain technology (e.g., TDX 1.0) architecture enables isolation of the TD (e.g., central processing unit (CPU)) context and memory from the hosting environment, but does not support trusted IO (e.g., direct memory access (DMA) or memory-mapped I/O (MMIO)) to TD private memory, e.g., leading to higher overheads as trust domains are to use a software mechanism for protecting data sent to IO devices (e.g., storage, network, etc.), for example, where all IO data is sent through bounce buffers in TD shared memory using para-virtualized interfaces. However, in certain examples, this precludes the use of some IO models, such as, but not limited to, scalable IO virtualization (IOV), shared virtual memory, direct IO assignments, and compute offload to an accelerator, field-programmable gate array (FPGA), and/or graphics processing unit (GPU). Thus, from an IO perspective, certain trust domain technology (e.g., TDX 1.0) suffers from the limitations of 1) functionality (e.g., security) because protection can only be extended for devices having the capabilities of end to end encryption (e.g., hardware (H/W) or software (S/W) stack based), as well as no support for state of the art IO virtualization/programming models, and 2) performance because copying for bounce buffers (and software based encryption) incurs significant performance overheads, especially with increased speed/bandwidth of IO devices (e.g., accelerators).

Certain systems (e.g., SoCs) are to implement trust domains to enable direct and trusted IO between a trust domain (TD) and a corresponding IO device. Certain systems (e.g., devices) utilize a device security manager (DSM) comprising circuitry, software/firmware, or combinations thereof to implement direct and trusted IO between a trust domain (TD) and a corresponding IO device.

Certain device security managers require the use of encrypted messages. For example, a device security manager for TEE-IO devices may be according to a Peripheral Component Interconnect Special Interest Group (PCI-SIG) TEE Device Interface Security Protocol (TDISP) standard. However, certain device security manager architectures may be undesirable for use by certain IO devices (e.g., SoC integrated devices) due to the cost and complexity associated therewith. For example, it may be undesirable to implement a device security manager that (i) requires the use of encrypted messages and/or (ii) that has support for SPDM standard, and/or TDISP message parsing, which increases the cost/complexity of the overall SoC.

Examples herein are directed to a device security manager that does not require the use of encrypted messages, but still provides the security and functional requirements of the platform. Some examples herein are directed to a device security manager that removes the need to build cryptographic engines, SPDM/Secure-SPDM engines, and message processors on an (e.g., integrated) device, and thus making it feasible to adopt TEE-IO (e.g., TDX-IO) capabilities on these devices. In certain examples, an IO device is an integrated accelerator (e.g., DSA, IAA, QAT, etc.) to support TDX-IO capabilities. In certain example, an IO device supports TEE-IO (e.g., TDX-IO) without supporting IDE, SPDM, and/or Secure-SPDM capabilities. Certain examples herein modify the device architecture, TEE security manager (TSM), and/or virtual machine monitor (VMM) to implement the disclosed device security manager (e.g., circuit).

In certain examples, the device security manager enhancements disclosed herein enable TEE-IO (e.g., TDX-IO), and thus are improvements to the functioning of a SoC (e.g., processor) (e.g., of a computer) itself as they allow for direct and trusted IO between a trust domain (TD) and a corresponding IO device.

It should be understood that the functionality (e.g., DSM enhancements) herein may be added to other confidential computing technology, for example, to AMD^{®} Secure Encrypted Virtualization (e.g., SEV) (e.g., Secure Encrypted Virtualization-Encrypted State (SEV-ES) and/or SEV-Secure Nested Paging (SEV-SNP)) or ARM^{®} Realm Management Extension (RME). In certain examples, the confidential computing technology (e.g., AMD^{®} SEV) uses one key per virtual machine to isolate guests and the hypervisor from one another, for example, where the keys are managed by a trust domain manager (e.g., AMD Secure Processor). In certain examples, the confidential computing (e.g., SEV) requires enablement in the guest operating system and hypervisor. In certain examples, the guest changes allow the virtual machine to indicate which pages in memory should be encrypted. In certain examples, the hypervisor changes use hardware virtualization instructions and communication with the trust domain manager (e.g., AMD Secure processor) to manage the appropriate keys in the memory controller. In certain examples, the confidential computing technology (e.g., ARM^{®} Confidential Compute Architecture (ARM^{®} CCA)) enables the construction of protected execution environments called realms, for example, where realms allow lower-privileged software, such as an application or a virtual machine, to protect its content and execution from attacks by higher-privileged software, such as an OS or a hypervisor.

Turning now to Figure 1, an example system architecture is depicted. Figure 1 illustrates a block diagram of a computer system 100 including 102-0 to 102-N (e.g., where N is any positive integer greater than one, although single core examples may also be utilized) having a trust domain manager 101-0 to 101-N, a memory 108 (e.g., a system memory separate from a processor and/or core memory), an input/output memory management unit (IOMMU) 120 (e.g., circuit), and an input/output (IO) device 106 according to examples of the disclosure.

In certain examples, each core includes (e.g., or logical includes) a set of registers, e.g., registers 103-0 for core 102-0, registers 103-N for core 102-N, etc. Registers 103 may be data registers and/or control registers, e.g., for each core (e.g., or each logical core of a plurality of logical cores of a physical core).

In certain examples, a processor (e.g., processor core 102) is to implement a trust domain manager 101. In certain examples, trust domain manager (TDM) code is a processor (e.g., CPU) attested software module that implements the functions to build, tear down, and start execution of trust domains. In certain examples, a processor (e.g., processor core 102) is to implement a trust domain manager to manage one or more virtual machines as a respective trust domain isolated from a virtual machine monitor (e.g., hosting VMM) and/or service O.S. environments.

In certain examples, IO device 106 includes one or more accelerators (e.g., accelerator circuits 106-0 to 106-N (e.g., where N is any positive integer greater than one, although single accelerator circuit examples may also be utilized)).

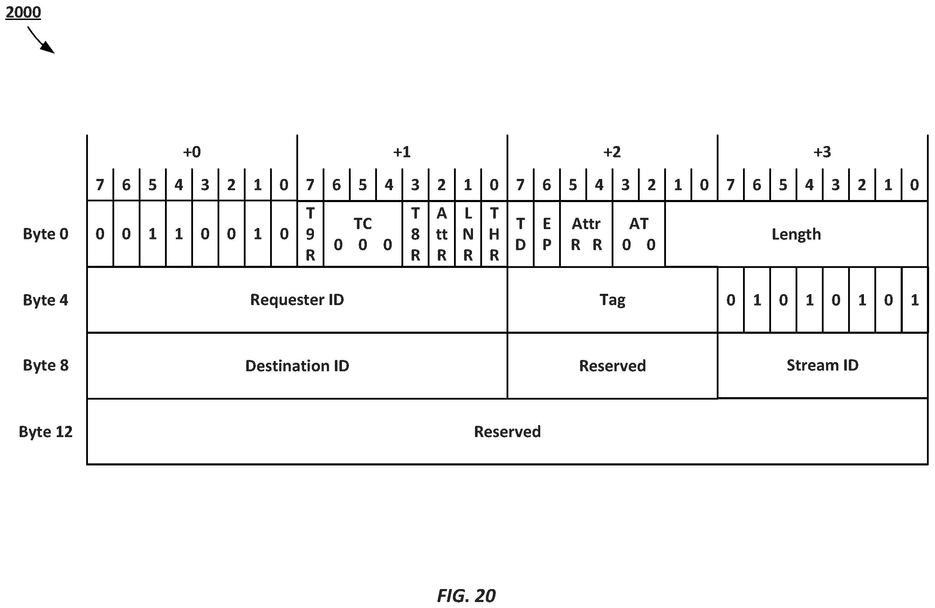

Although the example shown in Figure 1 of the device 106 is an accelerator, it should be understood that other devices (e.g., non-accelerator devices) can utilized the examples disclosed herein. In the depicted example, a (e.g., each) accelerator circuit 106-0 to 106-N includes a decompressor circuit 124 to perform decompression operations, a compressor circuit 128 to perform compression operations, and a direct memory access (DMA) circuit 122, e.g., to connect to memory 108 and/or internal memory (e.g., cache) of a core. In one example, compressor circuit 128 is (e.g., dynamically) shared by two or more of the accelerator circuits 106-0 to 106-N. In certain examples, the data for a job that is assigned to a particular accelerator circuit (e.g., accelerator circuit 106-0) is streamed in by DMA circuit 122, for example, as primary and/or secondary input. Multiplexers 126 and 132 may be utilized to route data for a particular operation. Optionally, a (e.g., Structured Query Language (SQL)) filter engine 130 may be included, for example, to perform a filtering query (e.g., for a search term input on the secondary data input) on input data, e.g., on decompressed data output from decompressor circuit 124. Device 106 may include a local memory 134, e.g., shared by a plurality of accelerator circuits 106-0 to 106-N. Computer system 100 may couple to a hard drive, e.g., storage unit 2028 in Figure 20.

Memory 108 may include operating system (OS) and/or virtual machine monitor code 110, user (e.g., program) code 112, non-trust domain memory 114 (e.g., pages), trust domain memory 116 (e.g., pages), uncompressed data (e.g., pages), compressed data (e.g., pages), or any combination thereof. In certain examples of computing, a virtual machine (VM) is an emulation of a computer system. In certain examples, VMs are based on a specific computer architecture and provide the functionality of an underlying physical computer system. Their implementations may involve specialized hardware, firmware, software, or a combination. In certain examples, the virtual machine monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage, and other input/output (IO) resources, such as, but not limited to, an input/output memory management unit (IOMMU). The VMM may provide a centralized interface for managing the entire operation, status, and availability of VMs that are installed over a single host machine or spread across different and interconnected hosts.

Memory 108 may be memory separate from a core and/or device 106. Memory 108 may be DRAM. Compressed data may be stored in a first memory device (e.g., far memory 146) and/or uncompressed data may be stored in a separate, second memory device (e.g., as near memory).

A coupling (e.g., input/output (IO) fabric interface 104) may be included to allow communication between device 106, core(s) 102-0 to 102-N, memory 108, etc.

In certain examples, the hardware initialization manager (non-transitory) storage 118 stores hardware initialization manager firmware (e.g., or software). In one example, the hardware initialization manager (non-transitory) storage 118 stores Basic Input/Output System (BIOS) firmware. In another example, the hardware initialization manager (non-transitory) storage 118 stores Unified Extensible Firmware Interface (UEFI) firmware. In certain examples (e.g., triggered by the power-on or reboot of a processor), computer system 100 (e.g., core 102-0) executes the hardware initialization manager firmware (e.g., or software) stored in hardware initialization manager (non-transitory) storage 118 to initialize the system 100 for operation, for example, to begin executing an operating system (OS) and/or initialize and test the (e.g., hardware) components of system 100.

In certain examples, computer system 100 includes an input/output memory management unit (IOMMU) 120 (e.g., circuitry), e.g., coupled between one or more cores 102-0 to 102-N and IO fabric interface 104. In certain examples, IOMMU 120 provides address translation, for example, from a virtual address to a physical address. In certain examples, a device 106 has a mode for support of shared virtual memory, whereby virtual addresses are specified in a descriptor, and the hardware translates these into physical addresses using address translation services of the IOMMU 120. In certain examples, IOMMU 120 includes one or more registers 121, for example, data registers and/or control registers.

A device 106 may include any of the depicted components. For example, with one or more instances of an accelerator circuit 106-0 to 106-N. In certain examples, a job (e.g., corresponding descriptor for that job) is submitted to the device 106 and the device to performs one or more (e.g., decompression or compression) operations. In certain examples, device 106 includes a local memory 134. In certain examples, device 106 is a TEE IO capable device, for example, with the host (e.g., processor including one of more of cores 102-0 to 102-N) being a TEE capable host. In certain examples, a TEE capable host implements a TEE security manager.

In certain examples, a trusted execution environment (TEE) security manager (e.g., implemented by a trust domain manager 101) is to: provide interfaces to the VMM to assign memory, processor, and other resources to trust domains (e.g., trusted virtual machines), (ii) implements the security mechanisms and access controls (e.g., IOMMU translation tables, etc.) to protect confidentiality and integrity of the trust domains (e.g., trusted virtual machines) data and execution state in the host from entities not in the trusted computing base of the trust domains (e.g., trusted virtual machines), (iii) uses a protocol to manage the security state of the trusted device interface (TDI) to be used by the trust domains (e.g., trusted virtual machines), (iv) establishing/managing IDE encryption keys for the host, and, if needed, scheduling key refreshes. TSM programs the IDE encryption keys into the host root ports and communicates with the DSM to configure integrity and data encryption (IDE) encryption keys in the device, (v) or any single or combination thereof.

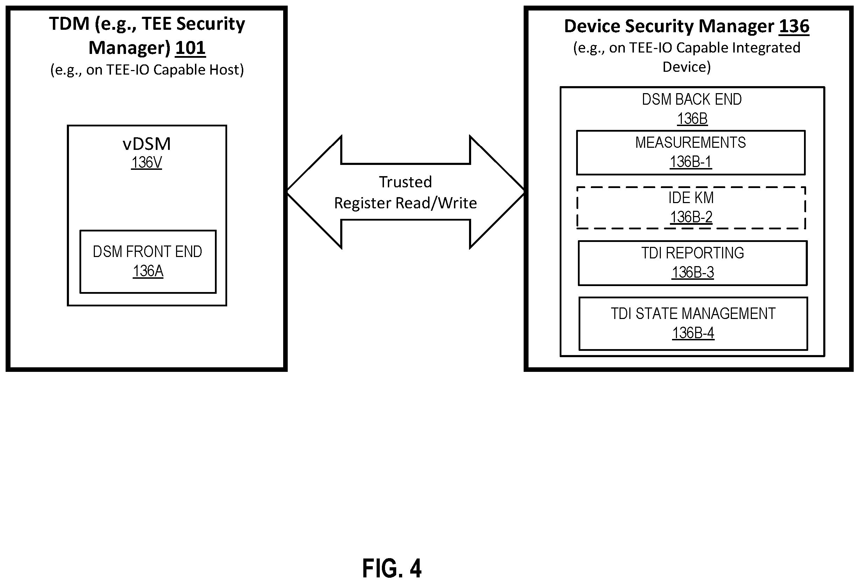

In certain examples, a device security manager (DSM) 136 is to (i) support authentication of device identities and measurement reporting, (ii) configure the IDE encryption keys in the device (e.g., where the TSM provide the keys for the initial configuration and subsequent key refreshes to the DSM), (iii) provide device interface management for locking TDI configuration, reporting TDI configurations, attaching, and detaching TDIs to trust domains (e.g., trusted virtual machines), (iv) implements access control and security mechanisms to isolate trust domain (e.g., trusted virtual machine) provided data from entities not in the TCB of a trust domain (e.g., a trusted virtual machine), (v) or any single or combination thereof. In certain examples, device security manager (DSM) 136 includes a set of one or more registers 137 (e.g., control and status registers), e.g., as discussed in reference to Figures 4-11.

In certain examples, a standard defines a virtual machine monitor (VMM) (e.g., or VM thereof), TSM (e.g., trust domain manager 101), and device security manager (DSM) 136 interaction flow.

In certain examples, IOMMU 120 and trust domain manager(s) 101 cooperate to allow for direct memory access (e.g., directly) between (e.g., to and/or from) IO device(s) 106 and trust domain memory 116 (e.g., a region for only a single trust domain and/or another region shared by a plurality of trust domains).

In order to establish the trust relationship between a device and a TD, certain TDX-IO architectures require the TD and/or a trust domain manager (e.g., circuit and/or code) (e.g., Trusted Execution Environment (TEE) security manager (TSM)) to create a secure communication session between the device and the trust domain manger (e.g., for the trust domain manger to allow a particular trust domain to use the device or a subset of function(s) of the device). In order to establish the trust relationship between a device and a TD, certain TDX-IO architectures require the TD and/or a trust domain manager (e.g., circuit and/or code) (e.g., Trusted Execution Environment (TEE) security manager (TSM)) use (i) a Distributed Management Task Force (DMTF) Secure Protocol and Data Model (SPDM) standard to authenticate the device (e.g., and collect device measurement), and (ii) use a Peripheral Component Interconnect Special Interest Group (PCI-SIG) TEE Device Interface Security Protocol (TDISP) standard (e.g., to communicate with a device security manager (DSM) to manage the device's virtual function(s)).

In certain examples, a SPDM messaging protocol defines a request-response messaging model between two endpoints to perform the message exchanges outlined in SPDM message exchanges, for example, where each SPDM request message shall be responded to with an SPDM response message as defined in the SPDM specification. In certain examples, a TDISP messaging protocol defines a request-response messaging model between two endpoints to perform the message exchanges outlined in TDISP message exchanges, for example, where each TDISP request message shall be responded to with an TDISP response message as defined in the TDISP specification. In certain examples, an endpoint's (e.g., device's) "measurement" describes the process of calculating the cryptographic hash value of a piece of firmware/software or configuration data and tying the cryptographic hash value with the endpoint identity through the use of digital signatures. This allows an authentication initiator to establish that the identity and measurement of the firmware/software or configuration running on the endpoint.

In certain examples, a security controller circuit 138 is included, e.g., to control set-up of device 106.

In certain examples, to help enforce the security policies for the TDs, a new mode of a processor called Secure-Arbitration Mode (SEAM) is introduced to host an (e.g., manufacturer provided) digitally signed, but not encrypted, security-services module (e.g., trust domain manager code). In certain examples, a trust domain manager (TDM) 101 executes out of a reserved, memory space identified by a SEAM-range register (SEAMRR). In certain examples, the processor only allows access to SEAM-memory range to software executing inside the SEAM-memory range, and all other software accesses and direct-memory access (DMA) from devices to this memory range are aborted. In certain examples, a SEAM module does not have any memory-access privileges to other protected, memory regions in the platform, including the System-Management Mode (SMM) memory or (e.g., Intel^{®} Software Guard Extensions (SGX)) protected memory.

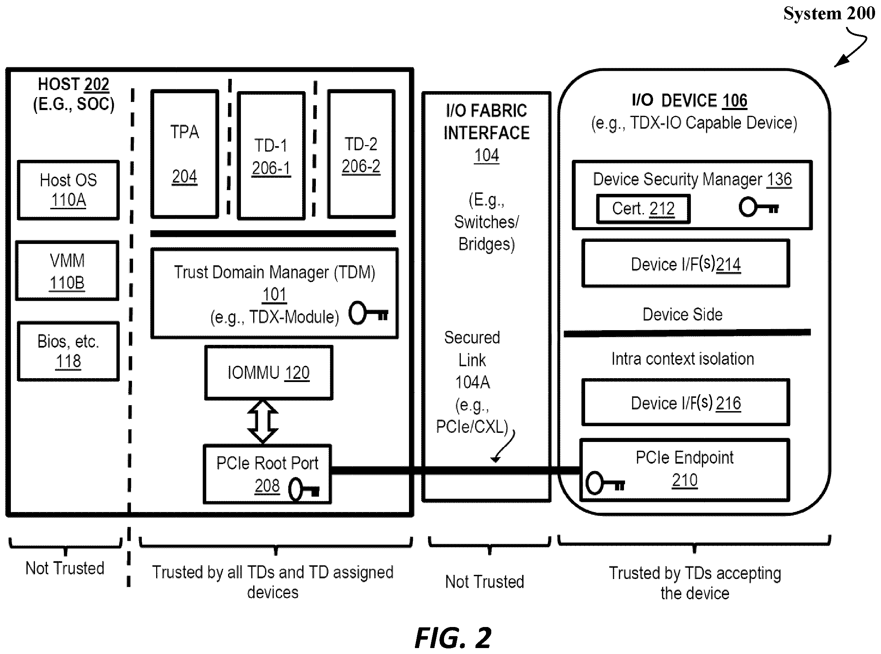

**Figure 2** illustrates a functional diagram of a host 202 (e.g., one or more of processor cores 102 in Figure 1) coupled to an (e.g., discrete, and not integrated) IO device 106 (e.g., TDX-IO capable device) according to examples of the disclosure (e.g., forming a system 200). In certain examples, host 202 implements a TDX-IO provisioning agent (TPA) 204 of trust domains, and a plurality of trust domains, shown as trust domain "1" 206-1 and trust domain "2" 206-2, although any single or plurality of trust domains may be implemented. In certain examples, host 202 includes a trust domain manager 101 to manage the trust domains (for example, with the vertical dashed lines indicating isolation therebetween the trust domains, e.g., and host OS 110A implemented by host 202 during operation, VMM 110B implemented by host 202 during operation, and BIOS, etc. 118). In certain examples, the virtual machine monitor 110B manages (e.g., generates) one or more virtual machines, e.g., with the trust domain manager 101 isolating a first virtual machine as a first trust domain from a second (or more) virtual machine and second (or more) trust domain(s). In certain examples, the host 202 includes a (e.g., PCIe) root port 208 having a key(s) (shown symbolically) to allow secure communications with the IO device 106, e.g., with the (e.g., PCIe) endpoint 210 thereof (e.g., also having the key(s) (shown symbolically)). In certain examples, the trust domain manager 101 and device security manager 136 are also to have a key(s), e.g., representing a memory protection key(s) and a secure session key(s), respectively.

In certain examples, the host 202 is coupled to device 106 via a coupling 104, e.g., via a secured link 104A (e.g., a link according to a PCIe/Compute Express Link (CXL) standard).

In certain examples, the host 202 is coupled to device 106 according to a transport level (e.g., SPDM) specification and/or an application level (e.g., TDISP) specification. In certain examples, device 106 includes a device security manager (DSM) 136 with a device secret(s), e.g., device certificate 212, session key, device "measurement" values, etc. In certain examples, device 106 implements one or more physical function(s) and/or virtual function(s) and/or assignable device interfaces (e.g., scalable IOV assignable device interfaces (ADIs)).

In certain examples, device 106 includes a first device interface (I/F) 214 on the device side, and one or more second device interface(s) 216, e.g., where the device 106 supports intra context isolation between these interfaces.

In certain examples, device 106 (e.g., according to a single-root input/output virtualization (SR-IOV) standard) is shared by a plurality of virtual machines (e.g., trust domains). In certain examples, a physical function has the ability to move data in and out of the device while virtual functions (for example, first virtual function and second virtual function, e.g., where the virtual functions are lightweight (e.g., PCI express (PCIe)) functions that support data flowing but also have a restricted set of configuration resources.

In certain examples, IO device 106 is to perform a direct memory access request to a private memory of a trust domain (e.g., trust domain 206-1 or trust domain 206-2) under the control of the IOMMU 120.

Certain processors (e.g., SoC) support trusted execution environments (TEE) (e.g., trust domain extensions (TDX)) that use architectural elements to help deploy hardware-isolated virtual machines (VMs) referred to as trust domains (TDs) or trusted virtual machines (TVMs). In certain examples, TEE (e.g., TDX) is designed to isolate VMs from the virtual-machine manager (VMM)/hypervisor and any other non-TD software on the platform to protect TDs from a broad range of software. Certain TEE (e.g., TDX) support TEE-IO framework (e.g., shown in Figure 2) that enables direct assignment of trusted device interfaces of (e.g., PCIe) discrete devices to TDs.

In certain examples, trust domain manager 101 (e.g., TEE security manager (TSM)) is a logical entity in a host that is the trusted computing base (TCB) for a trusted domain (e.g., trusted virtual machine) and enforces security policies on the host. In certain examples, the device security manager (DSM) 136 is a logical entity in the device that may be admitted into the TCB for a TD by the TSM and enforces security policies on the device.

In certain examples, the trust domain manager 101 (e.g., TEE security manager (TSM) (e.g. TDX-module): (i) provides interfaces to the VMM to assign memory, processor, and other resources to trust domains (e.g., trusted virtual machines), (ii) implements the security mechanisms and access controls (e.g., IOMMU translation tables, EPT tables, etc.) to protect confidentiality and integrity of the trust domains data and execution state in the host from entities not in the trusted computing base of the trust domains, (iii) uses a protocol to manage the security state of the trusted device interface (TDI) to be used by the trust domains, and (iv) establishes/manages IDE encryption keys for the host, and, if needed, scheduling key refreshes. In certain example, the trust domain manager (e.g., TSM) programs the IDE encryption keys into the host root ports and communicates with the DSM to configure integrity and data encryption (IDE) encryption keys in the device.

In certain examples, device security manager (DSM) 136 (i) supports authentication of device identities and measurement reporting, (ii) configuration of the IDE encryption keys in the device (e.g., where the trust domain manager (e.g., TSM) provide the keys for the initial configuration and subsequent key refreshes to the DSM), (iii) provides device interface management for locking TDI configuration, reporting TDI configurations, attaching, and detaching TDIs to trust domains, and (iv) implements access control and security mechanisms to isolate trust domain (e.g., trusted virtual machine) provided data from entities not in the TCB of a trust domain.

In order to establish the trust relationship between the device and TD, in certain examples, a TEE-IO architecture requires that the TD and/or trust domain manager (e.g., TSM) uses the DMTF Secure Protocol and Data Model (SPDM) to authenticate the device & collect the device measurements and/or use PCI-SIG TEE Device Interface Security Protocol (TDISP) to manage the trusted device interfaces.

In certain examples, the trust domain manager 101 is trusted by each trust domain, e.g., but a trust domain does not trust another trust domain. In certain examples, each trust domain of a plurality of trust domains includes its own respective trust domain state and/or memory.

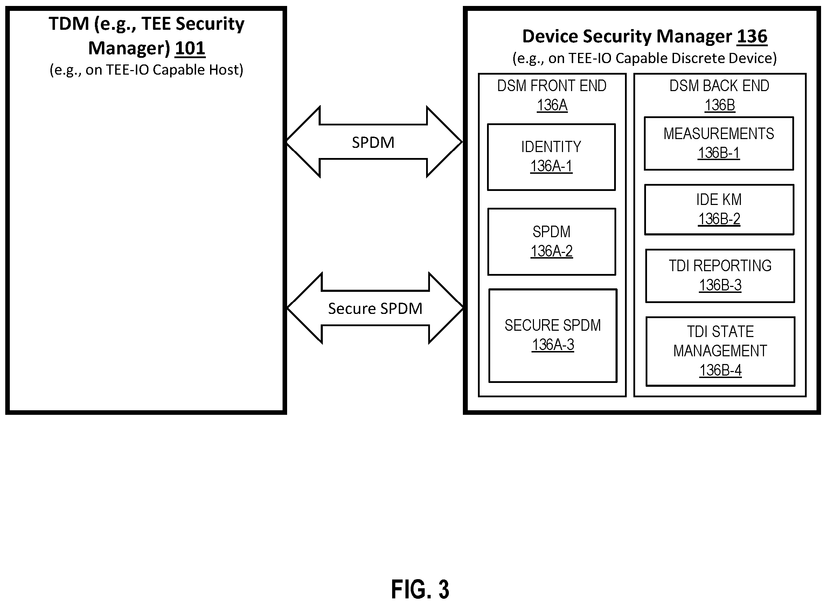

**Figure 3** illustrates a block diagram of a trust domain manager 101 (also referred to as a trusted/TEE security manager or TSM) coupled to a device security manager 136 and its components used for managing interactions between the trust domain manager and the device security manager for a discrete IO device according to examples of the disclosure. In certain examples, depicted components in device security manager 136 allow for SPDM and secure SPDM (e.g., per Secured Messages using a SPDM specification) communications. In certain examples, device security manager (DSM) 136 includes a DSM front end 136A and a DSM back end 136B.

DSM front end 136A may include one or more (e.g., any combination of) identity 136A-1, SPDM 136A-2, and/or secure SPDM 136A-3. In certain examples, identity 136A-1 block is responsible to provide a unique device identity and to support device authentication. In some examples, identity 136A-1 block implements the Device Identifier Composition Engine (DICE) architecture specified by the Trusted Computing Group (TCG) and/or hosts the DICE certificate. In certain examples, SPDM 136A-2 block implements a Security Protocol and Data Model (SPDM) specification and/or supports authentication and provisioning of hardware identities, measurement reporting for firmware identities, and/or session key exchange protocols to enable confidentiality with integrity protected data communication and other related capabilities. In certain examples, secure SPDM 136A-3 block implements Secured Messages using a SPDM specification and/or supports encrypted and authenticated message exchanges over a secure session. In certain examples, secure SPDM session is utilized to securely program encryption keys on the device and/or to send/receive TDISP messages.

DSM back end 136B may include one or more (e.g., any combination of) measurements 136B-1, IDE key management (KM) 136B-2, TDI reporting 136B-3, and/or TDI state management 136B-4. In certain examples, measurements 136B-1 block manages the measurements for the device which are a representation of firmware and/or software identities or configuration data on an endpoint or the device state, debug mode, etc. In certain examples, IDE key management (KM) 136B-2 block manages the encryption keys and/or state associated with the Integrity & Data Encryption (IDE) session (e.g., link encryption session). In certain examples, TDI reporting 136B-3 block stores the information or configuration associated with the trusted device interface (TDI) and/or securely reports it when queried. In certain examples, TDI state management 136B-4 block manages the trusted device interface (TDI) state, life cycle and/or security properties.

In certain examples, SPDM specifies a method for managed device authentication, firmware measurement, and certificate management, e.g., where SPDM defines the formats for both request and response messages that enable the end-to-end security features among the platform-management components.

In certain examples, TEE-IO capable devices are required to: (i) implement DMTF SPDM 1.1 specification (or higher version such as, but not limited to, SPDM 1.2) for runtime authentication, firmware, and configuration measurement reporting, and session key negotiation, (ii) support PCIe TEE device interface security protocol (TDISP) to support assigning device interfaces to TDs, and/or (iii) support PCIe IDE extensions to provide confidentiality, integrity, and replay protection of protection of data transferred to/from the device.

In order to support device authentication using SPDM, in certain examples, the device includes a root-of-trust (RoT) for storage (RTS) to access the device secrets, such as, but not limited to, a private key, a root-of-trust for measurement (RTM) to record the device measurement, and/or a root-of-trust for reporting (RTR) to report the SPDM measurement. In certain examples, the device also includes storage space for the SPDM certificate chain. In order to support IDE key-management and trusted-device interface reporting/management using Secure-SPDM, in certain examples, the device builds a cryptographic engine to be able to encrypt/decrypt messages and a message creator/parser. Certain devices (e.g., Graphics Processing Unit (GPU), Infrastructure Processing Unit (IPU), etc.) implement this protocol functionality through a firmware running on a dedicated micro-controller.

Certain processors (e.g., SoCs) are to add TDX-IO support to an integrated accelerator(s) (e.g., DSA, IAA, QAT accelerator) into a SoC. Since certain integrated devices are (i) in a large quantity (e.g., 16 or more devices per SoC), (ii) built mainly based on the non-programmable/hardened (e.g., RTL/VHDL) logic, and (iii) relatively compact data-processing engines with a small die area, expecting each of these devices to implement SPDM & Secure-SPDM (e.g., crypto, certificates, private/public key storage, message processors, etc.) is not feasible from the hardware cost and complexity perspective.

Examples herein provide a (e.g., lite-weight) device security manager architecture (e.g., "DSM-Lite") which significantly reduces the hardware cost/complexity while maintaining the security and functional properties as in a traditional DSM discussed above (e.g., in reference to Figure 3).

**Figure 4** illustrates a block diagram of a trust domain manager/TSM 101 coupled to a device security manager 136 (e.g., DSM-Lite) and its components used for managing interactions between the trust domain manager and the device security manager for an integrated IO device according to examples of the disclosure. In certain examples, measurements, TDI reporting, and TDI state management are in a set of one or more registers of device security manager 136. In certain examples, the DSM front end 136A resides in the trust domain manager 101 (e.g., instead of the DSM front end 136A residing in the device security manager 136), e.g., while leaving the DSM back end 136B residing within the device security manager 136. In certain examples (e.g., because the device is an integrated device of a host (e.g., SoC)), the DSM back end 136B does not include IDE key management (KM) 136B-2 block. In certain examples, implementing the DSM front end 136A in the trust domain manager 101 (e.g., instead of the DSM front end 136A being in the device security manager 136) as a virtual DSM 136V (e.g., virtual DSM front end) significantly reduces the hardware cost/complexity for each device (and thus each corresponding device security manager 136), e.g., while leaving the DSM back end 136B within the device security manager 136. Turning again to Figure 1, a virtual DSM 136V (e.g., virtual DSM front end) allows for certain DSM circuitry (and thus certain DSM functionality) to be implemented external from the IO device 106, for example, where there are a plurality of IO devices 106 but one virtual DSM 136V (e.g., virtual DSM front end) to perform certain DSM functionality. In certain examples, virtual DSM (vDSM) 136V is implemented as (i) part of a TDM 101, (ii) part of an architectural trust domain (TD) (e.g., as an extension of TDM), and/or (iii) as part of a security controller (e.g., security controller circuit 138) (e.g., security coprocessor (e.g., secure startup service module (S3M))). In certain examples, the DSM front end 136A (e.g., implemented as vDSM 136V) and DSM back end 136B in the device communicate through (e.g., trusted) register reads and writes.

In certain examples, the device interface (e.g., TDI) state is selectable between: (i) an unlocked state (e.g., as a default state of the device), (ii) a locked state to prevent changes to be made to the device interface, (iii) an operational (e.g., run) state to enable access to device registers of the device (e.g., by the trusted VM (e.g., TD) or direct memory access (DMA) from the device to memory address spaces of the trusted VM (e.g., TD)), and/or (iv) an error state to indicate an error has happened.

Some new CPU capabilities include trust domains that provide a virtual computing environment without a hypervisor in a trusted computing base (TCB). The hypervisor (or virtual machine manager (VMM)) is removed from the trusted computing base for virtual machines it manages. A virtual machine in this trusted domain can protect the confidentiality of its memory contents and runtime central processing unit (CPU) state from any other software, including the hosting VMM, unless explicitly shared by the trusted domain virtual machine itself. The memory may also be protected from the VMM and other trust domains by a memory controller using encryption, for example. Generally, trust domains do not allow devices that are connected via a serial interconnect interface to access the trust domain protected memory. These connected devices, however, typically need access to protected data to perform their intended functions.

Example use cases of a virtual computing environment where the hypervisor has been removed from a trusted computing base for virtual machines it manages, include cloud service providers that host many tenant virtual machine (VM) workloads. Both the cloud service provider (CSP) and the cloud tenant may desire confidentiality for the VM workload. The tenant VM may not trust the VMM or any of the software in the cloud data center. Thus, running a trust domain VM for which the hypervisor has been removed from the trust boundary, ensures that the VM cannot be attacked by the VMM or malicious users operating or otherwise accessing the data center. To achieve this confidential VM execution, the memory and the runtime CPU state have to be kept confidential and integrity-protected to prevent data exfiltration or tamper attacks. A new CPU security capability can meet these security objectives via the use of a memory controller utilizing memory encryption and integrity protection, such as Intel^{®} Multi-Key Total Memory Encryption (MK-TME).

A trust domain (TD) is a type of virtual machine guest that prevents attacks by running in a central processing unit (CPU) mode. Running in a CPU mode protects the confidentiality of its memory contents and runtime CPU state from any other software, including the hosting VMM, unless explicitly shared by the trust domain itself. The memory and runtime CPU state are isolated so that the memory is opaque and generally unmodifiable. To the extent that any modifications occur, those modifications can be detected.

Devices that are connected to a server platform in a cloud, however, are not trusted to access the memory of a trust domain. For a device connected to the server platform via a serial interconnect interface, such as peripheral component interface express (PCIe), enabling direct assignment of the device to TD memory requires the data flowing between the TD and the device over the PCIe link to be secured to enforce confidentiality, integrity, and replay protection of the data. In particular, to allow direct memory access by a device, a TD needs 1) the ability to establish trust in the device such that the device is recognized as a trusted entity, 2) the ability to secure the connection between the server and the device so that the data that flows on the link is secure, and 3) the ability to enforce rules for producer-consumer ordering of transactions.

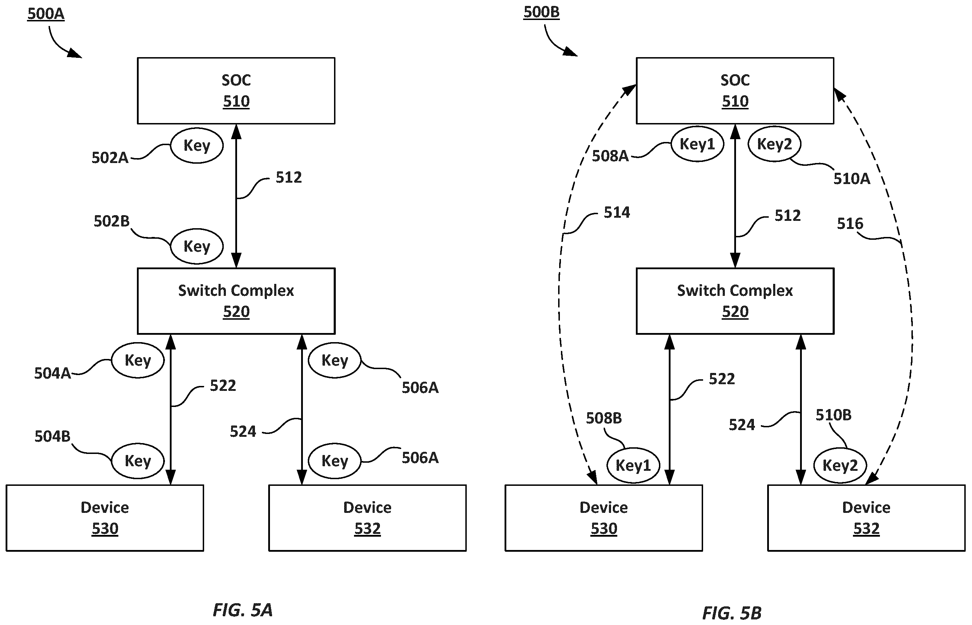

As shown in FIGS. 5A and 5B, encryption of transactions in PCIe can be performed using a hop-by-hop protocol (FIG. 5A) or an end-to-end protocol (FIG. 5B). FIGS. 5A and 5B illustrate the distinction between hop-by-hop and end-to-end encryption in an interconnect architecture that includes example devices 530 and 532 connected to a PCIe switch 520 via links 522 and 524, and the PCIe switch 520 connected to a system on chip (SoC) 510 via a link 512. In FIG. 5A, a hop-by-hop protocol includes a different key pair for each link to enable encryption at every transmitting port and decryption at every receiving port. Keys 501A and 501B are used as the key pair of link 512, keys 503A and 503B are used as the key pair of link 522, and keys 505A and 505B are used as the key pair of link 524. Consequently, data flowing through a hop-by-hop network with one or more intermediate devices, such as PCIe switch 520, gets encrypted and decrypted several times before it reaches its destination.

In an end-to-end protocol shown in FIG. 5B, different key pairs are provisioned for each end-to-end link 507 and 509. Keys are provided only at an initiating device and a target device. For example, keys 506A and 506B are used as the key pair for the end-to-end link 507, and keys 508A and 508B are used as the key pair for the end-to-end link 509. An initiating device encrypts data to be transmitted to a target device, the target device decrypts the data received from the initiating device, and intermediate devices simply route the encrypted transactions. For example, when SoC 510 sends data to device 530, SoC 510 is the initiating device and device 530 is the target device. Conversely, when device 530 sends data to SoC 510, device 530 is the initiating device and SoC 510 is the target device.

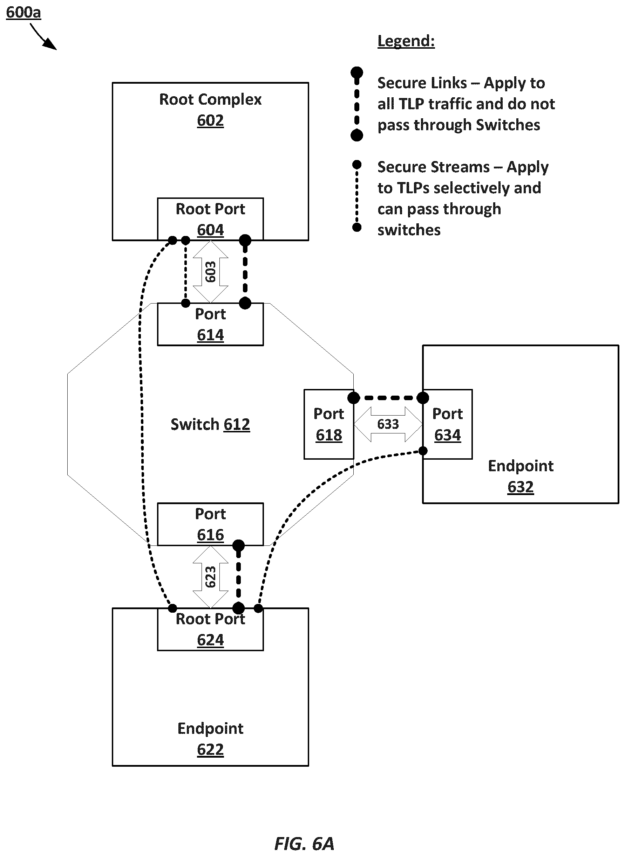

FIG. 6A is a block diagram illustrating an example connected system showing secure stream and secure links in accordance with embodiments of the present disclosure.

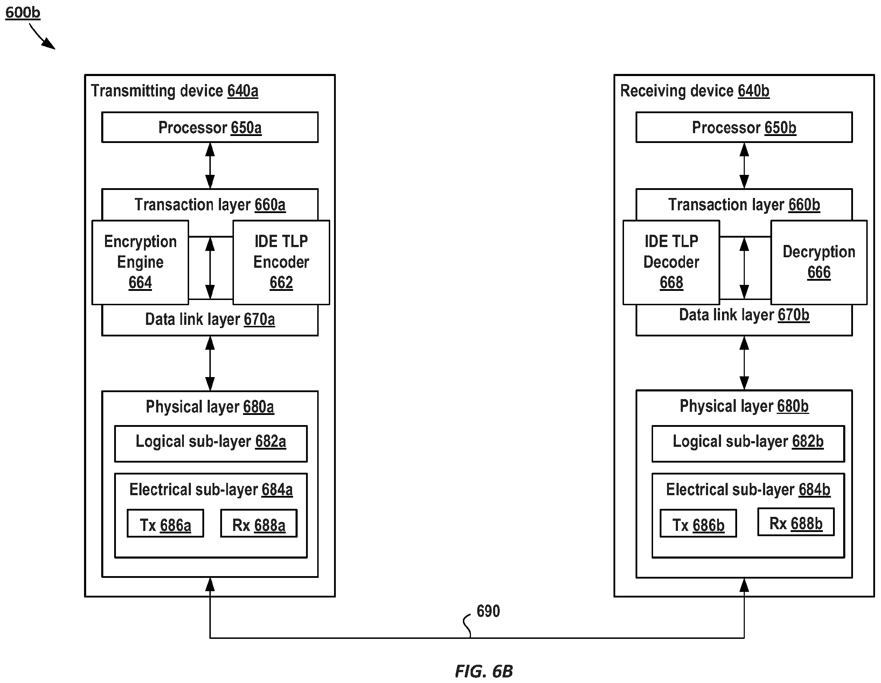

FIG. 6B is a block diagram illustrating a system 600b with sockets for a secure stream protocol according to at least one embodiment. The interconnect architecture includes an initiating device 640a and a target device 640b. As previously described herein, the layered protocol stacks include logic implemented in hardware circuitry and/or software to implement any form of a layered communication stack, such as a Quick Path Interconnect (QPI) stack, a PCIe stack, a next generation high performance computing interconnect stack, or other layered stack. For ease of discussion, FIG. 6B and subsequent figures herein may be primarily described in relation to a PCIe stack, although similar concepts may be applied to other interconnect stacks. In at least one embodiment, initiating device 640a and target device 640b each include a PCIe stack, such as PCIe protocol stack 200 described with reference to FIG. 2. The PCIe stack in initiating device 640a includes a transaction layer 660, a link layer 670a, and a physical layer 680a. The PCIe stack in target device 640b includes a transaction layer 6560b, a link layer 670b, and a physical layer 680b.

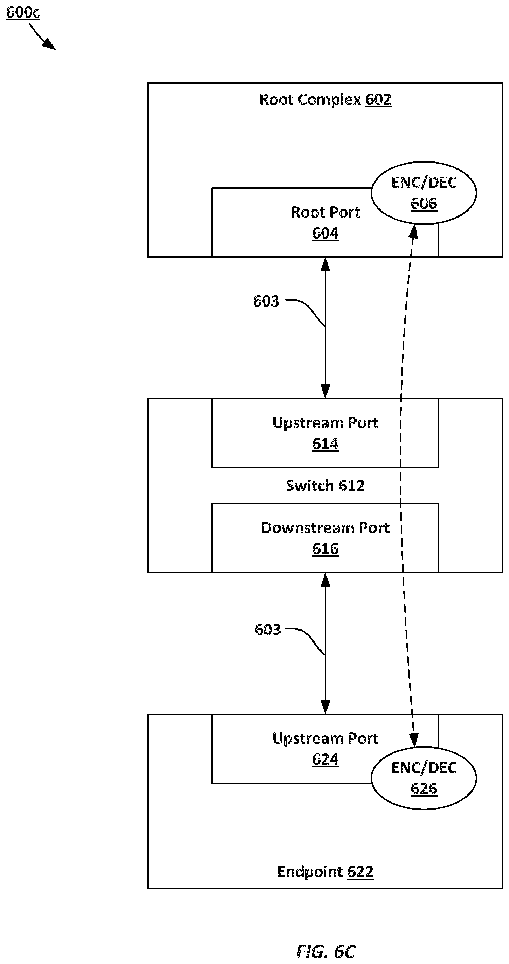

In at least one embodiment, initiating device 640a and target device 640b can secure a transaction layer packet according to a secure stream protocol. A transaction layer packet is also referred to herein as 'packet' and 'TLP'. As illustrated in FIG. 6C, sockets where secure stream processing occurs include a secure stream TLP insertion point (STX) between transaction layer 660a and link layer 670a of initiating device 640a, and a secure stream TLP detection point (SRX) between transaction layer 660b and link layer 670b of target device 640b.

In various embodiments, in the secure stream protocol (also referred to herein as "SEC-STREAM"), each transaction type (i.e., posted, non-posted, and completion) may be treated as a separate protected stream or as secured sub-streams. As used herein, a 'protected stream' or "secure stream' is intended to represent one or more transactions of a particular transaction type (or combination of particular transaction types) that have been confidentiality, integrity, and replay protected based on the particular transaction type (or combination of transaction types). The data payload of a transaction is confidentiality, integrity, and replay protected. The metadata (e.g., TLP secure stream prefixes, TLP Headers) of a transaction is integrity and replay protected. In various embodiments, Advanced Encryption Standard - Galois/Counter Mode (AES-GCM) construction with 96-bit counters and a 96-bit Message Authentication Code (MAC) can be used for cryptographically securing the traffic. It should be noted, however, that this approach can work equally well with similar types of security schemes and is not limited to these specifics. For example, other cryptographic constructs that provide replay protection and integrity protection may be used instead. AES-CTR encryption and GMAC (and aggregated GMAC) can also be used. In other embodiments, larger AES-GCM construction and/or a larger MAC may be used.

Operationally, in at least one embodiment, a packet is formed in transaction layer 660a of initiating device 640a. The packet can include, but is not necessarily limited to, a header with routing information and payload data to be communicated to the target device. At IDE TLP 662 and encryption engine 664, before passing the packet to link layer 670a, data in the packet is encrypted, a TLP secure stream prefix is generated, the prefix is inserted into the packet, an integrity code value (ICV) such as a MAC is generated over the packet (e.g., prefix, header, data), and the ICV is added to the packet. The packet is passed onto the physical layer 680a. The packet is transmitted across the link 690. After the link layer 670b in target device 640b processes the received transaction, at IDE TLP decoder 668 and decryption engine 666, data in the packet is decrypted, the ICV is verified, and the TLP secure stream prefix is stripped from the packet before further processing by the transaction layer 660b. Hardware and/or software to perform secure stream processing at IDE TLP encoder logic 662 and IDE TLP decoder logic 668 may be integrated in their respective transaction layers 660a and 660b or may be implemented separately as sub-layers between transaction layers 640a, 640b and link layers 670a, 670b.

The present disclosure defines two modes of operation for a secure stream protocol to address the issues related to relaxed ordering and read replays that may occur. The modes include a restricted ordering mode (ROM) and explicit counter mode (ECM).

FIG. 6C is a simplified block diagram of a PCIe interconnect architecture 600c including a root complex 602 connected to an endpoint 622 via a PCIe switch 612. Root complex 602 includes a root port 604, where encryption or decryption 606 is performed (depending on whether the root complex is the transmitter or receiver) for a TLP packet in an end-to-end (non-link) secured stream. Endpoint 622 includes an upstream port 624, where encryption or decryption 626 is performed (depending on whether the endpoint is the transmitter or receiver) on a TLP packet in an end-to-end (non-link) secured stream. PCIe switch 612 includes an upstream port 614 connected to root port 602 via link 603, and a downstream port 616 connected to upstream port 624 of endpoint 622 via link 603. In a secured stream, transactions are not encrypted or decrypted at PCIe switch 612. Instead, PCIe switch 612 uses header data in the TLP packet to route the transaction. Root port 604 can perform encryption of the data payload of a packet when the root port 604 is the initiating device and can perform decryption of the data payload of the packet when it is the target device. Similarly, endpoint 622 can perform encryption of the data payload of a packet when the endpoint 622 is the initiating device and can perform decryption of the data payload of the packet when the endpoint 622 is the target device.

In embodiments, an IDE TLP encoder logic can reside at the transaction layer 660a for encoding transaction layer packets with TLP prefixes for IDE and for providing integrity protection. Likewise, an encryption engine can reside in the transaction layer 660 for encrypting the TLP data. The encryption engine and the IDE TLP encoder logic can include hardware circuitry, can in some embodiments, can reside on the same logic.

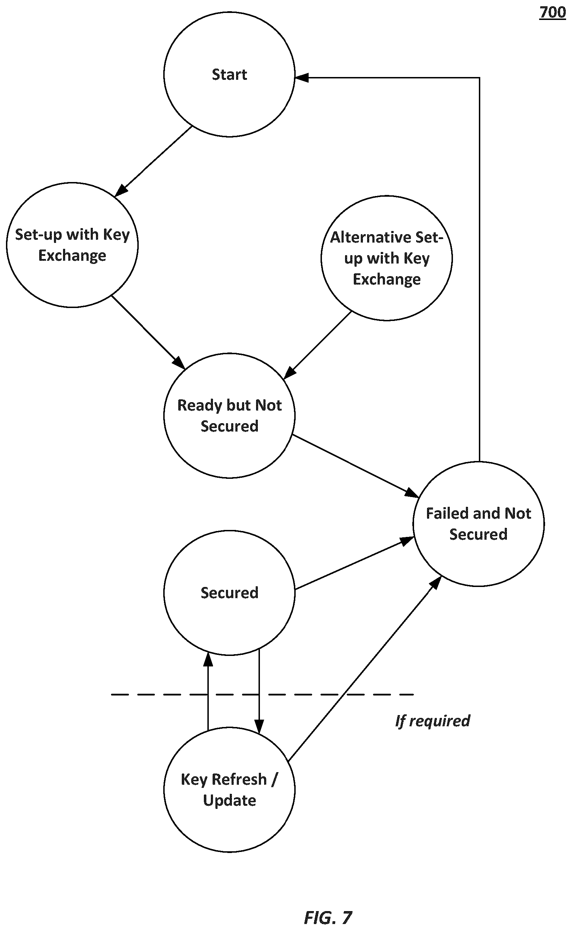

FIG. 7 illustrates secure stream state machine, in accordance with various embodiments. Before using a Secure Stream, operational parameters may be configured if non-default values are to be used, and Key Exchange may complete, at which point the Port is in the Ready_Insecure state. Some or all of this configuration is permitted to be done internally to a Component.

A Port may transition from Ready_Insecure to Secure when a Secure TLP is Transmitted or Received using the newly established Secure Stream. While in Ready_Insecure, Secure, or (if supported) Key_Refresh, if any integrity (MAC) check fails, transition to Fail_Insecure. Detailed requirements for error handling are in a later part of this section.

Secure Stream Association Registers associated with the Stream may be programmed. It is permitted to modify the Secure Stream Association Registers while Secure Streams are in use. Modification of Secure Stream Association Register values may not affect TLP transmission/receptions in progress using unrelated Streams. Hardware behavior is undefined if TLP transmission/reception is in progress using a Stream for which the Secure Stream Association Registers are being modified - It is strongly recommended that software ensure such modifications are not made.

Set, if not already Set, the IDE On bit in the IDE Control Register. Subsequent TLP traffic selected according to the Secure Stream Association Registers may be processed securely. Key refresh, if required, may be managed by system firmware/software, and the specifics of this are outside the scope of this specification.

For a given TLP, if a Secure Link (Secure Stream with ID of 0) is established and one or more Non-Link Secure Streams are also established, then the association of the TLP to a Non-Link Secure Stream takes precedence and all TLPs not associated with any Secure Stream may be associated with the Secure Link. For an established Secure Stream, Table 1 defines which TLP types are permitted and how they are associated with the Secure Stream.

**Table 1 - TLP Types for Secure Streams**

| **TLP Type** | **Description** | **Secure Link** | **Non-Link Secure Stream** |
|---|---|---|---|
| MRd | Memory Read Request | Y | Y- Associated by Address |
| MRdLk | Memory Read Request-Locked | Y | Y- Associated by Address |
| MWr | Memory Write Request | Y | Y- Associated by Address |
| IORd | I/O Read Request | Y | N |
| IOWr | I/O Write Request | Y | N |
| CfgRd0 | Configuration Read Type 0 | Y | N |
| CfgWr0 | Configuration Write Type 0 | Y | N |
| CfgRd 1 | Configuration Read Type 1 | Y | N |
| CfgWr1 | Configuration Write Type 1 | Y | N |
| TCfgRd | Deprecated TLP Type4 // placeholder | Y | Y- Associated by Address |
| TCfgWr | Deprecated TLP Type4 // placeholder | Y | Y- Associated by Address |
| Msg | Message Request | Y | Y if Route by ID and Source ID and Destination ID are associated with Secure Stream |
| MsgD | Message Request with data | Y | Y if Route by ID and Source ID and Destination ID are associated with Secure Stream |
| Cpl | Completion without Data | Y | Y -Associated by Routing ID |
| CpID | Completion with Data. | Y | Y - Associated by Routing ID |
| CplLk | Completion for Locked Memory Read without Data | Y | Y- Associated by Routing ID |
| CpIDLk | Completion for Locked Memory Read - otherwise like CpID. | Y | Y- Associated by Routing ID |
| FetchAdd | Fetch and Add AtomicOp Request | Y | Y- Associated by Address |
| Swap | Unconditional Swap AtomicOp Request | Y | Y- Associated by Address |
| CAS | Compare and Swap AtomicOp Request | Y | Y- Associated by Address |
| LPrfx | Local TLP Prefix | Y | N |
| EPrfx | End-End TLP Prefix | Y | Y - Associated by Address or ID according to the TLP Header |

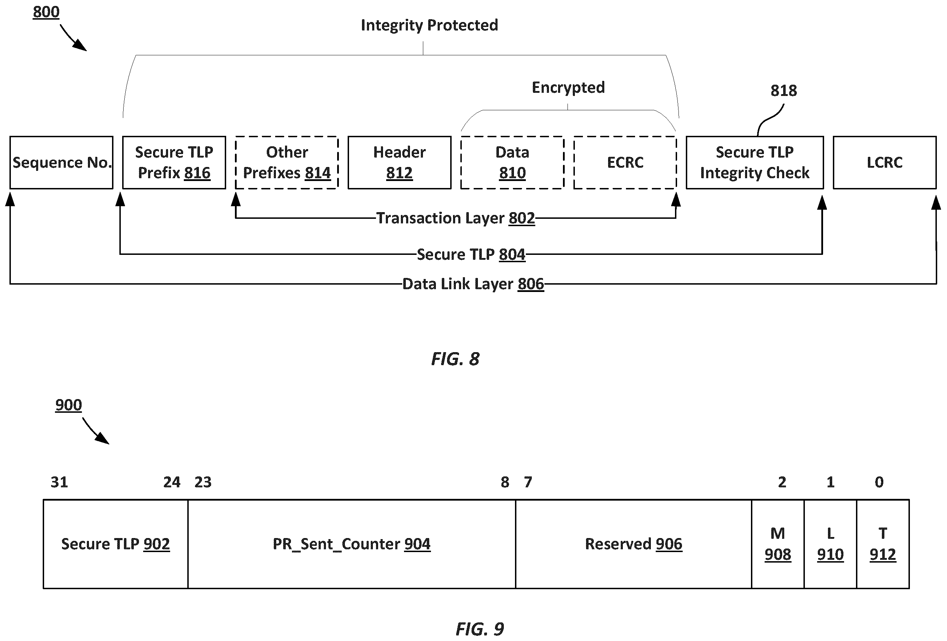

FIG. 8 illustrates Secure TLP Diagram 800, in accordance with various embodiments. Integrity and Data Encryption are enabled and configured per-Stream, and apply to TLPs associated with the Stream. Such TLPs are called Secure TLPs. Encryption, when enabled, applies only to the data payload 810 (if present) and ECRC (if present). TLP integrity, when enabled, covers all TLP content associated with the Stream, and the Message Authentication Code (a.k.a. MAC or Integrity Check) 818, depending on the operational mode selected, is applied per-TLP to all TLPs, or such that select TLPs include a cumulative MAC that covers all TLP content transferred since the preceding TLP to include a MAC. All Secure TLPs must use the Secure TLP prefix 816. As shown, the secure TLP prefix 816 is appended by the transaction layer logic in front of any other prefixes 814 or the packet header 812.

The present disclosure defines a new TLP secure stream prefix for TLPs to indicate whether the TLP is part of a trusted IO session and to convey other secure stream information. FIG. 9 illustrates a Secure TLP Prefix 900, in accordance with various embodiments. The TLP may be part of a trusted IO session if the request is originated by a trusted entity and is to be consumed by another trusted entity. Generally, a trusted entity is part of a trust domain. An initiating device and a target device can each be provisioned with trusted entities as well as non-trusted entities. The presence of secure stream information (e.g. in a prefix of the TLP or otherwise stored in the TLP) indicates that the TLP is secured in a secure stream that provides confidentiality (e.g., encrypted data), integrity protection (e.g., integrity code value for encrypted data, secure stream information, and TLP header), and replay protection (e.g., encryption/decryption counters). It should be noted that the use of the TLP secure stream prefix is for convenience in adding this capability to existing implementations, and in other variations the TLP headers could be modified, or an additional "security layer" could potentially be added to carry secure stream information in a transaction. In one alternative embodiment, some or all of the secure stream information carried in the secure stream prefix could be embedded in the payload of the packet. While the prefix approach is described in detail below, it should be understood that any manner of conveying the needed secure stream information can provide an equivalent result, although possibly with different implementation and/or bandwidth overhead tradeoffs. Thus, the encrypted payload is transparent to intermediate switches. Intermediate switches can use metadata for buffer management and routing, but any tampering or replay can be detected. Table 2 provides an example embodiment of a Secure TLP prefix.

**Table 2. TLP Prefix.**

| End-End TLP Prefix Type | E[3:0] | Description |
|---|---|---|
| ... | | |
| Secure TLP | 0010 | Identifies a TLP associated with a Secure Stream as defined for Integrity and Data Encryption (IDE) |
| ... | | |

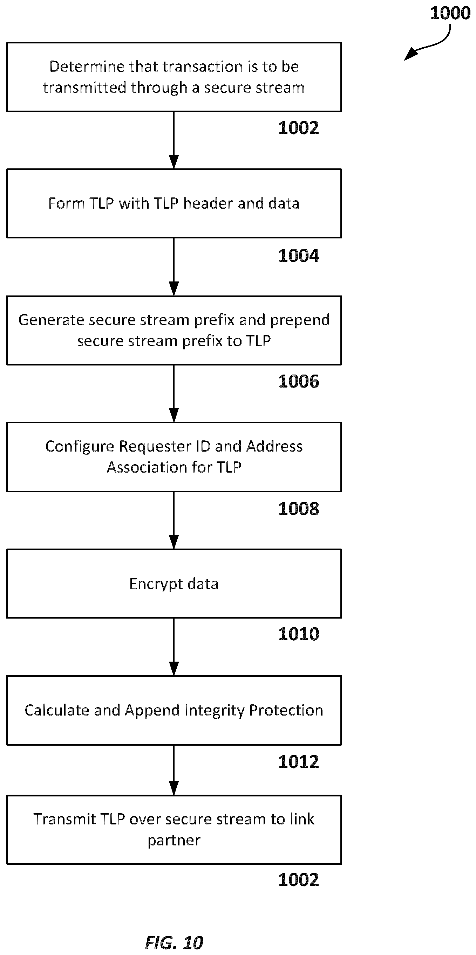

FIG. 10 is a process flow diagram for forming a secure transaction layer packet for transmission across a secure stream in accordance with embodiments of the present disclosure. The initialization of a Secure Stream involves multiple steps, although some of these steps can be merged or performed in a different order as that described herein. An example first step is to establish the authenticity and identity of the components containing the two Ports which are to be the terminals of the Secure Stream. A second step is to "provision" the keys - this may done as part of the same exchange used to establish the authenticity and identity of the components, or by any other mechanism. Third, the Secure Connection must be configured. Finally the establishment of the Secure Connection is triggered.

At the outset, the transmitting device can determine that packets are to be transmitted to a receiving device using a Secure Stream (1002). This determination can be made by first observing capabilities of the two devices for supporting IDE in packet transmissions. User settings, priority settings, type of data, type of connected device, or other reasons can shape the determination for transmitting data across a Secure Stream.

For implementations using CMA and DOE techniques for key-based authentication:

The association between the Ports to be connected via the Secure Stream to be established is precisely defined. For a Secure Link (as opposed to a non-link Secure Stream), the two Ports must have no Switches between them, and for the Upstream Port, Function 0 must be used for the purposes of establishing the authenticity and identify of the associated Component, key exchange, and the configuration and management of the Secure Link.

For a non-Link Secure Streams the means of establishing the authenticity and identify of the associated Component, key exchange, and the configuration and management of the Secure Stream, are not defined here. Keys are exchanged via defined CMA/DOE mechanisms in a cryptographically secure manner, for CMA/DOE implementations. For other implementations, key exchanges are also performed in a secure manner according to the authentication mechanisms selected.

The TLP can be formed using the payload data (if any) and any headers needed for transmitting and routing the TLP across a link (1004). The TLP prefix can be generated and prepended to the TLP, as described herein (1006).

To form a Secure TLP, the TLP is associated with a Secure Stream (either a non-link Secure Stream or a Secure Link) (1008). This association can be done by selecting a Requester ID and/or configuring Address Association for the TLP with the Secure Stream. Other associative techniques are described in more detail below.

The data payload can be encrypted (1010). If data encryption is to be performed, said data can be encrypted using, e.g., AES-CTR encryption. Integrity protection can also be applied to the TLP (1012). For example, GMAC can be used for integrity protection. More details are described herein. Once the Secured TLP is formed and the Secure Stream is established, the Secured TLP can be transmitted.

Secure TLPs are protected by Data Link Layer mechanisms, such that physical Link errors are detected and corrected before received TLPs are presented to the receiver's cryptographic processing mechanisms. All Transaction Layer content is integrity protected when integrity is enabled, and all TLP Data Payloads (and ECRC, if present) are encrypted when encryption is enabled.

IDE can use AES-CTR encryption as defined in, for example, NIST Special Publication 800-38A, and GMAC integrity protection as defined in, for example, NIST Special Publication 800-38D, with these additional rules:
a) Key size can be 256 bits.
b) The generation and provisioning of keys is done outside of IDE and the resulting keys can be provided to the IDE hardware via implementation-specific techniques.
b.1) Following this process, one Port is identified as PortX and the other as PortY - For non-peer-to-peer traffic the Downstream Port must be PortX and the Upstream Port must be PortY; For peer-to-peer traffic the selection must be made by means not defined here.
c) Keys can be associated with a Key ID.
c.1) Each Key ID can be provisioned with a unique Key.
c.2) The number of Key IDs supported is implementation-specific.
c.3) Between two Ports communicating using a Secure Stream, each Port must associate the same key with that Secure Stream, but it is not required that the same Key ID be used in both Ports for that key.
c.4) Following key exchange, implementation-specific means must be used to provide the keys to the data path in a secure manner
c.5) The specific requirements for maintaining key security are platform and use case specific, and are not defined here.
d) Different keys are used for AES-CTR encryption and GMAC integrity.
d.1) Separate Key ID association mechanisms are provided for this purpose.
e) GMAC must be operated independently of AES-CTR, using the post-encryption TLP, and must treat all input as Additional Authenticated Data

The following provides a set of Secure Stream guidelines that provide additional details for forming a Secure TLP:
a) All Secure TLPs must be associated with a Secure Stream, identified via a Secure Stream Number.
a.1) A Secure Link must use a Secure Stream Number of zero, and no other Secure Stream is permitted to use this Secure Stream Number.
b) When only a Secure Link is enabled, all TLPs associated with that secure stream must be secured using a Secure Link, and must use the key and counter set established for the Secure Link.
c) When only a non-Link Stream Stream is enabled, selected TLPs must be secured using Secure Streams based on the RID and Address Association register settings, and must use the corresponding key and counter set based on the Key ID.
d) When both Secure Link and one or more non-Link Stream Stream(s) are enabled, selected TLPs must be associated with the Secure Stream(s) based on the RID and Address association register settings and using the corresponding key and counter set based on the Key ID, and all other TLPs must be using a Secure Link, and must use the key and counter set established for the Secure Link. In some embodiments, the Stream Number can be placed in the prefix.
e) All Secure TLPs not associated with a Secure Link must be associated with a Secure Stream based on information included in the TLP Header.
e.1) For Requests, the association of a TLP with a specific Secure Stream is permitted to be made using the Address and/or the Requester ID.
e.2) For Completions, the association of a TLP with a specific Secure Stream is permitted to be made using the Completer ID and/or the Requester ID.
e.3) A Port supporting Secure Streams must provide a mechanism for distinguishing TLPs associated with Secure Stream(s).
f) Each Port associated with a specific Secure Stream must have a mechanism by which it knows the RID of the other Port associated with that Secure Stream.
g) Separate VCs must use separate Secure Streams.
h) Each Secure Stream includes Sub-Streams:
h.1) 0000b - Posted Requests Transmitted by PortX and (ultimately) Received by PortY;
h.2) 0001b - Non-Posted Requests Transmitted by PortX and (ultimately) Received by PortY;
h.3) 0010b - Completions Transmitted by PortX and (ultimately) Received by PortY;
h.4) 0011b - Posted Requests Transmitted by PortY and (ultimately) Received by PortX;
h.5) 0100b - Non-Posted Requests Transmitted by PortY and (ultimately) Received by PortX;
h.6) 0101b - Completions Transmitted by PortY and (ultimately) Received by PortX;
h.7) Values 0110b-0111b are Reserved;
h.8) Values 1000b-11111 are permitted to be used for other uses not defined by this specification.
i) For each Sub-Stream, there must be two counter blocks, one for AES-CTR and one for GMAC, that must each consist of these fields:
i.1) bits 127:124 contain a fixed value indicating the Sub-Stream (encoded as defined above);
i.2) bits 123:96 are Reserved;
i.3) bits 95:32 contain the value of an LFSR with taps at positions 64, 63, 61 and 60 set and advanced every time a counter block is consumed;
i.4) bits 31:0 must be 0000_0001h.
j) A Secure TLP must have a Secure TLP Prefix that must be prepended ahead of all other Prefixes on the TLP.
j.1) On a Secure Link, Local TLP Prefixes must be included in the TLP's integrity check
j.2) Local TLP Prefixes are not permitted for Non-Link Secure Stream TLPs
k) The Secure TLP Prefix includes:
k.1) L bit - When Set, indicates this is the last TLP in this Sub-Stream using the current key set;
k.1.1) The mechanisms for establishing a new key set and managing key set transitions are not defined in this document;
k.1.2) After Transmitting a TLP with the L bit Set, the Transmitter must wait for at least [500ns?] before transmitting another TLP associated with this Sub-Stream; all subsequent TLPs must use the new key set;
k.1.3) After Receiving a TLP with the L bit Set, the Receiver must transition to the new key set for all subsequent TLPs associated with the Sub-Stream.
k.2) T bit - When Set, indicates the TLP originated from within a trusted execution environment:
k.2.1) It is permitted for Secure TLPs to originate from both trusted and non-trusted execution environments; the rules for trusted execution environments are [not defined in this document]
l) M bit - When Set, indicates the TLP includes a MAC.
m) PR_Sent_Counter - For Non-Posted Requests and Completions the value must be determined according to the following rules. The PR_Sent_Counter is set as Reserved for Posted Requests.

The following rules apply for each Secure Stream:

For the Transmitter, two 16 bit counters are be maintained: PR_Sent_Counter-NPR and PR_Sent_Counter-CPL.

Both counters are be incremented for each Posted Request Secure TLP Transmitted associated with the Secure Stream.

The PR_Sent_Counter-NPR value is included in the PR_Sent_Counter field of the Secure TLP Prefix for each Non-Posted Secure TLP Transmitted associated with the Secure Stream, and then PR_Sent_Counter-NPR must be reset to 0.

When PR_Sent_Counter-NPR exceeds 2^15, an Integrity Sync Message may be transmitted, and then both the PR_Sent_Counter-NPR and PR_Sent_Counter-CPL may be reset to 0. In embodiments, the Integrity Sync Message is permitted to be sent at other times for other reasons.

The PR_Sent_Counter-CPL value must be included in the PR_Sent_Counter field of the Secure TLP Prefix for each Completion Secure TLP Transmitted associated with the Secure Stream, and then PR_Sent_Counter-CPL must be reset to 0.

When PR_Received_Counter-CPL exceeds 2^15, an Integrity Sync Message may be transmitted, and then both the PR_Sent_Counter-NPR and PR_Sent_Counter-CPL must be reset to 0.

For the Receiver, two 16 bit counters must be maintained: PR_Received_Counter-NPR and PR_Received_Counter-CPL -

Both counters are incremented for each Posted Request Secure TLP Received associated with the Secure Stream.

When a Non-Posted Request is received then the PR_Sent_Counter value carried in the Secure TLP prefix may be subtracted from the PR_Received_Counter-NPR, and the PR_Received_Counter-NPR updated with the result.

When a Completion is received then the PR_Sent_Counter value carried in the Secure TLP prefix may be subtracted from the PR_Received_Counter-CPL, and the PR_Received_Counter-CPL updated with the result.

When an Integrity Sync Message is received then:
The PR_Sent_Counter-NPR value carried in the Secure Stream Sync Message must be subtracted from the PR_Received_Counter-NPR, and the PR_Received_Counter-NPR updated with the result.

The PR_Sent_Counter-CPL value carried in the Secure Stream Sync Message must be subtracted from the PR_Received_Counter-CPL, and the PR_Received_Counter-CPL updated with the result.

If either/both the PR_Received_Counter-NPR or PR_Received_Counter-CPL underflows when subtracting the PR_Sent_Counter from a Received TLP, or from an Integrity Sync Message, this indicates an illegal TLP reordering has occurred. This is a reported error associated with the Receiving Port.

When Per-TLP GMAC is enabled, Integrity must be applied to every TLP associated with the Secure Stream

The GMAC must be calculated including all content of the TLP, following Data Encryption if that is enabled, excluding the MAC value itself

When Aggregated GMAC is enabled, Integrity must be applied to TLPs associated with the Secure Stream whenever triggered by a write to the Trigger Integrity Check bit associated with the Secure Stream, and whenever selected by the Transmitter via implementation-specific mechanisms.

For the first TLP to include a MAC, the GMAC value must be calculated including all TLP content, following Data Encryption if that is enabled, for all TLPs associated with the secure stream transmitted since the secure stream was established, excluding the MAC value itself

For subsequent TLPs to include a MAC, the GMAC must be calculated including all TLP content, following Data Encryption if that is enabled, for all TLPs associated with the secure stream transmitted since the last TLP including a MAC was transmitted, including the TLP currently being transmitted with a MAC, but excluding the MAC value itself

When the Integrity Mode field is programmed to a supported value, Integrity checking must be performed at the Receiver for all TLPs that include a MAC. Notably, the integrity check can come after the LCRC is configured and confirmed.

The following are defined errors associated with a Secure Stream:
MAC check failure - Receiver's check of the MAC of a received TLP fails
PR-Received-Counter-NPR/PR_Received_Counter-CPL underflow - Indicates an improper reordering has been detected
PR-Received-Counter-NPR/PR_Received_Counter-CPL overflow - Indicates a failure to receive the required NPR

If one or both of these conditions are detected, the Secure Stream State Machine for this Secure Stream must enter Fail_Insecure.

Receiving a Completion with UR or UC status is not a security error and must not by itself trigger a transition to Fail_Insecure.

In Fail_Insecure the key set for the associated Secure Stream must be marked as invalid.

Receiver handling of TLPs that fail the integrity check is implementation-specific; it is strongly recommended that such TLPs be prevented from causing irrecoverable data corruption.

To exit Fail_Insecure, the associated Secure Stream must be re-established using a new key set
In the Fail_Insecure state, private data associated with the affected Secure Stream must, in implementation-specific ways, be protected
At an Upstream Port, upon entry to Fail_Insecure, an Integrity Check Fail Msg indicating the Key ID of the associated Link/Stream (that in turn identifies the associated Secure Stream) must be Transmitted
A Downstream Port upon receiving an Integrity Check Fail Msg must immediately enter Fail_Insecure for the associated Secure Stream
On any Link Down, all Secure Streams must transition to Fail_Inscure

Additional rules specific to a Secure Link:
On entry into Fail_Insecure handling determined per Port by the configured Containment Behavior in the IDE Control Register:
000b - Force Link to Down.
001b - Memory and IO Requests in both directions terminated as UR; Received Completions for Mem/IO must be dropped; Cfg and Msg Requests/Completions continue to operate in both directions.
010b - For Upstream Ports, same as 000b; For Downstream Ports, as with 000b but in addition Cfg Requests through normal path terminated as UR and received Completions dropped; but Configuration traffic continues to operate through the System Firmware Intermediary (SFI) mechanism, if available.
011b - All requests in both directions are terminated as UR and all Received Completions are dropped.

In Fail_Insecure, for a Downstream Port, Configuration Traffic targeting structures in the Port's Config space defined in this specification must continue to be accepted and completed as they would otherwise have been; Configuration traffic targeting structures not defined in this specification (e.g. VSECs) are permitted to be completed as UR.

To exit Fail_Insecure, either a Fundamental Reset must be used (triggered by platform-specific means), or system firmware/software must Clear Secure Link On at the Downstream Port, wait for 100us, then-
Optionally, access the Upstream Port Configuration Registers to perform error logging, then-
Use Secondary Bus Reset to issue a Hot Reset to the Downstream Component, then-
Re-enumerate/configure the Link and Component.

Security and Power Management must be coordinated to maintain secure environment. Referring to Table 3, Ports maintain secure state while in non-underlined states, and Ports purge secure state while in (underlined) states.

**Table 3. Secure Connection State in Relation to D and L State**

| Downstream Component D-State | Permissible Upstream Component D-State | Permissible Interconnect State |
|---|---|---|
| D0 | D0 | L0, L0s, L1, L2/L3 Ready |
| D1 | D0-D1 | L1, L2/L3 Ready |
| D2 | D0-D2 | L1, L2/L3 Ready |
| D3(hot) | D0-D3(hot) | L1, L2/L3 Ready |
| D3(cold) | D0-D3(cold) | L2, L3 |

System firmware/software, must be aware of PM transitions that will lose security state and take appropriate actions as required to maintain Secure operations - how this is done is outside the scope of this document.

In all cases, hardware must protect against leakage of private data and integrity violations - how this is done is implementation-specific.

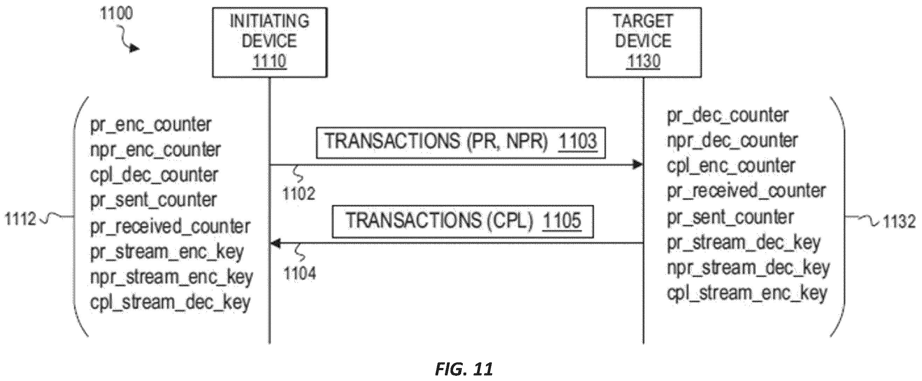

FIG. 11 is an interaction diagram 1100 that illustrates the various possible counters and keys that can be used a secure stream protocol operating in a restricted ordering mode (ROM) using three secure streams according to at least one embodiment. Interaction diagram 1100 shows an initiating device 1110 and a target device 1130. Two connections 1102 and 1104 are established between initiating device 1110 and target device 1130. Connections 1102 and 1104 can include one or more intermediate devices (e.g., switches, bridges), which are not shown for ease of illustration. Initiating device 1110 can send a transaction 1103 (e.g., posted or non-posted) to target device 1130 via connection 1102. In some scenarios, a transaction 1105 may be sent to initiating device 1110 from target device (e.g., completions) via connection 1104. Completion requests are sent in response to transactions that require a response, such as non-posted (NPR) transactions. For example, NPR transactions can include read requests or write requests that require a response.

The counters and keys shown in FIG. 11 may be used in an implementation of a secure stream protocol where each transaction type is treated as a separate protected stream with separate counters and keys. Three streams correspond respectively to posted transactions, non-posted transactions, and completion transactions. One or more embodiments may implement a counter-based scheme for encryption. Example counters and keys that may be used by initiating device 1110 are shown at 1112. Example counters and keys that may be used by target device 1130 are shown at 1132. For each direction of transaction flows, the initiating device and the target device of that direction maintain the following counters, which may be initialized during setup of the secure stream protocol:
COUNTERS FOR POSTED REQUESTS (pr_enc_counter, pr_dec_counter) - These counters can be 64 bit counters with a 32 bit random prefix. This counter pair can be used for authenticated encryption and decryption of posted requests.

COUNTERS FOR NON-POSTED REQUESTS (npr_enc_counter, npr_dec_counter) - These counters can be 64 bit counters with a 32 bit random prefix. This counter pair can be used for authenticated encryption and decryption of non-posted requests.

COUNTERS FOR COMPLETION REQUESTS (cpl_enc_counter, cpl_dec_counter) - These counters can be 64 bit counters with a 32 bit random prefix. This counter pair can be used for authenticated encryption and decryption of completion requests.

COUNTER FOR POSTED REQUESTS SENT (pr_sent_counter) - This counter can be a 16 bit counter. This counter can be used to detect dropped/delayed posted requests. This counter contains a value representing the number of posted requests sent since the last non-posted or completion request was sent. This counter also acts as a check to enforce producer-consumer ordering such that non-posted requests and completion requests are not reordered ahead of posted requests.

COUNTER FOR POSTED REQUESTS RECEIVED (pr_received_counter) - This counter can be a 32 bit counter. This counter can be used to detect dropped/delayed posted requests. This counter contains a value representing the number of posted requests received since the last non-posted or completion request was received. This counter also acts as a check to enforce producer-consumer ordering such that non-posted requests and completion requests are not reordered ahead of posted requests.

In addition to encryption and decryption counters, encryption and decryption keys for the secure stream protocol may be maintained at both the initiating device and the target device. The encryption and decryption keys may be initialized per session and a different pair of encryption keys may be initialized per transaction type. For example, for posted transactions (e.g., 1103) sent from initiating device 1110 to target device 1130, initiating device 1110 can maintain PR encryption key identified as pr_stream_enc_key for encrypting PR data to be sent to target device 1130, and target device 1130 can maintain a corresponding PR decryption key identified as pr_stream_dec_key for decrypting PR data received by initiating device 1110. The encryption and decryption can be performed in conjunction with the PR encryption and decryption counters, respectively. In addition, the PR encryption key and PR encryption counter can also be used by the initiating device to generate an integrity code value (ICV) over the TLP (e.g., TLP secure stream prefix, TLP header(s), encrypted data). The target device that receives the posted transaction can use the corresponding PR decryption key and PR decryption counter to verify the ICV of the received posted transaction.

For non-posted transactions (e.g., 1103) sent from initiating device 1110 to target device 1130, initiating device 1110 can maintain NPR encryption key identified as npr_stream_enc_key for encrypting NPR data to be sent, and target device 1130 can maintain a corresponding NPR decryption key identified as npr_stream_dec_key for decrypting received NPR data. The encryption and decryption can be performed in conjunction with the NPR encryption and decryption counters, respectively. In addition, the NPR encryption key and NPR encryption counter can also be used by the initiating device to generate an integrity code value (ICV) over the TLP (e.g., TLP secure stream prefix, TLP header(s), encrypted data). The target device that receives the non-posted transaction can use the corresponding NPR decryption key and NPR decryption counter to verify the ICV of the received non-posted transaction.

For completion transactions sent from target device 1130 to initiating device 1110, target device 1130 can maintain a CPL encryption key identified as cpl_stream_enc_key for encrypting CPL data to be sent, and initiating device 1110 can maintain a corresponding CPL decryption key identified as cpl_stream_dec_key for decrypting received CPL data. The encryption and decryption can be performed in conjunction with the CPL encryption and decryption counters, respectively. In addition, the CPL encryption key and CPL encryption counter can also be used by the target device to generate an integrity code value (ICV) over the TLP (e.g., TLP secure stream prefix, TLP header(s), encrypted data). The initiating device that receives the completion transaction can use the corresponding CPL decryption key and CPL decryption counter to verify the ICV of the received completion transaction.

In at least one embodiment, symmetric encryption can be used. In this embodiment, for each pair of keys used for a type of transaction, the same key is used for both encryption and decryption. For example, pr_stream_enc_key is equivalent to pr_stream_dec_key, npr_stream_enc_key is equivalent to npr_stream_dec_key, and cpl_stream_enc_key is equivalent to cpl_stream_dec_key.

In one example, Advanced Encryption Standard-Galois Counter Mode (AES-GCM) of operation may be used to provide counter mode encryption of data and a message authentication code for the data. Counter mode encryption uses symmetric key cryptographic block ciphers. Generally, a block cipher is an encryption algorithm that uses a symmetric key to encrypt a block of data in a way that provides confidentiality or authenticity. A counter mode of operation turns a block cipher into a stream cipher. An input block, which is an initialization vector (IV) concatenated with a counter value, is encrypted with a key by a block cipher. The output of the block cipher is used to encrypt (e.g., by an XOR function) a block of plaintext to produce a ciphertext. Successive values of the IV and counter value are used to encrypt successive blocks of plaintext to produce additional blocks of ciphertext.

In addition to producing ciphertext from input data, the GCM operation also calculates a Galois message authentication code (GMAC). A GMAC, which is more generally referred to as a 'tag' or 'authentication tag', is a few bytes of information used to authenticate a message (or transaction). A GMAC is one example of an ICV that can be generated over the TLP packet (e.g., TLP secure stream prefix, TLP header(s), encrypted data). In at least one embodiment, a multiplier function is used to calculate a GMAC based on the ciphertext blocks produced from the encryption of the plaintext blocks. The GMAC can be appended to the ciphertext. While AES-GCM is one possible type of encryption and authentication technique that may be used in one or more embodiments, it should be apparent to those in the art that any other suitable type of encryption and authentication may also be used (e.g., SHA-3, Hash message authentication code (HMAC), AES-CTR, etc.).

Although the embodiment described above offers one possible approach in which the same encryption/decryption keys and counters are used to encrypt and decrypt data in a TLP and to verify the integrity of the TLP, it should be noted that any other suitable encryption/decryption and integrity verification schemes may be implemented to secure a transaction in a secure stream. In another embodiment for example, a different key may be used for encryption and ICV generation for each packet type. That is, encryption of a posted request payload may be done with a first posted key, and ICV generation over the posted request payload, header, and prefix may be done using a second posted key, which is different than the first posted key. Encryption of a non-posted request payload may be done with a first non-posted key, and ICV generation over the non-posted request payload, header, and prefix may be done using a second non-posted key, which is different than the first non-posted key. Encryption of a completion request payload may be done with a first completion key, and ICV generation over the completion request payload, header, and prefix may be done using a second completion key, which is different than the first completion key. It should be noted that an ICV can be generated over a TLP secure stream prefix, a TLP header (or headers if more than one is used), and encrypted payload data. However, in some embodiments, other fields of the TLP may also be included in the ICV (e.g., ECRC).

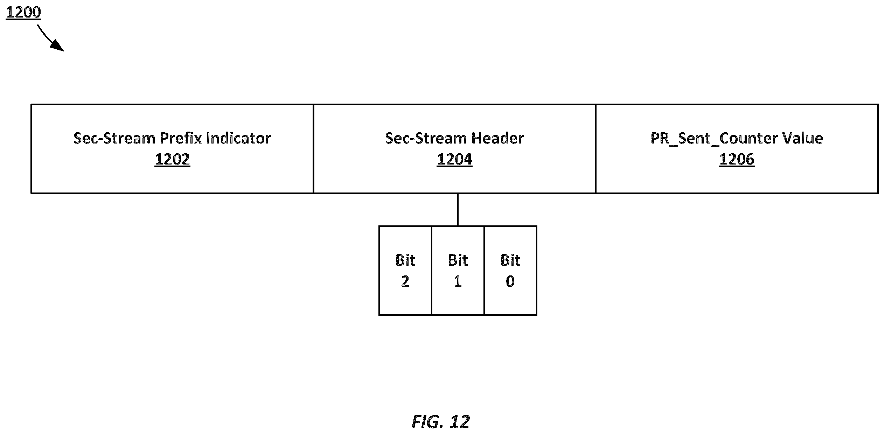

FIG. 12 illustrates a possible format of a TLP secure stream prefix 1200 that may be carried by each transaction in a system implementing a secure stream protocol operating in restricted ordering mode using either two secured streams or three secured streams according to at least one embodiment. The format includes a sec-stream prefix indicator 1202, a sec-stream prefix header 1204, and a pr_sent_counter value 1206. The pr_sent_counter value 1206 represents the number of posted transactions that have been sent from an initiating device to the target device since the last non-posted or completion transaction was sent from an initiating device to a target device. The sec-stream prefix indicator 1202 indicates a type of the TLP secure stream prefix 1200. For example, prefix indicator 1202 can indicate that TLP secure stream prefix 1200 contains information related to the secure stream protocol.

In at least one embodiment, three bits are defined in sec-stream header 1204. A first bit (e.g., BIT 0) may be a trusted bit that is an indication of whether the transaction is part of a trusted IO session. A trusted bit is used to differentiate software entities or functions at the two ends of a secure stream. The secure stream may be shared by trusted and non-trusted functions/software. Accordingly, the trusted bit indicates whether the transaction was originated by a trusted entity at one end (e.g., initiating device) and is to be consumed by a trusted entity on the other end (e.g., target device). For example, a device connected to a server platform and needing direct access to memory in a trust domain of the server platform may be a trusted entity. A memory storage controller is one possible example of a trusted entity.

A second bit (e.g., BIT 1) is an indication of whether pr_sent_counter value 1206 is included in TLP secure stream prefix 1200. In at least one embodiment, pr_sent_counter value 1206 is included in the TLP secure stream prefix for non-posted transactions and completion transactions and the second bit can be set to 1 to indicate the presence of the counter in the TLP secure stream prefix.

A third bit (e.g., BIT 2) may be used as an indication of whether the secure stream protocol is in a restricted ordering mode (ROM) or an explicit counter mode (ECM). In one example, if the third bit is set to 0, then the secure stream protocol is operating in the restricted ordering mode, and if the third bit is set to 1, then the secure stream protocol is operating in the explicit counter mode. When the mode is ECM, the counter used for encryption of data in a TLP and integrity verification of the TLP (e.g., pr_enc_counter, npr_enc_counter, cpl_enc_counter) may be carried as the first N bytes of the payload of the packet according to at least one embodiment.

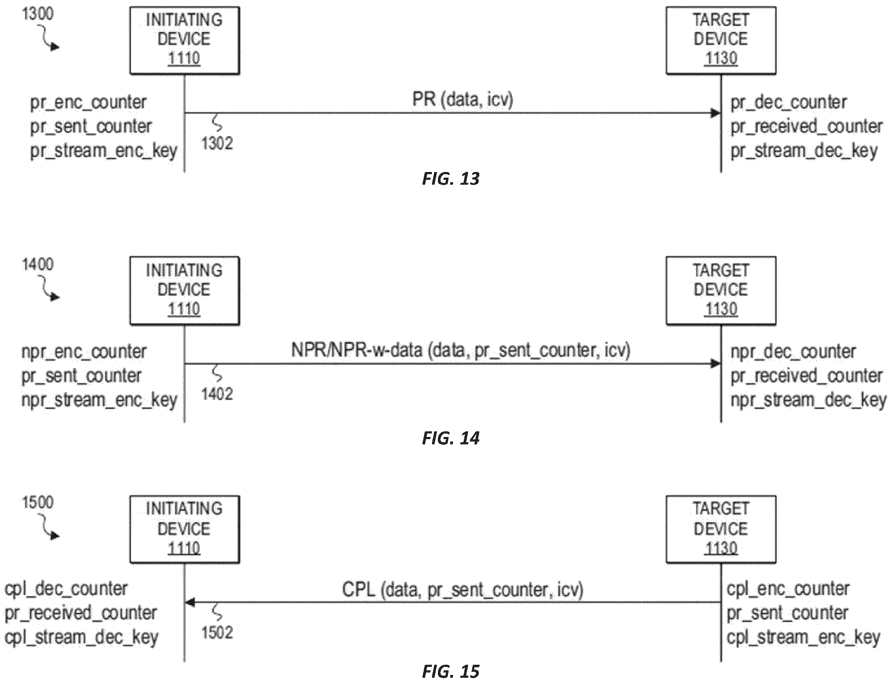

Turning to FIGS. 13-15, interaction diagrams illustrate the possible transactions that may occur in an interconnect architecture implementing a secure stream protocol operating in a restricted ordering mode (ROM) according to one or more embodiments. Transactions, counters, and keys illustrated in FIGS. 13-15 are based on a secure three-stream protocol implementation. The three streams correspond respectively to posted transactions, non-posted transactions, and completion transactions.

FIG. 13 is an interaction diagram 1300 illustrating a secure three-stream protocol for a posted request 1302 sent from initiating device 1110 to target device 1130. Initiating device 1110 samples its PR encryption counter (e.g., pr_enc_counter) and increments the sampled value. Initiating device 1110 also increments the value of its PR sent counter (e.g., pr_sent_counter). Sampling a counter can include obtaining the value of the counter and possibly storing it for quick access. Initiating device 1110 encrypts data of a transaction layer packet (TLP) used to form the posted request 1302. Encryption may be performed using the incremented value of the PR encryption counter and a PR encryption key (e.g., pr_stream_enc_key). An integrity code value (ICV), such as a MAC, is also computed over the TLP including the encrypted data, a TLP header, and a TLP secure stream prefix. Initiating device 1110 sends the posted request secured by the encrypted data and the ICV to target device 1130.

Target device 1130 samples the value of its PR decryption counter (e.g., pr_dec_counter) and increments the sampled value. Target device 1130 also increments the value of its PR received counter (e.g., pr_received_counter). Target device 1130 decrypts the data in the TLP of the received posted request using the incremented value of the PR decryption counter and a PR decryption key (e.g., pr_stream_dec_key). In at least one embodiment, the encryption key and decryption key for posted requests are the same. Target device 1130 verifies the integrity of the TLP by verifying the ICV received for the TLP. In at least one embodiment, the ICV is a MAC, such as a GMAC, which is verified using the PR decryption counter and PR decryption key. In another embodiment, a different key and counter (e.g., pr_mac_key, pr_mac_counter) may be used to generate the ICV. If the ICV verification fails, then an error is raised (e.g., error message is logged, response to send to initiating device is generated, keys are reinitialized, etc.) Otherwise, the target device consumes the packet.

FIG. 14 is an interaction diagram 1400 illustrating a secure stream protocol operation for a non-posted request 1402 (with or without data) sent from initiating device 1110 to target device 1130. Initiating device 1110 samples the value of its NPR encryption counter (e.g., npr_enc_counter) and increments the sampled value. Initiating device 1110 also samples the value of its PR sent counter (e.g., pr_sent_counter) and then zeroes the value in the PR sent counter. Initiating device 1110 encrypts data of a TLP used to form non-posted request 1402. Encryption may be performed using the incremented value of the NPR encryption counter and an NPR encryption key (e.g., npr_stream_enc_key). An integrity code value (ICV), such as a MAC, is also computed over the TLP including the encrypted data, a TLP header, and a TLP secure stream prefix. Initiating device 1110 sends the non-posted request secured by the encrypted data and the ICV to target device 1130. In addition, the TLP also carries the sampled value of the PR sent counter to indicate how many posted requests have been sent by initiating device 1110 since the last non-posted or completion transaction.

Target device 1130 samples the value of its NPR decryption counter (e.g., npr_dec_counter) and increments the sampled value. Target device 1130 decrypts the data in the TLP of the received non-posted request using the incremented value of the NPR decryption counter and an NPR decryption key (e.g., npr_stream_dec_key). In at least one embodiment, the encryption key and decryption key for non-posted requests are the same. Target device 1130 verifies the integrity of the TLP by verifying the ICV received for the TLP. In at least one embodiment, the ICV is a MAC, which is verified using the incremented value of the NPR decryption counter and the NPR decryption key. If the ICV verification fails, then an error is raised (e.g., log an error message, generate a response to send to the target device, reinitialize keys, etc.). Otherwise, the value of a PR received counter (e.g., pr_received_counter) maintained by target device 1130 is decremented by the value of the PR sent counter in the TLP received from initiating device 1110. If the resulting value of the PR received counter is less than zero, this indicates that one or more posted requests have been dropped and/or delayed. Consequently, an error is raised (e.g., error message is logged, response is generated to notify initiating device, session is terminated, etc.). Otherwise the target device consumes the packet. In some embodiments, the PR received counter evaluation may occur before or parallel to the MAC verification.

FIG. 15 is an interaction diagram 1500 illustrating a secure stream protocol operation for a completion request 1502 sent from target device 1130 to initiating device 1110. Target device 1130 samples the value of its CPL encryption counter (e.g., cpl_enc_counter) and increments the sampled value. Target device 1130 also samples the value of its own PR sent counter (e.g., pr_sent_counter at target device 1130) and then zeroes the value in the PR sent counter. Target device 1130 encrypts data of a TLP used to form completion request 1502. Encryption may be performed using the incremented value of the CPL encryption counter and a CPL encryption key (e.g., cpl_stream_enc_key). An integrity code value (ICV), such as a MAC, is also computed over the TLP including the encrypted data, a TLP header, and a TLP secure stream prefix. Target device 1130 sends the completion request secured by the encrypted data and the ICV to target device 1130. In addition, the TLP also carries the sampled value of the PR sent counter to indicate how many posted requests have been sent by target device 1130 since the last non-posted or completion transaction was sent by target device 1130 to initiating device 1110.

Initiating device 1110 samples the value of its CPL decryption counter (e.g., cpl_dec_counter) and increments the sampled value. Initiating device 1110 decrypts the data in the TLP of the received completion request using the incremented value of the CPL decryption counter and a CPL decryption key (e.g., cpl_stream_dec_key). In at least one embodiment, the encryption key and decryption key for completion requests are the same. Initiating device 1110 verifies the integrity of the TLP by verifying the ICV received for the TLP. In at least one embodiment, the ICV is a MAC, which is verified using the incremented value of the CPL decryption counter and the CPL decryption key. If the ICV verification fails, then an error is raised (e.g., error message is logged, response to send to the target device is generated, keys are reinitialized, etc.). Otherwise, the value of a PR received counter (e.g., pr_received_counter) maintained by initiating device 1110 is decremented by the value of the PR sent counter (e.g., pr_sent_counter) received from target device 1130. If the resulting value of the PR received counter is less than zero, this indicates that one or more posted requests have been dropped and/or delayed. Consequently, an error is raised (e.g., error message is logged, response is generated to notify initiating device, session is terminated, etc.). Otherwise the initiating device 1110 consumes the packet. In some embodiments, the PR received counter evaluation may occur before the MAC verification.

It should be noted that operations of initiating device 1110 and target device 1130 were described with reference to sending posted and non-posted requests from initiating device 1110 and sending completion transactions from the target device 1130 in response to the non-posted transactions. It should be apparent, however, that initiating device 1110 can operate as a target device and that target device 1130 can operate as an initiating device.

Secure TLPs can be reordered to satisfy the requirements for deadlock avoidance, but some other forms of reordering are forbidden as Secure TLPs pass over PCIe between Ports. The following examples illustrate selected reordering cases. An attack based on TLP reordering (or delay which has the effect of reordering) can be implemented using a variety of mechanisms that all result in the same observed behavior, and will be detected using the mechanisms defined by IDE.

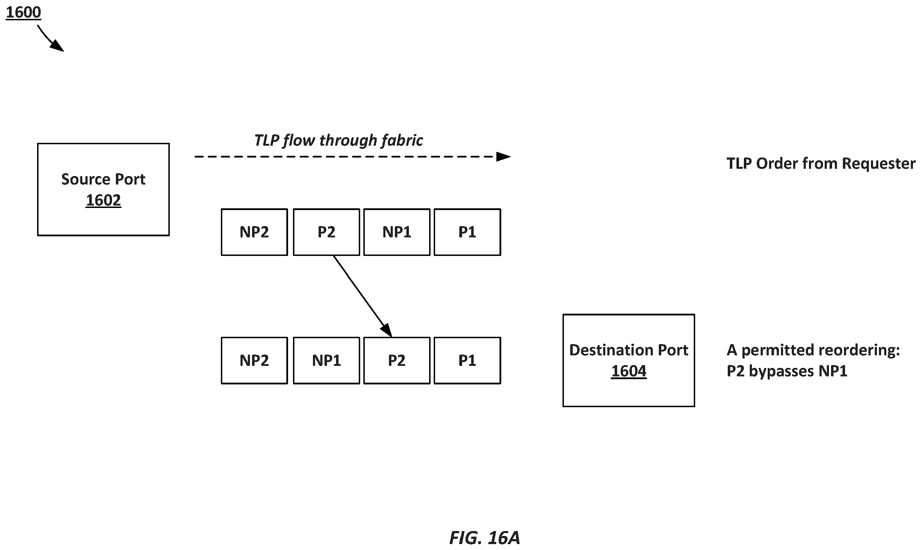

FIGS. 16A-C are schematic diagrams illustrating example reordering for IDE TLPs in accordance with embodiments of the present disclosure. FIG. 16A illustrates a first example TPL flow 1600through a fabric. A source port 1602 can transmit a set of TLPs in a given order, determined by a requester. In this example, the requester has requested a posted P1 request, a nonposted NP1 request, a posted P2 request, and a nonposted NP2 request. A permissible reordering can include a scenario where P2 bypasses NP1 and arrives at the destination port 1604 prior to NP1.

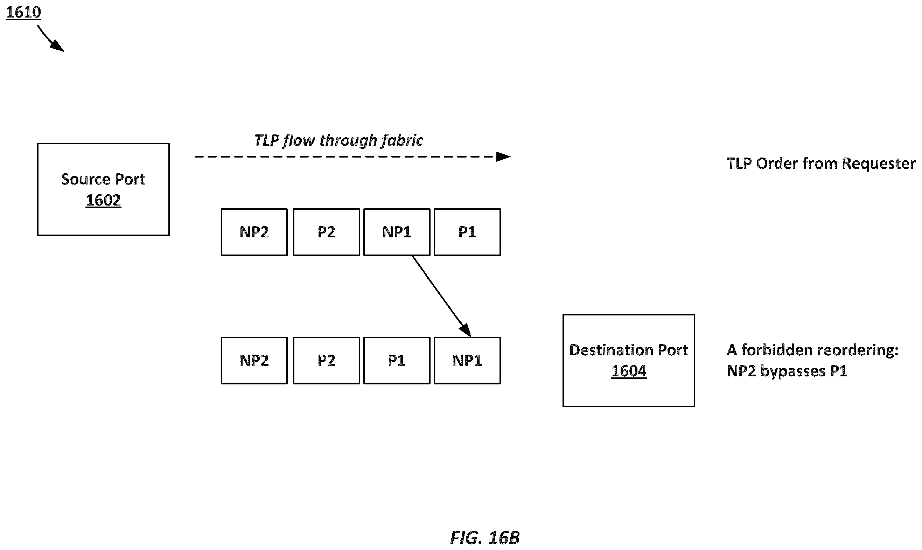

FIG. 16B illustrates a second example TPL flow 1610 through a fabric. FIG. 16B illustrates a forbidden reordering. In this example, NP1 bypasses P1, which is not allowed.

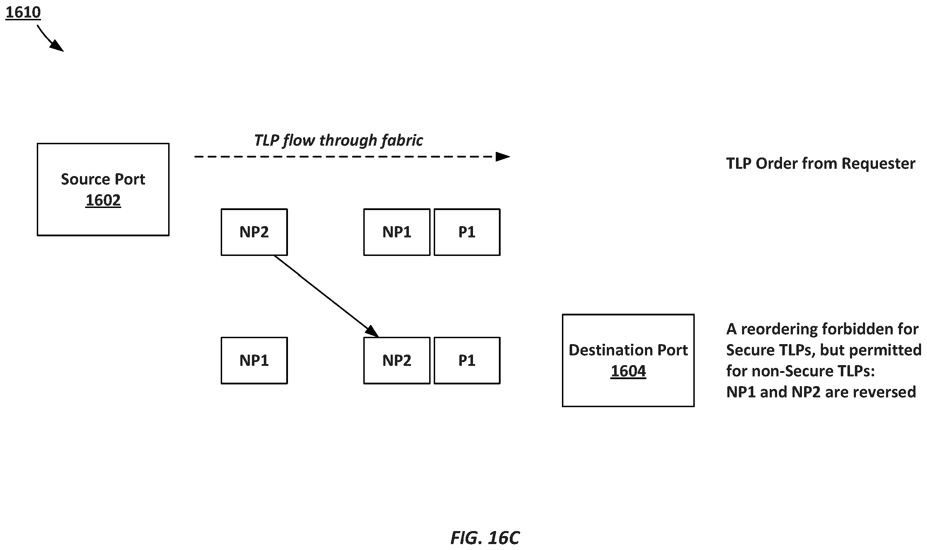

FIG. 16C illustrates a third example TPL flow 1620 through a fabric. In TPL flow 1620, the reordering of NP1 and NP2 is permissible for non-secure TLPs; but reordering of NP1 and NP2 is forbidden for secure TLPs.

Note that it is not required that the PR_Sent_Counter value in the received TLP prefix match the PR_Received_Counter, since posted requests are allowed to pass Non-Posted Requests and Completions. When this (legal) bypassing occurs the PR_Received_Counter may have a value greater than the PR_Sent_Counter in the TLP prefix.

Similar scenarios apply between Posted Requests and Completions.

Note that reordering attacks are possible through Retimers, Switches, and any other device or equipment that can alter the flow of TLPs at any point between the originating Port and the Destination Port. Table 4 provides example additions to a transaction layer error list.

**Table 4. Transaction Layer Error List for Secure TLP**

| Error Name | Error Type | Detecting Agent Action |
|---|---|---|
| ... | | |
| GMAC Check Failure | Uncorrectable (Non-Fatal) | Mark key as being in error - all subsequent TLPs over this stream treated as having MAC check failure |
| PR-Received-Counter-NPR, PR-Received-Counter-CPL underflow | | |
| | | Send ERR_NONFATAL to root complex. |
| | | Log the prefix/header of the TLP that encountered the error |
| PR-Received-Counter-NPR, PR-Received-Counter-CPL overflow | | |
| | | Signal UR for requests and Unexpected completions for completions |
| Misrouted Secure TLP | Uncorrectable (Non-Fatal) | Send ERR_NONFATAL to root complex. |

### IDE Messages

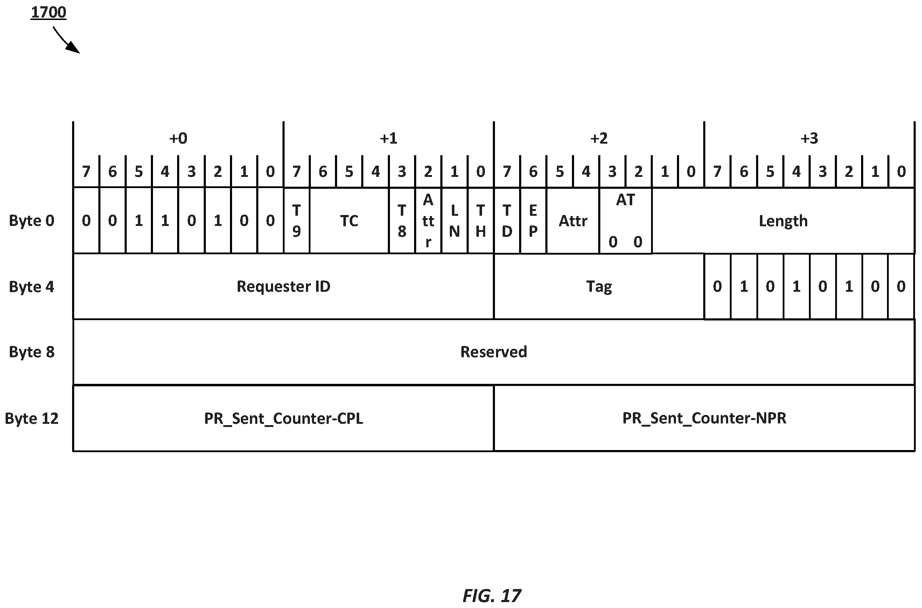

FIGS. 17-20 illustrate various example integrity messages associated with secure link or non-link secure streams, in accordance with various embodiments. The messages may be applicable to the computer bus 105 shown in FIG. 1. IDE Messages are used with the optional Integrity and Data Encryption (IDE) mechanism. The following rules apply to the formation of IDE Messages:
- The IDE Messages do not include a data payload (TLP Type is Msg).
- The Length field is Reserved.
- The Requester ID must be set to the Transmitting Port's ID.
- Integrity Sync Messages associated with a Secure Link must use Local routing (100b); Integrity Sync Messages associated with a non-Link Secure Stream must use Route by ID (010b), where the Destination ID must contain the value in the Partner RID Base field of the associated Secure Stream RID Association Register set.
- Integrity Fail Messages associated with a Secure Link must use Route to Root Complex (000b); Integrity Sync Messages associated with a non-Link Secure Stream must use Route by ID (010b), where the Destination ID must contain the value in the Partner RID Base field of the associated Secure Stream RID Association Register set.
- IDE Messages use the default Traffic Class designator (TC0). Receivers that implement IDE support are permitted to check for violations of this rule. If a Receiver determines that a TLP violates this rule, it must handle the TLP as an Unsupported Request. This is a reported error associated with the Receiving Port. Table 5 provides example encoding for IDE messages.

**Table 5. IDE Messages**

| Name | Code[7: 0] (b) | Routin g r[2:0] (b) | Typ e | Support¹ | | | | Description/Comme nts |
|---|---|---|---|---|---|---|---|---|
| | | | | R | E | S | B | |
| | | | | C | P | w | r | |
| Integrit y Sync | 0101 | 010 / 100 | Msg | tr | tr | tr | | Integrity Sync |
| | 0100 | | | | | | | |
| Integrit y Fail | 0101 | 000 / 010 | Msg | tr | tr | tr | | Integrity check fail |
| | 0101 | | | | | | | |

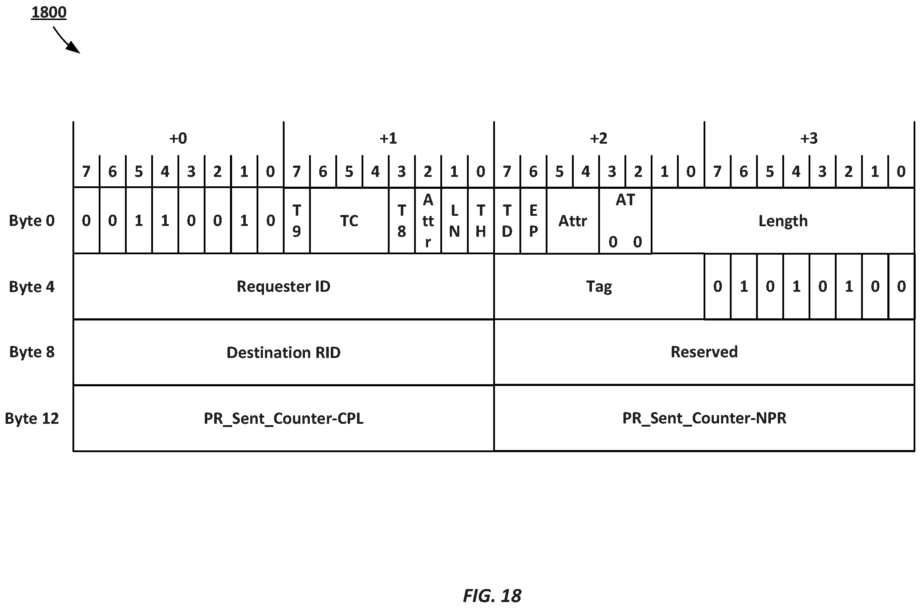

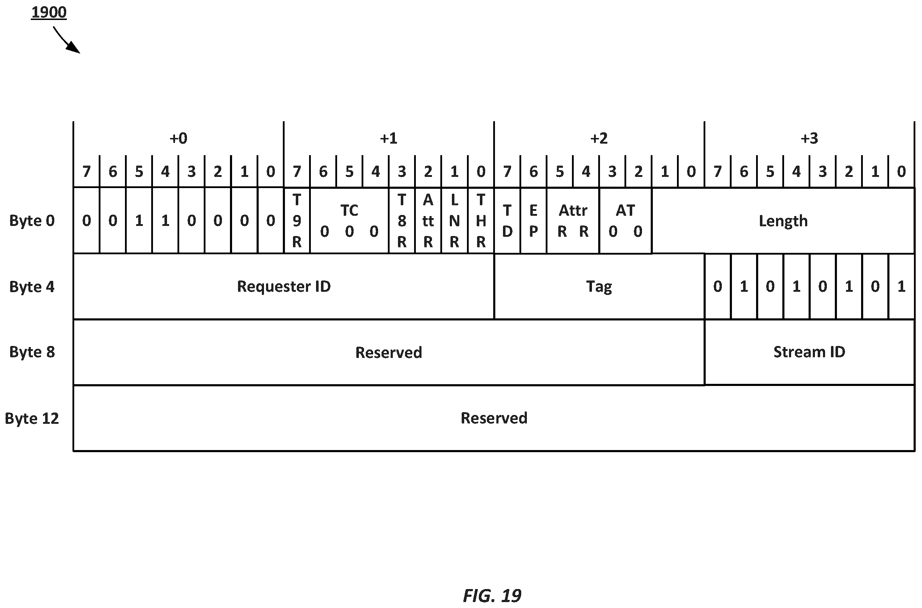

FIG. 17 is a schematic diagram of an example integrity sync message for a secure link in accordance with embodiments of the present disclosure. FIG. 18 is a schematic diagram of an integrity sync message for a non-link secure stream in accordance with embodiments of the present disclosure. FIG. 19 is a schematic diagram of an integrity check fail message for a secure link in accordance with embodiments of the present disclosure. FIG. 20 is a schematic diagram of an integrity check fail message for a non-link secure stream in accordance with embodiments of the present disclosure.

As shown in FIG. 17, Integrity Sync Messages associated with a Secure Link may use Local routing (100b). As shown in FIG. 18, Integrity Sync Messages associated with a non-Link Secure Stream may use Route by ID (010b), where the Destination ID may contain the value in the Partner RID Base field of the associated Secure Stream RID Association Register set. As shown in FIG. 19, Integrity Fail Messages associated with a Secure Link may use Route to Root Complex (000b). As shown in FIG. 20, Integrity Sync Messages associated with a non-Link Secure Stream may use Route by ID (010b), where the Destination ID may contain the value in the Partner RID Base field of the associated Secure Stream RID Association Register set.

IDE Message may use the default Traffic Class designator (TC0). Receivers that implement IDE support are permitted to check for violations of this rule. If a Receiver determines that a TLP violates this rule, it may handle the TLP as an Unsupported Request. This is a reported error associated with the Receiving Port.

### Switch Rules for Flow-Through Secure Streams

A Switch is permitted to support Flow-Through Secure Streams without supporting Secure Streams for cases where a Switch Port itself is a terminal.

Switches that support Flow-Through Secure Streams must, when enabled, implement modified ordering rules for TLPs with the Secure TLP Prefix that pass through the Switch, as defined in Table 6. Although Switches must not reorder TLPs with the Secure TLP Prefix based on Relaxed Ordering, it is permitted for those TLPs to have the RO bit Set.

IDO is not affected because Secure Streams always operates in pairwise connections, independent of other traffic.

**Table 6. IDE Ordering Rules for Switches - Per Stream**

| Row Pass Column | | Posted Request | Non-Posted Request | | Completion |
|---|---|---|---|---|---|
| | | | Read Rqst | NPR with Data | |
| Posted Request | | No | Yes | Yes | a) Y/N |
| | | | | | b) Yes |
| Non-posted Request | Read Rq st | No | No | No | Y/N |
| | NPR with Data | No | No | No | Y/N |
| Completion | | No | | Yes | No |

Switches must only route Secure TLPs through Ports with the Flow-Through Secure Stream Enabled bit Set. If a Secure TLP is routed to a Port with the Flow-Through Secure Stream Enabled bit Clear, the Secure TLP must be discarded by the Switch, and this is a Misrouted Secure TLP error, which is a defined error associated with the Egress Port. In some embodiments, the Egress Port can synthesize and return a Completion when discarding a Non-Posted Request TLP.

### IDE Extended Capability

All Ports that implement IDE must implement the IDE Extended Capability.

### Extended Capability Header (Offset 00h)

Table EC1 below provides the respective bit definitions in the PCI Express Extended Capability Header.

**Table EC1: PCIe Extended Capability Header.**

| Bit Location | Register Description | Attributes |
|---|---|---|
| 15:0 | PCI Express Extended Capability ID-Set to <TBD> to indicate IDE Extended Capability | HwInit |
| 19: 16 | Capability Version-This field is a PCI-SIG defined version number that indicates the version of the Capability structure present. | HwInit |
| | Must be 1h for this version of the specification. | |
| 31:20 | Next Capability Offset-This field contains the offset to the next PCI Express Extended Capability structure or 000h if no other items exist in the linked list of Capabilities. | HwInit |

| | | |
|---|---|---|
| IDE Capability Register (Offset 04h) | | |

**Table EC2: IDE Capability Register:**

| Bit Location | Register Description | Attributes |
|---|---|---|
| 0 | Secure Link Supported - When Set, indicates that the Port support Secure Links, and that the Secure Link Control and Status Registers (below) immediately follow the IDE Status Register. | HwInit / RsvdP |
| 1 | Non-Link Secure Streams Supported - When Set, indicates that the Port support Non-Link Secure Streams | HwInit / RsvdP |
| 2 | Flow-Through Secure Stream Supported - For a Switch Port, when Set indicates support for passing IDE Connections to other Switch Ports. | HwInit / RsvdP |
| | It is permitted to support Flow-Through Secure Stream without supporting Secure Link or non-Link Secure Stream | |
| 10:8 | Supported Integrity Types - Indicates the types of Integrity supported. | HwInit |
| | 000b - No Integrity | |
| | 001b - Per-TLP 96b GMAC | |
| | 010b - Aggregated GMAC | |
| | Others - Reserved | |
| 15:13 | Supported Encryption Types - Indicates the types of Encryption supported. | HwInit |
| | 000b - No Encryption | |
| | 001b - 256b AES-CTR for TLP Payloads | |
| | Others - Reserved | |
| 23:16 | Number of Secure Streams Supported - | HwInit / RsvdP |
| | If Non-Link Secure Streams Supported is Set then this field indicates number of Secure Streams Supported such that 0=1 Stream. | |
| | A corresponding number of Secure Stream Register blocks must be implemented. If Secure Link Supported is Clear, then these blocks must immediately follow the IDE Status Register. If Secure Link Supported is Set, then these blocks must immediately follow the Secure Link Control and Status Registers. | |
| | The value is undefined if Non-Link Secure Streams Supported is Clear. | |

| | | |
|---|---|---|
| IDE Control Register (Offset 08h) | | |

**Table EC3: IDE Control Register**

| Bit Location | Register Description | Attributes |
|---|---|---|
| 1 | Secure Streams Global Enable - Enables the use of Non-Link Secure Streams (Secure Streams with Stream ID >0). | RW |
| 2 | Flow-Through Secure Stream Enabled - For Switch Ports and Root Ports, Enables the Port for flow-through operation of Secure Stream. | RW / Rsvd P |
| | Reserved for other types of Ports. | |

| | | |
|---|---|---|
| IDE Status Register (Offset 0Ch) | | |

**Table EC2: IDE Status Register**

| Bit Location | Register Description | Attributes |
|---|---|---|
| 0 | Received Integrity Check Fail Message - For a Downstream Port, when Set, indicates that one or more Integrity Check Fail Message(s) have been Received. | RW1C / RsvdZ |
| | Reserved for Upstream Ports. | |
| 1 | Integrity Check Fail Message Overflow - For a Downstream Port, when Set, indicates that one or more Integrity Check Fail Message(s) have been Received while the Received Integrity Check Fail Message bit was Set. | RW1C / Rsvd Z |
| | Reserved for Upstream Ports. | |
| 31:24 | Integrity Check Fail Stream ID - For a Downstream Port, when Received Integrity Check Fail Message bit is Set, contains the Stream ID in the Recieved Integrity Check Fail Message that caused Received Integrity Check Fail Message to transition from Clear to Set. | RO |
| | Value is undefined when Received Integrity Check Fail Message is Clear. | |
| | Reserved for Upstream Ports. | |

| | | |
|---|---|---|
| Secure Link Control Register (Offset 10h, if present) | | |

If the Secure Link Supported bit in the IDE Capability Register is Set, then this register must be implemented. If the Secure Link Supported bit in the IDE Capability Register is Clear, then this register must not be implemented, and instead the first set of Secure Stream registers must follow the IDE Status Register.

**Table EC5: Secure Link Control Register**

| Bit Location | Register Description | Attributes |
|---|---|---|
| 0 | Secure Link On - For a Downstream Port, when Set, enables Secure Link. | RW / Rsvd P |
| | It is permitted for the default value to be 1b if and only if implementation-specific means can ensure that the Secure Link will start in the Ready_Insecure state. | |
| | Reserved for Upstream Ports. | |
| 1 | Trigger Integrity Check - When an aggraged MAC mode is enabled, writing a 1b to this bit must cause the Port to Transmit an Integrity Sync Message for this Secure Stream. Read value must be 1b following the write of a 1b until the Integrity Sync Message has been Transmitted, at which time this bit must be Cleared. | RW |
| | RsvdP if no aggregated MAC mode is supported. | |
| 6:4 | Integrity Mode - Configures the type of Integrity to be used for this Secure Stream. Must be programmed to the same value in both the Upstream and Downstream Ports. Must be configured while Secure Link On is Clear. When Secure Link On is Set, the setting is sampled, and this field becomes RO with reads returning the sampled value. | RW/RO |
| | 000b - No Integrity | |
| | 001b - Per-TLP 96b GMAC | |
| | 010b - Aggregated GMAC | |
| | Others - Reserved | |
| 10:8 | Encryption Mode - Configures the type of Encryption to be used for this Secure Stream. Must be programmed to the same value in both the Upstream and Downstream Ports. Must be configured while Secure Link On is Clear. When Secure Link On is Set, the setting is sampled, and this field becomes RO with reads returning the sampled value. | RW/RO |
| | 000b - No Encryption | |
| | 001b - 256b AES-CTR for TLP Payloads | |
| | Others - Reserved | |
| 14:12 | Containment Behavior - Configures the action of the Port when in Fail-Insecure. It is permitted to program different values in the Upstream and Downstream Ports. Must be configured while Secure Link On is Clear. When Secure Link On is Set, the setting is sampled, and this field becomes RO with reads returning the sampled value. | RW/RO |
| | 000b - Force Link Down | |
| | 001b - Block Memory Requests and Completsions - Requests must be terminated as Unsupported Requests, Completions must be dropped | |
| | 011b - Block all Requests and Completions - Requests must be terminated as Unsupported Requests, Completions must be dropped | |
| | 001b - Block Memory and IO - Requests UR'd, Completions dropped | |
| | 010b - Block Memory, IO and Cfg except through SFI | |
| | Others - Reserved; If a Reserved Value is written to this field, the hardware must instead write this field to Force Link Down (000b) | |
| 23:16 | Encryption Key ID - Indicates the Key ID associated with the Secure Link for the purpose of encrypting and decrypting data payloads. This Key ID association is local to the Port. | RW |
| 31:24 | MAC Key ID - Indicates the Key ID associated with the Secure Link for the purpose of computing and checking the MAC. This Key ID association is local to the Port. | RW |

### Secure Link Status Register (Offset 14h, if present)

If the Secure Link Supported bit in the IDE Capability Register is Set, then this register must be implemented. If the Secure Link Supported bit in the IDE Capability Register is Clear, then this register must not be implemented, and instead the first set of Secure Stream registers must follow the IDE Status Register.

**Table EC6: Secure Link Status Register**

| Bit Location | Register Description | Attributes |
|---|---|---|
| 3:0 | Secure Link State - When Secure Link On is Set, this field indicates the state of the Port. Encodings: | RO |
| | 0000b - Start / Unknown | |
| | 0001b - Ready_Insecure | |
| | 0010b - Secure | |
| | 0011b - Key_Refresh | |
| | 1000b - Fail_Insecure | |
| | Others - Reserved - Software must handle reserved values as indicating unknown state | |
| | When Secure Link On is Clear, the value of this field must be 0000b. | |

### Secure Stream Control Register

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms).

**Table EC7: Secure Stream Control Register**

| Bit Location | | Register Description | Attributes |
|---|---|---|---|
| 0 | | Secure Stream Enable - When Set, enables this Secure Stream. The following must be programmed before this bit is Set: | RW |
| | | Integrity Mode (below) | |
| | | Encryption Mode (below) | |
| | | Containment Behavior (below) | |
| | | Key ID (below) | |
| | | Requester ID Limit in Secure Stream RID Association Register 1 | |
| | | Requester ID Base in Secure Stream RID Association Register 2 | |
| | | V bit in Secure Stream RID Association Register 2 | |
| | | If this bit is Set when the V bit is Clear, the Secure Stream must transition to Fail_Insecure. | |
| | | It is strongly recommended that the Secure Stream Address Association Registers also be programmed prior to Setting this bit. | |
| | | Default value is 0b. | |
| 1 | Trigger Integrity Check - When an aggraged MAC mode is enabled, writing a 1b to this bit must cause the Port to Transmit an Integrity Sync Message for this Secure Stream. Read value must be 1b following the write of a 1b until the Integrity Sync Message has been Transmitted, at which time this bit must be Cleared. | | RW |
| | RsvdP if no aggregated MAC mode is supported. | | |
| 6:4 | Integrity Mode - Configures the type of Integrity to be used for this Secure Stream. Must be programmed to the same value in both the Upstream and Downstream Ports. Must be configured while Secure Stream Enable is Clear. When Secure Stream Enable is Set, the setting is sampled, and this field becomes RO with reads returning the sampled value. | | RW/RO |
| | | 000b - No Integrity | |
| | | 001b - Per-TLP 96b GMAC | |
| | | 010b - Aggregated GMAC | |
| | | Others - Reserved | |
| 10:8 | Encryption Mode - Configures the type of Encryption to be used for this Secure Stream. Must be programmed to the same value in both the Upstream and Downstream Ports. Must be configured while Secure Stream Enable is Clear. | RW/RO | |
| | When Secure Stream Enable is Set, the setting is sampled, and this field becomes RO with reads returning the sampled value. | | |
| | 000b - No Encryption | | |
| | 001b - 256b AES-CTR for TLP Payloads | | |
| | Others - Reserved | | |
| 14:12 | Containment Behavior - Configures the action of the Port for this Secure Stream when in Fail-Insecure. It is permitted to program different values in the Upstream and Downstream Ports. Must be configured while Secure Stream Enable is Clear. When Secure Stream Enable is Set, the setting is sampled, and this field becomes RO with reads returning the sampled value. | | RW/RO |
| | | 000b - No Containment | |
| | | 001b - Block Memory Requests and Completsions for this Secure Stream - Requests must be terminated as Unsupported Requests, Completions must be dropped | |
| | | 011b - Block all Requests and Completions for this Secure Stream - Requests must be terminated as Unsupported Requests, Completions must be dropped | |
| | Others - Reserved; If a Reserved Value is written to this field, the must instead write this field to Block all Requests and Completions (011b). | | |
| 23:16 | Encryption Key ID - Indicates the Key ID associated with the Secure Link for the purpose of encrypting and decrypting data payloads. This Key ID association is local to the Port. | RW | |
| 31:24 | MAC Key ID - Indicates the Key ID associated with the Secure Link for the purpose of computing and checking the MAC. This Key ID association is local to the Port. | RW | |

### Secure Stream Status Register

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms).

**Table EC8: Secure Stream Status Register**

| Bit Location | Register Description | | Attributes |
|---|---|---|---|
| 3:0 | Secure Stream State - When Secure Stream Enable is Set, this field indicates the state of the Secure Stream at this Port. Encodings: | | RO |
| | | 0000b - Start / Unknown | |
| | | 0001b - Ready_Insecure | |
| | | 0010b - Secure | |
| | | 0011b - Key_Refresh | |
| | | 1000b - Fail_Insecure | |
| | | Others - Reserved - Software must handle reserved values as indicating unknown state | |
| | When Secure Link On is Clear, the value of this field must be 0000b. | | |

### Secure Stream RID Association Register

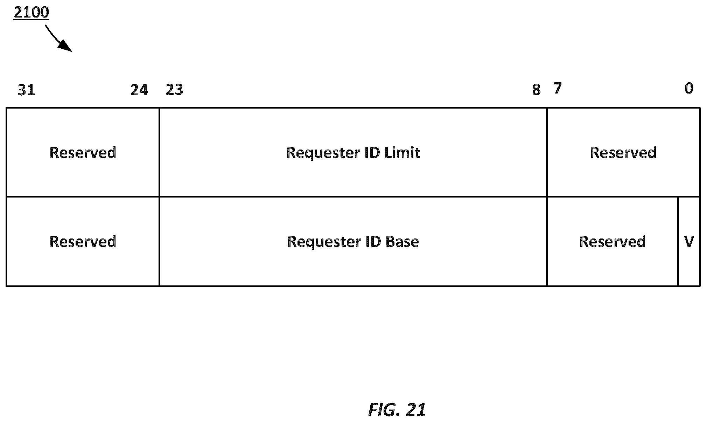

Each Secure Stream must have exactly one Secure Stream register block, where the block consists of a Secure Stream Control Register, followed by a Secure Stream Status Register, followed by a Secure Stream RID Association Register, followed by one or more Secure Stream Address Association Register sets. The Secure Stream ID associated with a Secure Stream Register block is implied by the sequence in which the block appears in the IDE Extended Capability such that the first corresponds to Secure Stream ID 1 (Stream ID 0 is associated with a Secure Link and does not use RID or Address Association mechanisms). FIG. 21 is a schematic diagram of an example secure stream requester identifier (RID) association block in accordance with embodiments of the present disclosure. Table EC9 provides an example secure stream RID association register 1. Table EC10 provides an example secure stream RID association register 2.

**Table EC9. Secure Stream RID Association Register 1 (Offset +00h)**

| Bit Location | Register Description | Attributes |
|---|---|---|
| 23:8 | Requester ID Limit- Indicates the highest value RID in the range associated with this Key ID | RW |

**Table EC10. Secure Stream RID Association Register 2 (Offset +04h)**

| Bit Location | Register Description | Attributes |
|---|---|---|
| 23:8 | Requester ID Base - Indicates the lowest value RID in the range associated with this Key ID | RW |
| 0 | Valid (V) - When Set, indicates the Requester ID Base and Requester ID Limit fields have been programmed. | RW |
| | Default is 0b | |

### Secure Stream Address Association Registers

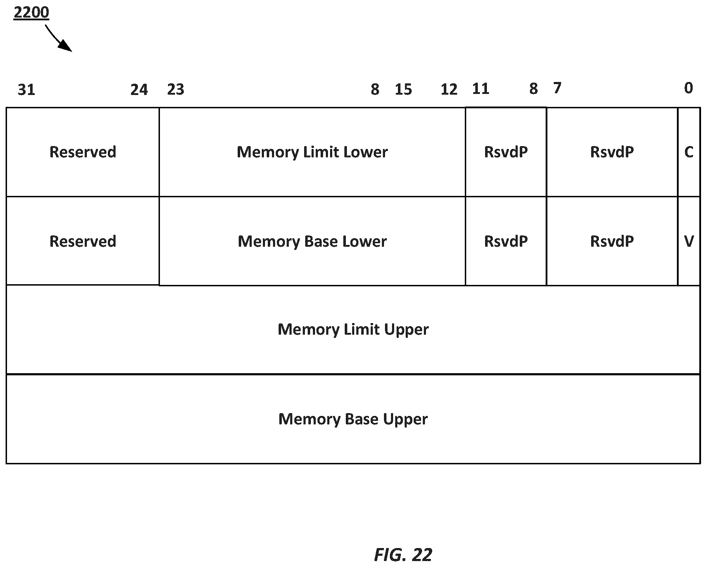

There must be at least one Secure Stream Address Association Block following each Secure Stream RID Association Block. The number of Secure Stream Address Association Block for a given Secure Stream is determined by hardware implementation. System Software must Clear the V bit for all unused Secure Stream Address Association Blocks. FIG. 22 is a schematic diagram of an example secure stream address association block in accordance with embodiments of the present disclosure. Table EC11 provides an example secure stream address association register 1. Table EC12 provides an example secure stream address association register 2. Table 13 provides an example secure stream address association register 3. Table EC14 provides an example secure stream address association register 4.

**Table EC11. Secure Stream Address Association Register 1 (Offset +00h)**

| Bit Location | Register Description | Attributes |
|---|---|---|
| 23:8 | Memory Limit Lower - Corresponds to Address bits [31:20]. Address bits [19:0] are implicitly F_FFFFh. | RW |
| 0 | C (Continuation) - If Set, indicates that an additional Secure Stream Address Association Block for the same Secure Stream follows this one; if Clear indicates that this is the final Secure Stream Address Association Block for this Secure Stream. | HwInit |

**Table EC12. Secure Stream Address Association Register 2 (Offset +04h)**

| Bit Location | Register Description | Attributes |
|---|---|---|
| 23:8 | Memory Base Lower - Corresponds to Address bits [31:20]. Address[19:0] bits are implicitly 0_0000h. | RW |
| 0 | V (Valid) - When Set, indicates this Secure Stream Association Block is valid, and that all Address Routed TLPs matching the address range defined by Memory Base and Memory Limit must be associated with this Secure Stream. | RW |
| | Hardware behavior is undefined if overlapping address ranges are assigned for different Secure Streams. | |
| | Default is 0b | |

**Table EC13. Secure Stream Address Association Register 3 (Offset +08h)**

| Bit Location | Register Description | Attributes |
|---|---|---|
| 31:0 | Memory Limit Upper - Corresponds to Address bits [63:32] | RW |

**Table EC14. Secure Stream Address Association Register 4 (Offset +0ch)**

| Bit Location | Register Description | Attributes |
|---|---|---|
| 31:0 | Memory Base Upper - Corresponds to Address bits [63:32] | RW |

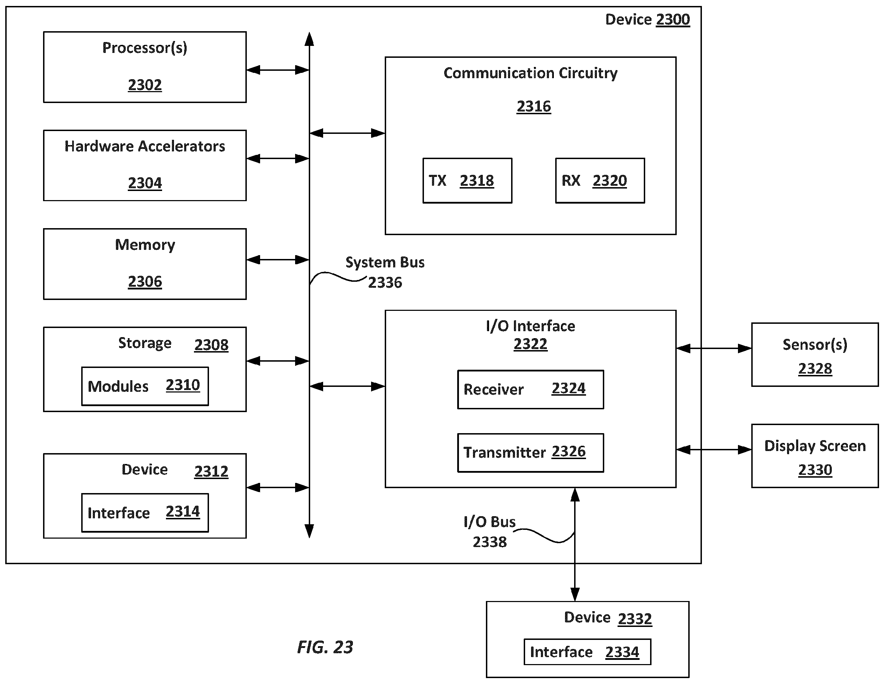

FIG. 23 illustrates an example device suitable for use to practice various aspects of the present disclosure, in accordance with various embodiments. The device 2300 may be used to implement programmatic aspects of the disclosed methodology. As shown, the device 2300 may include one or more processors 2302, each having one or more processor cores, or and optionally, a hardware accelerator 2304 (which may be an ASIC or a FPGA). In alternate embodiments, the hardware accelerator 2304 may be part of processor 2302, or integrated together on a SOC. Additionally, the device 2300 may include a memory 2306, which may be any one of a number of known persistent storage media, and a data storage circuitry 2308 including modules 2310. In addition, the device 2300 may include an I/O interface 2322, coupled to one or more sensors 2328, and a display screen 2330. The I/O interface 2322 may include a transmitter 2326 and a receiver 2324. Furthermore, the device 2300 may include communication circuitry 2316 including a transmitter (Tx) 2318, and network interface controller (NIC) 2320. The elements may be coupled to each other via system bus 2336, which may represent one or more buses, e.g., one or more PCIe buses. For various PCIe embodiments, communication circuitry 2316 and I/O interface 2322 may respectively include transmitter 2318 and NIC 2320, and transmitter 2326 and receiver 2324. In particular, respective transmitter 2318, NIC 2320, transmitter 2326, and receiver 2324 may include the flip-based packetization technology described herein with references to the figures. In various embodiments, one or more of the other components, such as processor 2302, memory 2306, storage2308 and so forth, may also likewise includes high speed serial link interface circuitry for coupling and operating with a high speed serial bus 2336, e.g., high speed PCIe bus, having the secure stream technology described herein with references to the figures. In the case of multiple buses, they may be bridged by one or more bus bridges (not shown). A device 2312 may be coupled to the system bus 2336, and a device 2332 may be coupled to an I/O bus 2338. The device 2312 may include an interface 2314, and the device 2332 may include an interface 2334.

In embodiments, the processor(s) 2302 (also referred to as "processor circuitry 2302") may be one or more processing elements configured to perform basic arithmetical, logical, and input/output operations by carrying out instructions. Processor circuitry 2302 may be implemented as a standalone system/device/package or as part of an existing system/device/package. The processor circuitry 2302 may be one or more microprocessors, one or more single-core processors, one or more multi-core processors, one or more multithreaded processors, one or more GPUs, one or more ultra-low voltage processors, one or more embedded processors, one or more DSPs, one or more FPDs (hardware accelerators) such as FPGAs, structured ASICs, programmable SoCs (PSoCs), etc., and/or other processor or processing/controlling circuit. The processor circuitry 2302 may be a part of a SoC in which the processor circuitry 2302 and other components discussed herein are formed into a single IC or a single package. As examples, the processor circuitry 2302 may include one or more Intel Pentium^{®}, Core^{®}, Xeon^{®}, Atom^{®}, or Core M^{®} processor(s); Advanced Micro Devices (AMD) Accelerated Processing Units (APUs), Epyc^{®}, or Ryzen^{®} processors; Apple Inc. A series, S series, W series, etc. processor(s); Qualcomm snapdragon^{®} processor(s); Samsung Exynos^{®} processor(s); and/or the like.

In embodiments, the processor circuitry 2302 may include a sensor hub, which may act as a coprocessor by processing data obtained from the one or more sensors 2328. The sensor hub may include circuitry configured to integrate data obtained from each of the one or more sensors 2328 by performing arithmetical, logical, and input/output operations. In embodiments, the sensor hub may capable of timestamping obtained sensor data, providing sensor data to the processor circuitry 2302 in response to a query for such data, buffering sensor data, continuously streaming sensor data to the processor circuitry 2302 including independent streams for each sensor of the one or more sensors 2328, reporting sensor data based upon predefined thresholds or conditions/triggers, and/or other like data processing functions.

In embodiments, the memory 2306 (also referred to as "memory circuitry 2306" or the like) may be circuitry configured to store data or logic for operating the computer device 2300. The memory circuitry 2306 may include a number of memory devices that may be used to provide for a given amount of system memory. As examples, the memory circuitry 2306 can be any suitable type, number and/or combination of volatile memory devices (e.g., random access memory (RAM), dynamic RAM (DRAM), static RAM (SRAM), etc.) and/or nonvolatile memory devices (e.g., read-only memory (ROM), erasable programmable read-only memory (EPROM), electrically erasable programmable read-only memory (EEPROM), flash memory, antifuses, etc.) that may be configured in any suitable implementation as are known. In various implementations, individual memory devices may be formed of any number of different package types, such as single die package (SDP), dual die package (DDP) or quad die package, dual inline memory modules (DIMMs) such as microDIMMs or MiniDIMMs, and/or any other like memory devices. To provide for persistent storage of information such as data, applications, operating systems and so forth, the memory circuitry 2306 may include one or more mass-storage devices, such as a solid state disk drive (SSDD); flash memory cards, such as SD cards, microSD cards, xD picture cards, and the like, and USB flash drives; on-die memory or registers associated with the processor circuitry 2302 (for example, in low power implementations); a micro hard disk drive (HDD); three dimensional cross-point (3D XPOINT) memories from Intel^{®} and Micron^{®}, etc.

Where FPDs are used, the processor circuitry 2302 and memory circuitry 2306 (and/or data storage circuitry 2308) may comprise logic blocks or logic fabric, memory cells, input/output (I/O) blocks, and other interconnected resources that may be programmed to perform various functions of the example embodiments discussed herein. The memory cells may be used to store data in lookup-tables (LUTs) that are used by the processor circuitry 2302 to implement various logic functions. The memory cells may include any combination of various levels of memory/storage including, but not limited to, EPROM, EEPROM, flash memory, SRAM, anti-fuses, etc.

In embodiments, the data storage circuitry 2308 (also referred to as "storage circuitry 2308" or the like), with shared or respective controllers, may provide for persistent storage of information such as modules 2310, operating systems, etc. The data storage circuitry 2308 may be implemented as solid state drives (SSDs); solid state disk drive (SSDD); serial AT attachment (SATA) storage devices (e.g., SATA SSDs); flash drives; flash memory cards, such as SD cards, microSD cards, xD picture cards, and the like, and USB flash drives; three-dimensional cross-point (3D Xpoint) memory devices; on-die memory or registers associated with the processor circuitry 2302; hard disk drives (HDDs); micro HDDs; resistance change memories; phase change memories; holographic memories; or chemical memories; among others. As shown, the data storage circuitry 2308 is included in the computer device 2300; however, in other embodiments, the data storage circuitry 2308 may be implemented as one or more devices separated from the other elements of computer device 2300.

In some embodiments, the data storage circuitry 2308 may include an operating system (OS) (not shown), which may be a general purpose operating system or an operating system specifically written for and tailored to the computer device 2300. The OS may include one or more drivers, libraries, and/or application programming interfaces (APIs), which provide program code and/or software components for modules 2310 and/or control system configurations to control and/or obtain/process data from the one or more sensors 2328.

The modules 2310 may be software modules/components used to perform various functions of the computer device 2300 and/or to carry out functions of the embodiments discussed herein. In embodiments where the processor circuitry 2302 and memory circuitry 2306 include hardware accelerators (e.g., FPGA cells, the hardware accelerator 2304) as well as processor cores, the hardware accelerators (e.g., the FPGA cells) may be pre-configured (e.g., with appropriate bit streams, logic blocks/fabric, etc.) with the logic to perform at least some functions of the embodiments herein (in lieu of employment of programming instructions to be executed by the processor core(s)). For example, the modules 2310 may comprise logic for the corresponding entities discussed with regard to the display screen 2330, an on-screen input device, the on-screen input interface controller 2318, an off-screen input device, the transmitter 2326, and the receiver 2324.

The components of computer device 2300 may communicate with one another over the system bus 2336. The system bus 2336 may include any number of technologies, such as a Local Interconnect Network (LIN); industry standard architecture (ISA); extended ISA (EISA); PCI; PCI extended (PCIx); PCIe; an Inter-Integrated Circuit (I2C) bus; a Parallel Small Computer System Interface (SPI) bus; Common Application Programming Interface (CAPI); point to point interfaces; a power bus; a proprietary bus, for example, Intel^{®} Ultra Path Interface (UPI), Intel^{®} Accelerator Link (IAL), or some other proprietary bus used in a SoC based interface; or any number of other technologies. In some embodiments, the system bus 2336 may be a controller area network (CAN) bus system, a Time-Trigger Protocol (TTP) system, or a FlexRay system, which may allow various devices (e.g., the one or more sensors 2328, etc.) to communicate with one another using messages or frames.

The communications circuitry 2316 may include circuitry for communicating with a wireless network or wired network. For example, the communication circuitry 2316 may include transceiver (Tx) 2318 and network interface controller (NIC) 2320. Communications circuitry 2316 may include one or more processors (e.g., baseband processors, modems, etc.) that are dedicated to a particular wireless communication protocol.

NIC 2320 may be included to provide a wired communication link to a network and/or other devices. The wired communication may provide an Ethernet connection, an Ethernet-over-USB, and/or the like, or may be based on other types of networks, such as DeviceNet, ControlNet, Data Highway+, PROFIBUS, or PROFINET, among many others. An additional NIC 2320 may be included to allow connection to a second network (not shown) or other devices, for example, a first NIC 2320 providing communications to the network 150 over Ethernet, and a second NIC 2320 providing communications to other devices over another type of network, such as a personal area network (PAN) including a personal computer (PC) device. In some embodiments, the various components of the device 2300, such as the one or more sensors 2328, etc. may be connected to the processor(s) 2302 via the NIC 2320 as discussed above rather than via the I/O circuitry 2322 as discussed infra.

The Tx 2318 may include one or more radios to wirelessly communicate with a network and/or other devices. The Tx 2318 may include hardware devices that enable communication with wired networks and/or other devices using modulated electromagnetic radiation through a solid or non-solid medium. Such hardware devices may include switches, filters, amplifiers, antenna elements, and the like to facilitate the communications over the air (OTA) by generating or otherwise producing radio waves to transmit data to one or more other devices, and converting received signals into usable information, such as digital data, which may be provided to one or more other components of computer device 2300. In some embodiments, the various components of the device 2300, such as the one or more sensors 2328, etc. may be connected to the device 2300 via the Tx 2318 as discussed above rather than via the I/O circuitry 2322 as discussed infra. In one example, the one or more sensors 2328 may be coupled with device 2300 via a short range communication protocol.

The Tx 2318 may include one or multiple radios that are compatible with any number of standards. The input/output (I/O) interface 2322 may include circuitry, such as an external expansion bus (e.g., Universal Serial Bus (USB), FireWire, Thunderbolt, PCI/PCIe/PCIx, etc.), used to connect computer device 2300 with external components/devices, such as one or more sensors 2328, etc. I/O interface circuitry 2322 may include any suitable interface controllers and connectors to interconnect one or more of the processor circuitry 2302, memory circuitry 2306, data storage circuitry 2308, communication circuitry 2316, and the other components of computer device 2300. The interface controllers may include, but are not limited to, memory controllers, storage controllers (e.g., redundant array of independent disk (RAID) controllers, baseboard management controllers (BMCs), input/output controllers, host controllers, etc. The connectors may include, for example, busses (e.g., bus 2336), ports, slots, jumpers, interconnect modules, receptacles, modular connectors, etc. The I/O circuitry 2322 may couple the device 2300 with the one or more sensors 2328, etc. via a wired connection, such as using USB, FireWire, Thunderbolt, RCA, a video graphics array (VGA), a digital visual interface (DVI) and/or mini-DVI, a high-definition multimedia interface (HDMI), an S-Video, and/or the like.

The one or more sensors 2328 may be any device configured to detect events or environmental changes, convert the detected events into electrical signals and/or digital data, and transmit/send the signals/data to the computer device 2300. Some of the one or more sensors 2328 may be sensors used for providing computer-generated sensory inputs. Some of the one or more sensors 2328 may be sensors used for motion and/or object detection. Examples of such one or more sensors 2328 may include, inter alia, charged-coupled devices (CCD), Complementary metal-oxide-semiconductor (CMOS) active pixel sensors (APS), lens-less image capture devices/cameras, thermographic (infrared) cameras, Light Imaging Detection And Ranging (LIDAR) systems, and/or the like. In some implementations, the one or more sensors 2328 may include a lens-less image capture mechanism comprising an array of aperture elements, wherein light passing through the array of aperture elements define the pixels of an image. In embodiments, the motion detection one or more sensors 2328 may be coupled with or associated with light generating devices, for example, one or more infrared projectors to project a grid of infrared light onto a scene, where an infrared camera may record reflected infrared light to compute depth information.

Some of the one or more sensors 2328 may be used for position and/or orientation detection, ambient/environmental condition detection, and the like. Examples of such one or more sensors 2328 may include, inter alia, microelectromechanical systems (MEMS) with piezoelectric, piezoresistive and/or capacitive components, which may be used to determine environmental conditions or location information related to the computer device 2300. In embodiments, the MEMS may include 3-axis accelerometers, 3-axis gyroscopes, and/or magnetometers. In some embodiments, the one or more sensors 2328 may also include one or more gravimeters, altimeters, barometers, proximity sensors (e.g., infrared radiation detector(s) and the like), depth sensors, ambient light sensors, thermal sensors (thermometers), ultrasonic transceivers, and/or the like.

Each of these elements, e.g., one or more processors 2302, the hardware accelerator 2304, the memory 2306, the data storage circuitry 2308 including the modules 2310, the input/output interface 2322, the one or more sensors 2328, the communication circuitry 2316 including the Tx 2318, the NIC 2320, the system bus 2336, the I/O bus 2338, the device 2312, the device 2332, may perform its conventional functions known in the art. In addition, they may be employed to store and host execution of programming instructions implementing various operating system functions and/or applications, in particular, operations associated with secure stream technology described above with references to the FIGURES. The various elements may be implemented by assembler instructions supported by processor(s) 2302 or high-level languages, such as, for example, C, that can be compiled into such instructions. Operations associated with the device 2300 not implemented in software may be implemented in hardware, e.g., via hardware accelerator 2304, and/or firmware.

The number, capability and/or capacity of these elements 2302-2338 may vary, depending on the number of other devices the device 2300 is configured to support. Otherwise, the constitutions of elements 2302-2338 are known, and accordingly will not be further described.

### APPARATUS AND METHOD FOR STREAM INTEGRITY AND DATA ENCRYPTION WITH HETEROGENEOUS ROOT PORTS

Recently PCI-SIG has published the PCIe Integrity & Data Encryption (IDE) standard providing a solution for an end-to-end link encryption between PCIe Root ports and devices. The IDE standard is implemented in a new IDE layer between the transection layer and data link layer which uses cryptography mechanisms to encrypt all data sent for both sides of each link.

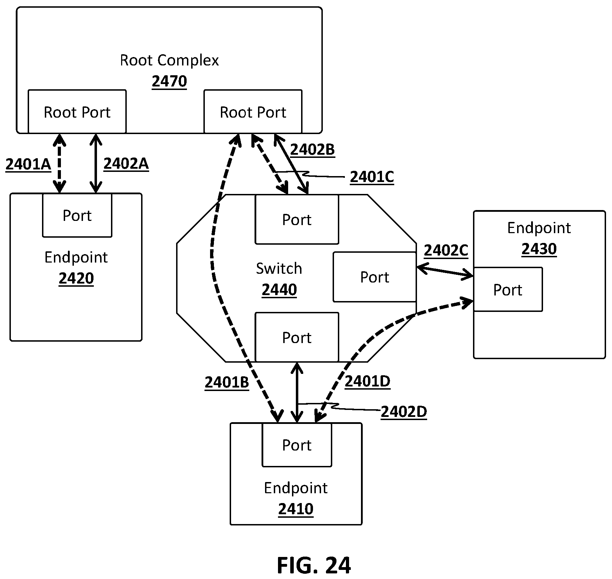

**Figure 24** illustrates an example set of "selective" IDE streams 2401A-D and "link" IDE streams 2402A-D formed between different components, which include a root complex 2470, three endpoints 2410, 2420, 2430, and a switch 2440. Each link IDE stream 2402A-D is a security channel in the link, and each selective IDE stream 2401A-D is an end-to-end security channel between devices (not necessarily in the same link).

To ensure selective IDE stream security for transaction layer packets (TLPs), the IDE standard requires that the completion for a non-posted request must be transmitted on the same selective IDE stream as the selective IDE stream on which the request was transmitted by the device. This requirement introduces the need for upstream ports such as the root ports of the root complex 2470 to implement an inbound non-posted request tracker in order to ensure that a non-posted request that came in on a selective stream will always get its completion back on the same selective stream.

The IDE "limited" stream feature has been introduced for reducing the performance tax due to IDE encryption. The limited stream feature allows a device to reduce the bandwidth and latency tax of encryption by encrypting only certain sensitive transactions instead of all transactions it sends to the root port. Similar to the selective stream IDE requirement, the limited stream feature also requires the root port to have an inbound non-posted request tracker to determine whether a completion needs to be encrypted or not.

Such trackers need a significant number of entries to cover the request-to-completion latency for peer-to-peer requests (typically in the range of multiple micro-seconds) while maintaining full bandwidth utilization of the link. Due to the area, power and complexity cost, these types of trackers are undesirable and are typically avoided. In addition, as PCIe bandwidth increases from generation to generation, this tracker needs to increase in size - for example when the root port moves from being PCIe GEN6 compliant (64GT/s) to PCIe GEN7 (128GT/s) compliant, the tracker size must double to utilize the extra bandwidth.

In addition to the PCIe IDE standard, PCI-SIG has published the PCIe TDISP (Trusted Device Interface Security Protocol) standard that provides a confidential computer environment framework that allows a trusted VM on the host to accept a trusted device into its trust compute boundary. TDISP requires a host platform trusted software, such as the Trusted Security Manager (TSM) previously described, to control all root ports on the platform to guarantee the correctness of the IDE programming, ensuring the selective stream tracking will be correct and secure.

However, in some cases, a platform owner (e.g., a cloud service provider) cannot give control over all root ports to the TSM. For example, when only a few of the connected devices are TDISP compatible and the rest are used as regular IDE devices, providing control of all root ports to the TSM becomes impractical. In such an implementation, there is a mix of VMM-controlled and TSM-controlled root ports in a platform. Such a mixed configuration can enable spoofing attacks on trust domain owned devices from VMM controlled root ports (RPs).

Embodiments of the invention prevent such spoofing attacks from VMM controlled RPs on TD-owned devices while allowing an SoC to be compliant with the PCIe IDE requirements and support the PCIe IDE limited stream feature without adding an inbound request tracker in the root ports. In addition, these embodiments minimize the additional tag storage space used in existing outstanding request trackers.

Some embodiments of the invention meet the requirements of associating outstanding requests with completions to match their selective stream ID without using a tracker, while allowing co-existence of two partitions of root ports (e.g., one for the TDISP domain controlled by the TSM and one for regular IDE devices controlled by OS/VMM). In accordance with these embodiments, non-posted requests from downstream devices are tagged with a "txn on selective stream" bit and a "TEE stack transaction" bit by the requestor side root port. The non-posted requests are sent to an appropriate outstanding transaction tracker in the architecture. For example, for transactions targeting main memory the transaction tracker may be in the host IO processor (HIOP); for address translation service (ATS) requests, the transaction tracker may be in the IOMMU; for transactions targeting MMIO memory, the transaction tracker may be in the corresponding Accelerators; and for transactions targeting MMIO space of peer discrete devices downstream of the peer root port, the tracker may be in the peer root port.

Regardless of its location, the outstanding transaction tracker stores the "txn on selective stream" and "TEE stack transaction" tag bits and then returns the response along with the corresponding completion back to the requestor side root port. The requestor side root port uses the value of the completion's "txn on selective stream" and "TEE stack transaction" bits to determine whether the completion can be trusted or not and to determine whether to encrypt the completion with the request's selective stream or not.

These embodiments enable SoCs to meet PCIe IDE standard requirements and support PCIe IDE limited stream features at minimal power, performance, area and complexity cost. Additionally, these implementations allow TSM controlled and VMM controlled root ports to securely co-exist in a platform.

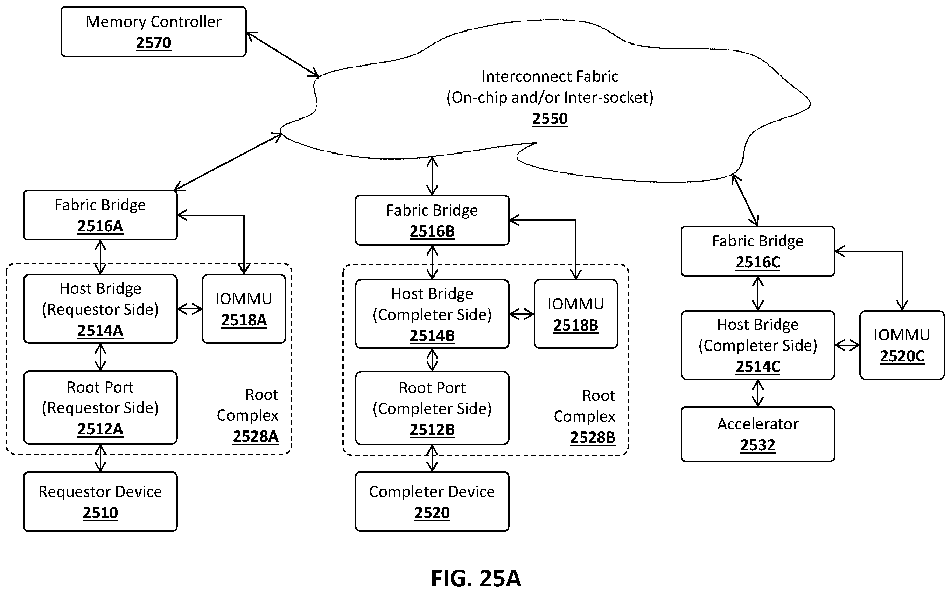

**Figure 25A** illustrates an example architecture including a requestor device 2510, completer device 2520, accelerator 2532, and memory controller 2570 all coupled via an on-chip and/or inter-socket interconnect fabric 2550. A first root port 2512A couples the requestor device 2510 to a host bridge 2514A which is coupled to an on-chip and/or inter-socket interconnect fabric 2550 via a fabric bridge 2516A. The host bridge 2514A may access an IOMMU 2518A for memory management services such as virtual-to-physical address translation and permission checks.

Similarly, a second root port 2512B couples the completer device 2520 to a completer-side host bridge 2514B which is coupled to the interconnect fabric 2550 via a fabric bridge 2516B. An IOMMU 2518B provides memory management services on behalf of the host bridge 2514B. In the illustrated embodiment, another host bridge 2514C and corresponding IOMMU 2520C couple the accelerator 2532 to the interconnect fabric 2550 via fabric bridge 2516C.

In some embodiments, each root port 2512A-B, corresponding host bridge 2514A-B, and corresponding IOMMU 2518A-B are integrated together in a corresponding root complex 2528A-B. Alternatively, in some implementations, the IOMMUs 2518A-B may be separate from but coupled to each respective root complex.

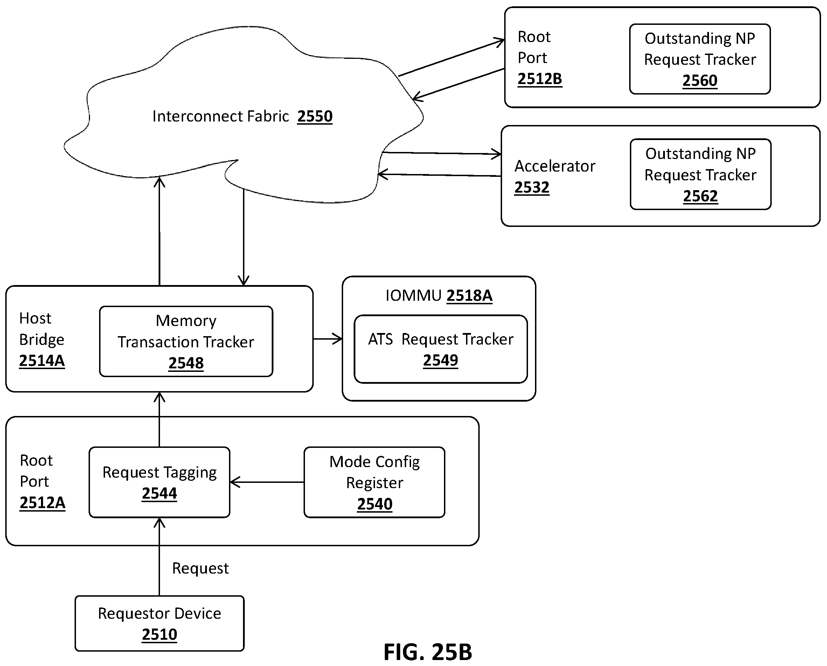

**Figure 25B** illustrates additional details for the relevant architectural components. In one embodiment, each root port 2512A-B includes or has access to a mode configuration register 2540 which stores a trusted execution environment (TEE) mode bit (sometimes referred to herein as a TDX_MODE bit). When set, the TEE mode bit indicates that the corresponding root port 2512A is under exclusive control of the trusted security manager (TSM) and belongs to the TDISP domain. The TSM ensures that the IDE RID range association registers are unique for each TSM owned root port 2512A.

To ensure that no untrusted software can fake a root port under its control as belonging to a TEE, the register 2540 hosting the TEE mode bit is protected by register access control mechanisms, allowing only the TSM to set the TEE mode bit.

In some embodiments, request tagging circuitry 2544 in the root port 2512A tags all inbound non-posted requests with two additional tag bits: "txn on selective stream" and the "TEE stack transaction" bit. Thus, when a request from requestor device 2510 is received on a selective stream, the request tagging circuitry 2544 sets set the "txn on selective stream" tag bit to 1; otherwise (i.e., if the request was unencrypted or link-encrypted), the tagging circuitry 2544 sets the bit to 0.

If the root port 2512A is owned by a trusted execution environment (as indicated by the mode configuration register bit being set), then the request tagging circuitry 2544 sets "TEE stack transaction" bit to 1; otherwise the request tagging circuitry 2544 sets the bit to 0.

The non-posted request along with its "txn on selective stream" and "TEE stack transaction" tag bits flow through the SoC interface interconnect fabrics and bridges until it reaches an existing outstanding request tracker. For a DMA coherent transaction, this tracker is the memory transaction tracker 2548 in the host bridge 2514A and for a peer-to-peer request it will be on the completer side root port 2512B or in an on-chip accelerator device 2532. In **Figure 25B****,** for example, the root port 2512B includes an outstanding non-posted request tracker 2560 and the accelerator 2532 includes an outstanding non-posted request tracker 2562. For an IOMMU transaction, the tracker is integral to the IOMMU 2518A, such as the address translation services (ATS) request tracker 2549 shown in in **Figure 25B****.**

In these embodiments, the memory transaction tracker 2548, ATS request tracker 2518A, and outstanding non-posted request trackers 2560, 2562 store the "txn on selective stream" and "TEE stack transaction" bits in the existing tracking structure (along with other information pertaining to the request) and return it with the corresponding completion back to the requestor side root port 2512A.

In these embodiments, the requestor side root port 2512A checks that the "TEE stack transaction" bit of the completion == the TEE mode bit from the mode configuration register 2540. If the TEE mode bit is set and the completion's "TEE stack transaction" bit is 0, then the completion is dropped, and an error is raised as it is a security failure. If the completion's TEE stack transaction bit matches the root port's TEE mode bit and if the completion was received from the SoC fabric 2550 with the "txn on selective stream" bit set to 1, then the root port 2512A sends the completion on the requestor device's 2510 selective stream. If the completion's TEE stack transaction bit matches the root port's TEE mode bit and if the completion was received from the SoC fabric with the "txn on selective stream" bit set to 0, it will be sent unencrypted or link-encrypted (if link encryption is enabled). In some embodiments, the exact selective stream ID to use is identified by matching the Requestor ID of the requestor device 2510 in the completion against IDE RID range association registers of enabled selective streams in the root port 2512A.

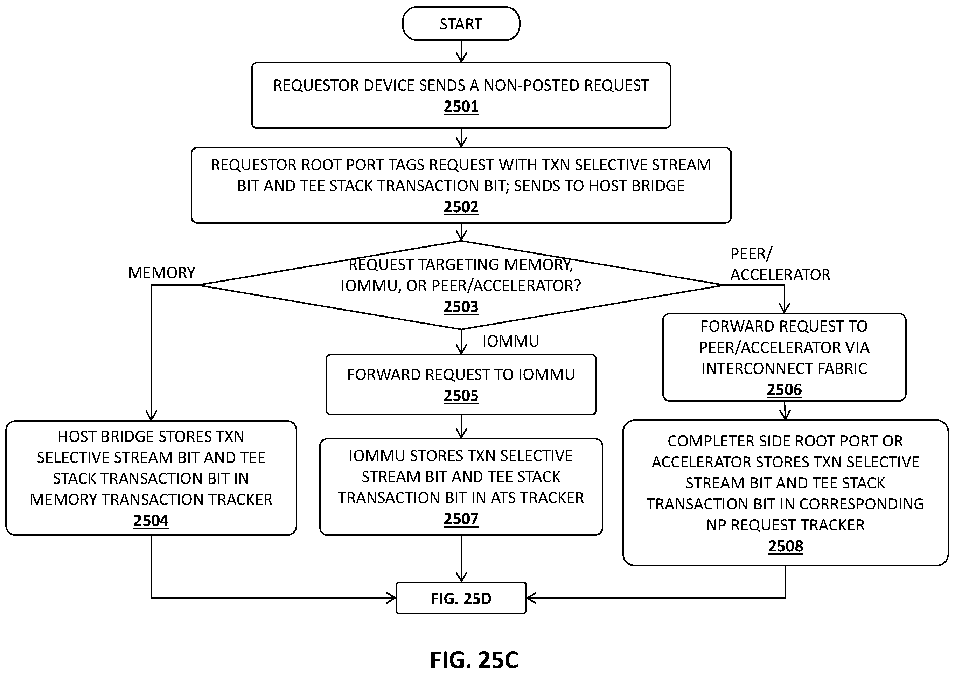

**Figures 25C-D** illustrate a method in accordance with at least some embodiments of the invention which may be implemented on the architectural components illustrated in Figures 25A-B, but which is not limited to this these specific components.

At 2501, a requestor device sends a non-posted request and, at 2502, the corresponding root port tags the request with the "txn on selective stream" and "TEE stack transaction" bits. If the request came in on a selective stream, the root port sets the "txn on selective stream" tag bit to 1; otherwise, root port sets the bit to 0. If the root port is owned by a trusted execution environment (e.g., TDX software), as indicated by the mode configuration register bit being set in the root port, then the root port sets "TEE stack transaction" bit to 1; otherwise the root port sets the bit to 0.

At 2503, the host bridge handles the request based on the destination of the transaction. If the request is targeting memory, then at 2504, the host bridge stores the "txn on selective stream" bit and the "TEE stack transaction" bit in an outstanding memory transaction tracker (along with other information related to the non-posted request). If the request is targeting the IOMMU, then at 2505, the request is forwarded to the IOMMU, and at 2507, the IOMMU stores the txn on selective stream" bit and the "TEE stack transaction" bit in an ATS tracker. The IOMMU subsequently returns the bits along with the corresponding ATS completion to the requestor.

If the request is targeting a peer, then the request is forwarded to the peer via the interconnect fabric at 2506, and at 2508, the completer side root port or the accelerator stores the "txn on selective stream" bit and the "TEE stack transaction" bit in a corresponding non-posted request tracker. In some embodiments, these bits are treated as part of the payload by the interconnect fabric and are therefore transparent to the fabric.

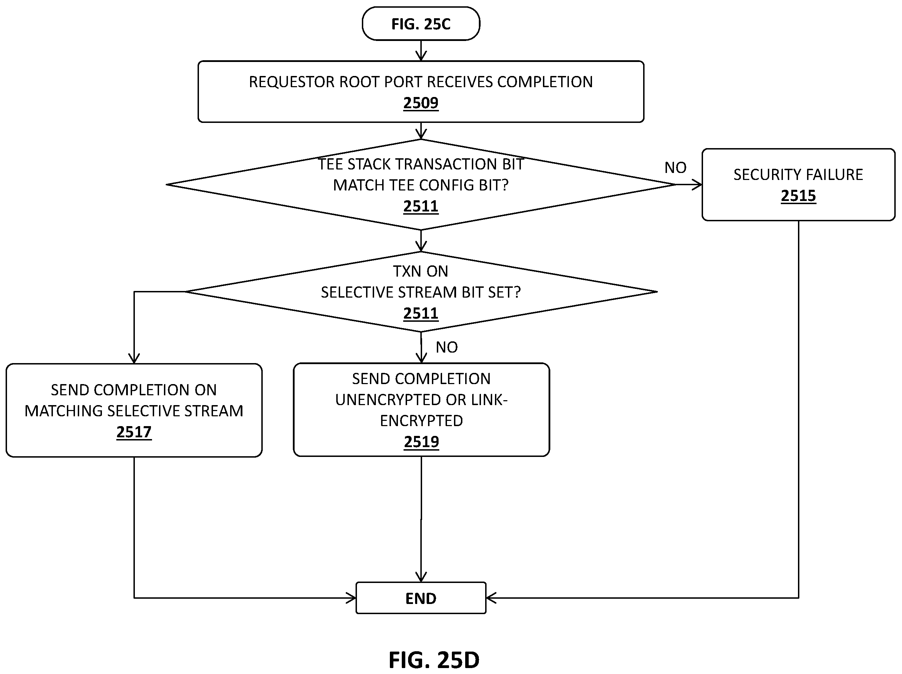

Referring to **Figure 25D**, at 2509 the requestor root port receives the completion and, at 2511, checks whether the TEE stack transaction bit matches the TEE configuration bit. If not, then at 2515 a security failure is flagged (IDE Failure) and a UR completion is sent to the requesting device. If the bits match, then at 2511, the root port determines whether the "txn on selective stream" bit is set to 1. If so, then at 2517, the completion is sent on the matching selective stream. If not, then at 2519, the completion is sent unencrypted or over a link-encrypted channel (if link IDE is enabled).

### APPARATUS AND METHOD FOR PAGE REQUEST AND RESPONSE MESSAGES WITH MESSAGE TAGGING

To ensure selective stream IDE TLP security, a page request response message needs to be transmitted on the same selective IDE stream as the corresponding page request message. Adding a tracker in the IOMMU to track page requests for which a page response message is pending and then marking the corresponding page response message as selective stream IDE encryption candidate is one way to meet this requirement. Unfortunately, the size of such a tracker is impractically large as the page request messages are processed by software which can result in latencies that are in the 100s of millisecond to seconds range. In addition, software responds to a group of page requests with the same page group index en-masse (not to individual page request messages) - and the number of page requests in a page group can be very large (limited only by the device's outstanding page request capacity).

Embodiments of the invention meet the PCIe IDE requirements (thereby preventing security attacks, performance issues and functional issues) while avoiding the physically impractical tracker. in particular, embodiments of the invention include an IOMMU with a tag bit to indicate to software that the page request came in on a selective stream. Software then uses this tag bit to determine whether to indicate to the IOMMU that the corresponding page group response needs to be sent on a selective stream.

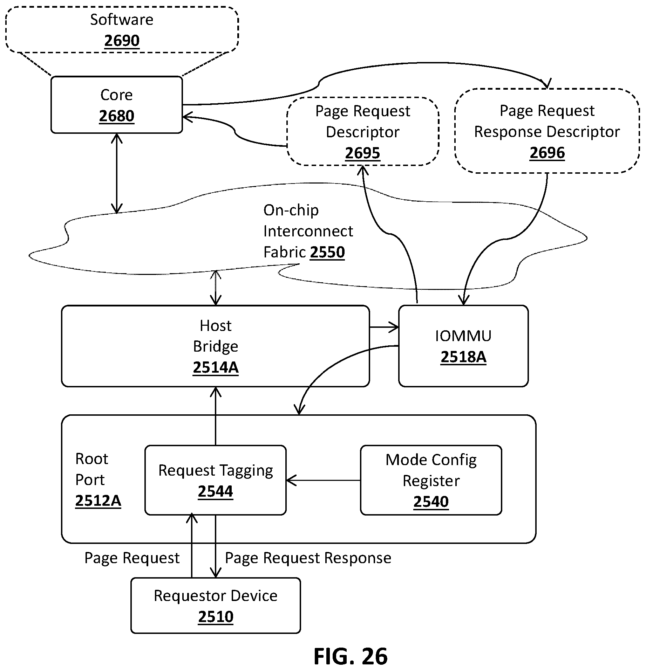

Referring to the example in **Figure 26****,** prior to forwarding to the IOMMU 2518A, the request tagging logic 2544 of the root port 2512A adds a "received on a selective stream" tag bit to every page request message it receives from downstream devices 2510. If a page request message is received on a selective stream (i.e., encrypted on a selective stream), the request tagging logic 2544 sets the "received on a selective stream" bit to 1; otherwise, it sets the bit to 0.

The IOMMU 2518A transmits the page request via the on-chip interconnect fabric 2550 to software 2690 (executed on a core 2680) along with the "received on a selective stream" tag bit. In one embodiment, the page request descriptor 2695 that the IOMMU submits to software is updated to include the "received on a selective stream" bit as a new bit field. This bit indicates to software 2690 that the page request message came on a selective stream from the originator device 2510 to the root port 2512A.

When software 2690 processes the last page request in a page group, it checks whether all the page requests in this group have the "received on a selective stream" bit set. If so, then it will send the page request response message to IOMMU 2518A with "need selective stream encryption" set. In one embodiment, it does this by updating the page request response descriptor 2696, which includes the "need selective stream encryption" bit as a new bit field.

In one embodiment, the IOMMU 2518A extracts the "need selective stream encryption" bit from the descriptor 2696 and adds it as a tag bit to the page request response message that it sends to the root port 2512A. In some embodiments, for TEE page request response messages (e.g., TDX domain page request response messages), the IOMMU 2518A sets the "need selective stream encryption" tag bit to 1 by default.

The root port 2512A, when it receives a page request response message from the IOMMU 2518A for transmission to downstream devices, it checks the "need selective stream encryption" tag bit to determine whether to encrypt using the matching selective stream key or not. If the bit is set, then root port will send the page request response message selective stream encrypted; otherwise, the message will be sent unencrypted, or link encrypted (if link IDE is enabled).

In these embodiments, the selective stream to use is identified by matching the destination device ID of the requestor device 2510 in the page request response message against IDE RID range association registers of enabled selective streams in the root port 2512A.

### APPARATUS AND METHOD FOR INTEGRITY AND DATA ENCRYPTION WITH MESSAGE TAGGING

Embodiments of the invention allow a SoC to be compliant with PCIe IDE requirements and support PCIe IDE Limited stream feature, while minimizing the additional tag storage space required in outstanding request trackers and without requiring inbound request trackers in root ports.

For meeting the standard requirements of associating outstanding requests with completions to match their selective stream ID and to support IDE limited stream without using a tracker, these embodiments tag non-posted requests from downstream devices with a single "txn on selective stream" bit set by the requestor side root port, which sends the requests to the appropriate outstanding transaction tracker in the system. As previously described with respect to **Figure 25B****,** request tagging logic 2544 of the root port 2512A tags requests with this "txn on a selective stream" bit before transmitting the requests to the various transaction trackers in the system, including (by way of example and not limitation), a memory transaction tracker 2548 for transactions targeting main memory, an ATS request tracker 2549 for ATS requests, the outstanding non-posted request trackers, 2560 and 2562, in other root ports 2512B and accelerators 2532, respectively. These trackers store the "txn on selective stream" bit in the existing tracking structure (along with other information pertaining to the request) and return it with the corresponding completion back to the requestor side root port 2512A. The requestor side root port 2512A uses the value of the completion's "txn on selective stream" tag to determine whether to encrypt the completion with the request's selective stream.

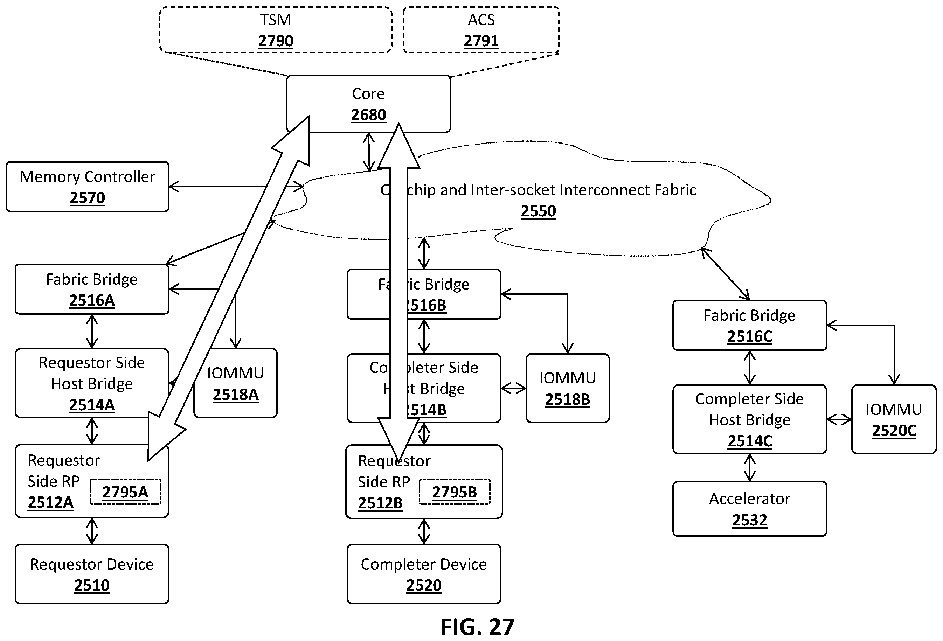

Referring to **Figure 27****,** in one embodiment, to ensure integrity and prevent attacks on trusted execution environments (e.g., trust domains (TDs)), the trusted security manager (TSM) 2790 ensure that each root port 2514A-B in the system is allocated a unique (i.e., nonoverlapping) secondary to subordinate bus range. In this implementation, the TSM also ensures that source validation provided by access control services (ACS) 2791 is enabled, and that ACS control registers 2795A-B in the root ports 2514A-B are configured as read-only for the VMM and BIOS code.

As previously described, the requestor side root port 2514A sends the completion on the request's selective stream only if the completion was received from the SOC fabric with the "txn on selective stream" bit set to 1. Otherwise, it will be sent out unencrypted or link encrypted (if link encryption was enabled). The selective stream ID to use is identified by matching the Requestor ID in the completion against IDE RID range association registers in the root port 2514A.

### APPARATUS AND METHOD FOR SECURE ADDRESS TRANSLATION SERVICES

In existing implementations, an attacker can intercept an address translation services (ATS) invalidation request that an IOMMU 2518A-B sends downstream to a device 2510, 2520 and inject an invalidation completion. This can result in software assuming that the device has flushed all the previous mappings from its address translation caches. Software can re-assign the freed up memory to another process/device in the same VM or to another VM. However, since the device has the old translated mappings in its cache, it can issue malicious requests to the re-assigned address region - thereby violating confidentiality and integrity.

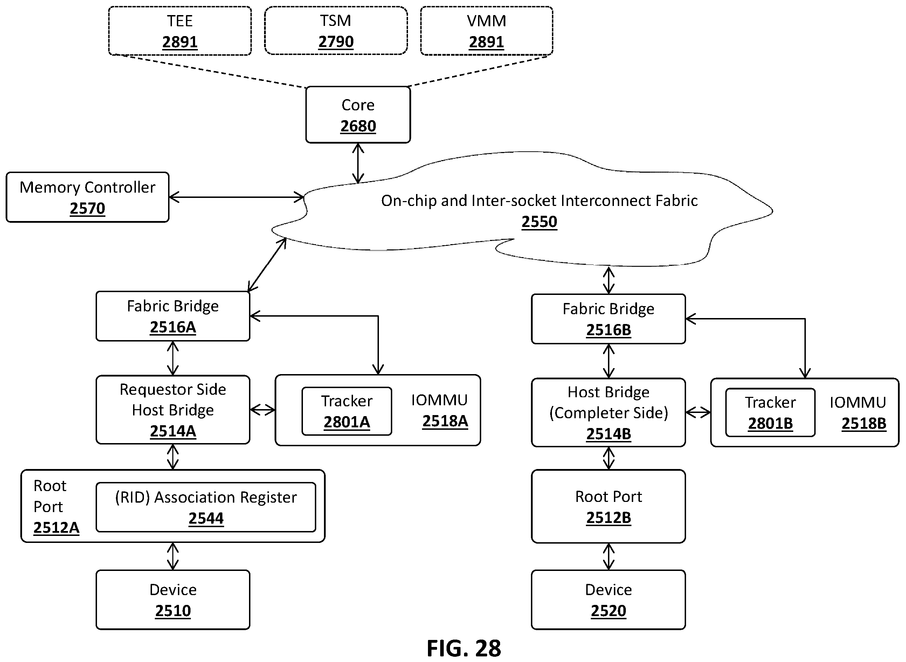

Embodiments of the invention mitigate this attack with the following techniques. Referring to **Figure 28****,** the IOMMUs 2518A-B include trackers 2801A-B, respectively, to track whether the completion for an outstanding ATS invalidation request is expected to be received on a selective stream (i.e., selective stream encrypted) and whether that request had its T bit set. The T bit in an IDE prefix indicates that the TLP is initiated from trusted execution environment (TEE) (e.g., TEE 2891). In addition, the tagging circuitry 2544 of the root port 2512A tags incoming ATS invalidation completions with a "received on a selective stream" tag. When set to 1, the tag indicates that the completion came on a selective stream into the root port 2512A from the link. The received T-bit is also sent with the completion to the IOMMU 2518A.

Thus, each IOMMU 2518A-B updates/adds a "need selective stream encryption" tag bit when sending an ATS invalidation request to downstream devices (e.g., device 2510). The value of the "need selective stream encryption" bit may be set by non-TEE software as part of the invalidation request it submits to the IOMMUs 2518A-B (e.g., VMM-generated requests). For TEE invalidation requests (e.g., such as those generated by TDX environments), the "need selective stream encryption" is set to 1 by the IOMMU 2518A-B as the default.

When the "need selective stream encryption" bit is set to 1, then the IOMMUs 2518A-B expect that the corresponding ATS invalidation completion will be selective stream encrypted. Thus, it sets the "expect completion on a selective stream" in the entry in the tracker 2801A-B corresponding to the outgoing ATS invalidation request to 1; otherwise, it is set to 0.

The root port 2512A upon receiving an ATS invalidation request with "need selective stream encryption" tag bit set to 1, will look up the IDE secure stream requester identifier (RID) range association registers 2844 of enabled selective streams (such as the secure stream requester identifier (RID) association register 2100 shown in Figure 21) using the target BDF to determine which selective stream to use. If the lookup returns a valid selective stream ID (i.e., there is a match for the target BDF in the RID Range association registers), then the root port 2512A encrypts the ATS invalidation request and sends it on the matching selective stream to the completer.

If the "need selective stream encryption" bit is set to 0, then the root port 2512A transmits the ATS invalidation request unencrypted, or link encrypted (if Link IDE is enabled). In some embodiments, the TSM 2790 ensures that there is no overlap between the RID Range association registers 2544 mapped to different selective streams.

In these embodiments, the root port 2512A forwards incoming ATS invalidation completions to the IOMMU 2518A with a "received on a selective stream" tag which, when set to 1, indicates that the completion came on a selective stream into the root port from the link. In some embodiments, the received T-bit is also sent along with the completion to IOMMU.

The IOMMU 2518A performs a lookup in its tracker 2801 to verify that the stored "expect completion on a selective stream" bit value matches the value of the "received on a selective stream" tag and that the T bit of the ATS invalidation completion matches the request's T bit. If either values do not match, a security failure is generated.

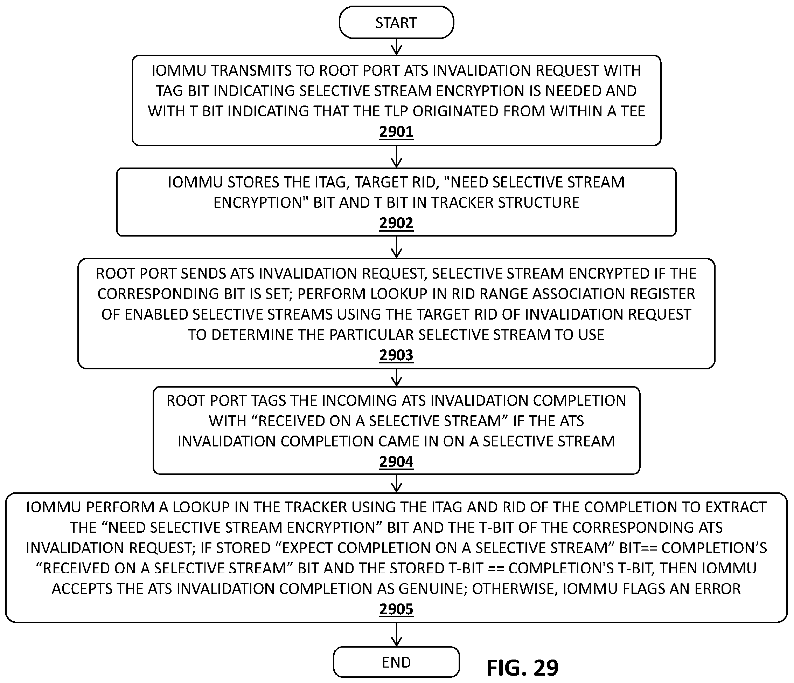

A method in accordance with embodiments of the invention is illustrated in **Figure 29**. While the method will be described with respect to root port 2512A and IOMMU 2518A, the underlying principles of the invention are not limited to these specific details.

At 2901, an IOMMU (e.g., 2518A) sends to the root port (e.g., 2512A) an ATS invalidation request with a "need selective stream encryption" tag bit and a bit indicating that the TLP originated from within a trusted execution environment (TEE). The ATS invalidation request also includes an ITAG which uniquely identifies the ATS invalidation request. At 2902, the IOMMU stores the ITAG, target RID, "need selective stream encryption" bit and T bit in a tracker structure.

In these embodiments, the value of the "need selective stream encryption" bit may be set by software as part of the invalidation request it submits to the IOMMU for VMM-generated requests. For invalidation requests originating from a TEE (e.g., such as a TDX environment), the "need selective stream encryption" is set by default to 1 by the IOMMU. Consequently, the IOMMU expects that the corresponding completion will be selective stream encrypted and therefore sets the "expect completion on a selective stream" in the tracker entry corresponding to the outgoing ATS invalidation request to 1; otherwise the bit will be set to 0.

At 2903, the root port sends the ATS invalidation request selective stream encrypted if the "need selective stream encryption" bit is set. The root port looks up the RID range association register of enabled selective streams using the target RID of the invalidation request to determine the particular selective stream to use.

At 2904, the root port tags the incoming ATS invalidation completion with "received on a selective stream" if the ATS invalidation completion came in on a selective stream.

At 2905, the IOMMU perform a lookup in the tracker using the ITAG and RID of the completion to extract the "need selective stream encryption" bit and the T-bit of the corresponding ATS invalidation request. If the stored "Expect completion on a selective stream" bit== Completion's "received on a selective stream" bit and the stored T-bit == completion's T-bit, then IOMMU accepts the ATS invalidation completion as genuine. Otherwise, IOMMU flags an error.

### APPARATUS AND METHOD FOR SECURE SERIAL COMMUNICATION WITH REDUCED POWER, AREA, AND COMPLEXITY

In some embodiments, the requester side root port tags non-posted requests from downstream devices with a "stream ID" tag before transmitting the non-posted requests to the appropriate outstanding transaction tracker in the system. As in some of the embodiments previously described, this tracker may be in the host bridge (HIOP) for transactions targeting main memory, in the IOMMU for ATS requests, in accelerators for transactions targeting accelerator MMIO memory, and in the peer root port for transactions targeting MMIO space of peer discrete devices downstream of the peer root port.

Regardless of its location, the outstanding transaction tracker stores the stream ID tag and then returns it along with the corresponding completion back to the requestor side root port. The requestor side root port will use the stream ID tag of the completion to determine whether to encrypt the completion on a selective stream as well as the exact selective stream on which the completion is to be sent to the requestor.

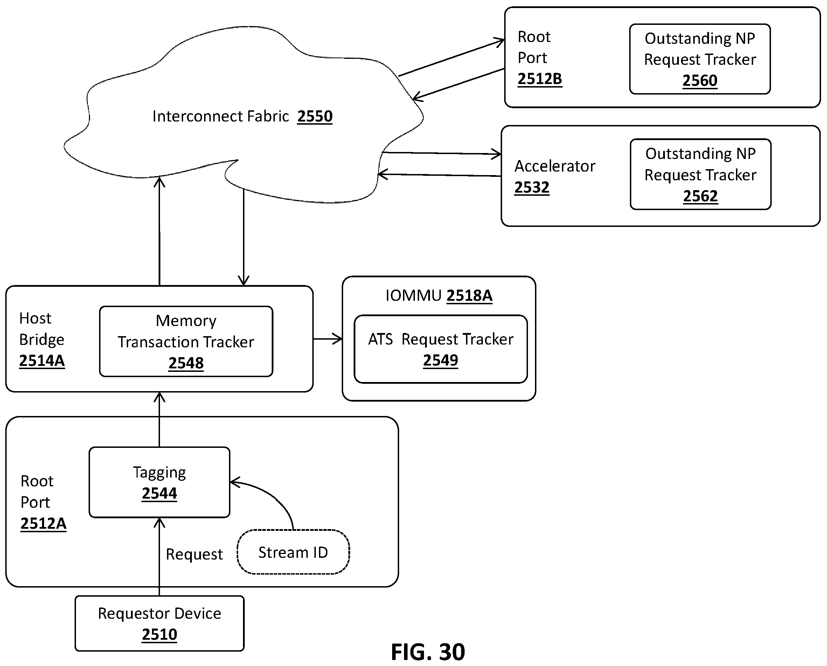

Referring to **Figure 30****,** prior to forwarding upstream into the SoC fabric 2550, tagging circuitry 2544 of the root port 2512A tag all inbound non-posted requests with an 8-bit "Stream ID" extracted from the request packet (e.g., from OHC-C). For a non-posted request that is selective stream encrypted, the root port 2512A forwards the request upstream into the SoC fabric 2550 with the stream ID tag set to the selective stream ID of the requestor device 2510. For non-posted requests that are unencrypted or link encrypted, the root port 2512A forwards the requests upstream with the stream ID tag set to an invalid value (OxFF). In some implementations, the host platform software ensures that every selective stream in the system is assigned a globally unique selective stream ID and avoids using 0xFF as a valid selective stream ID value. To avoid this restriction, in some embodiments, more bits are added to the stream ID tag to include a host bridge ID and/or a valid bit.

The non-posted request along with the stream ID tag flows through the SoC interface interconnect fabrics 2550 and bridges until it reaches an existing outstanding request tracker, such as the memory transaction tracker 2548 for a DMA coherent transactions, outstanding non-posted request trackers 2560, 2562 of completer side root ports 2512 and on-chip accelerators 2532, respectively. For an IOMMU transaction, the tracker 2549 will be in the IOMMU 2518A. These trackers store the additional stream ID tag in the existing tracking structure and return it with the corresponding completion back to the requestor side root port. Each of the root ports, IOMMUs, host bridges, and accelerators include circuitry and logic to ensure that fatal errors are flagged, and transactions dropped if a completion is matching multiple requests in their respective trackers (which indicates that an attacker has sent a request with the same RID & PCIe transaction Tag as the victim device's request).

Finally, the requestor side root port will use completion's stream ID tag to determine whether the completion is to be sent encrypted on a selective stream or unencrypted/link encrypted and the selective stream to use if the completion is to be sent encrypted on a selective stream.

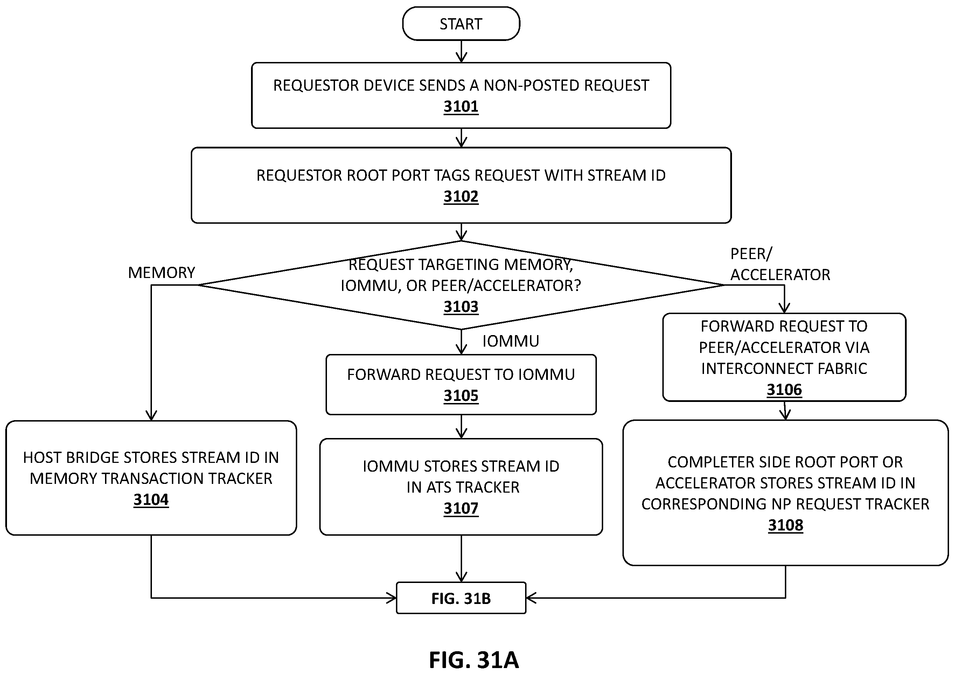

**Figures 31A-B** illustrate a method in accordance with at least some embodiments of the invention which may be implemented on the architectural components previously described, but which is not limited to this these specific components. Additionally, while described separately, the various operations in **Figures 31A-B** may be performed in combination with any of the operations described above (e.g., including, but not limited to, the operations in **Figures 25C-D****).**

At 3101, a requestor device sends a non-posted request and, at 3102, the corresponding root port tags the request with the corresponding 8-bit stream ID. At 3103, the host bridge handles the request based on the destination of the transaction. If the request is targeting memory, then at 3104, the host bridge stores the stream ID in an outstanding memory transaction tracker (along with other information related to the non-posted request). If the request is targeting the IOMMU, then at 3105, the request is forwarded to the IOMMU, and at 3107, the IOMMU stores the stream ID in an ATS tracker. The IOMMU subsequently returns the stream ID along with the corresponding ATS completion to the requestor.

If the request is targeting a peer, then the request is forwarded with the stream ID via the interconnect fabric at 3106, and at 3108, the completer side root port or the accelerator stores the stream ID in a corresponding non-posted request tracker. In some embodiments, these bits are treated as part of the payload by the interconnect fabric and are therefore transparent to the fabric.

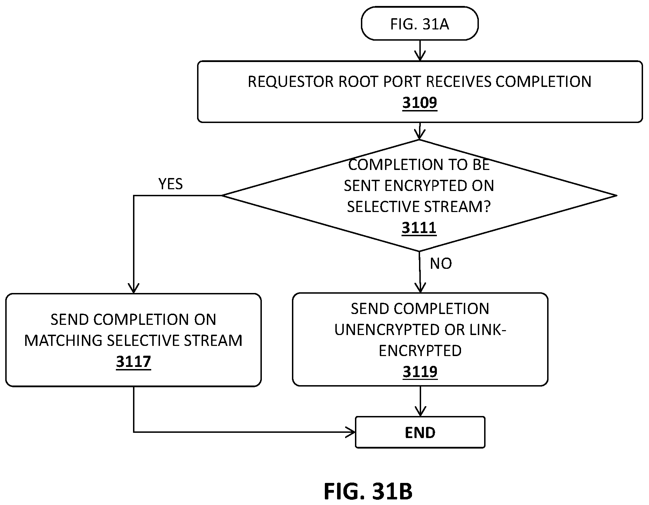

Referring to **Figure 31B****,** at 3109 the requestor root port receives the completion and, at 3111, uses the completion's stream ID tag to determine at whether the completion is to be sent encrypted on a selective stream and, if so, determines which selective stream to use and sends the completion at 3117. Alternatively, it sends the completion unencrypted or link encrypted at 3119.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still cooperate or interact with each other.

### EXAMPLES

The following are example implementations of different embodiments of the invention.

Example 1. A processor, comprising: a plurality of cores; a memory controller to couple to a memory; an interconnect fabric coupled to the plurality of cores and the memory controller; and a root complex to support end-to-end encrypted channels between devices, the root complex comprising: a root port to receive non-posted requests from a requestor device, the root port to associate a first tag value with a non-posted request to indicate whether the non-posted request is received over an end-to-end encrypted channel; and a bridge device to transmit the non-posted request with the first tag value and to subsequently receive a completion message including the first tag value, wherein the root port is to determine whether the completion message is to be encrypted in accordance with the end-to-end encrypted channel based on the first tag value.

Example 2. The processor of example 1, wherein the root port is to associate a second tag value with the non-posted request to indicate whether the root port is associated with a trusted execution environment, the second tag value to be included with the completion message.

Example 3. The processor of examples of 1 or 2, wherein root port comprises a register to store a mode value to indicate whether the root port is associated with the trusted execution environment, wherein the root port is to compare the second tag value included with the completion message with the mode value and is to generate a failure if the second tag value does not match the mode value.

Example 4. The processor of any of examples 1-3, wherein the first tag value comprises a first bit, the root port to set the first bit to 1 to indicate that the non-posted request is received over an end-to-end encrypted channel.

Example 5. The processor of any of examples 1-4, further comprising: a memory transaction tracker, wherein if the non-posted request is directed to the memory, the bridge device is to store the first tag value and the second tag value in a first entry of the memory transaction tracker associated with the non-posted request, and wherein the bridge device is to read the first and second tag values from the first entry and include the first and second tag values with the completion message.

Example 6. The processor of any of examples 1-5, further comprising: an input-output memory management unit (IOMMU); an address translation services (ATS) request tracker associated with the IOMMU, wherein if the non-posted request is directed to the IOMMU, the bridge device is to provide the non-posted request including the first and second tag values to the IOMMU, which is to store the first and second tag values in the ATS request tracker, and subsequently include the first and second tag values with the completion message.

Example 7. The processor of any of examples 1-6, wherein the non-posted request comprises a page request and wherein the completion message comprises a page request response message.

Example 8. The processor of any of examples 1-7, further comprising: a completer device to receive the non-posted request from the bridge device, the completer device including a non-posted request tracker to store the first and second tag values, wherein the completer device is to subsequently include the first and second tag values with the completion message.

Example 9. The processor of any of examples 1-8 wherein the completer device comprises an accelerator device or a peer device coupled to the interconnect fabric via a completer side bridge device.

Example 10. The processor of any of examples 1-9 wherein the first tag value comprises a selective stream identifier (ID).

Example 11. A method, comprising: receiving, at a root port, a non-posted request from a requestor device; associating a first tag value with a non-posted request to indicate whether the non-posted request is received over an end-to-end encrypted channel; transmitting, by a bridge device, the non-posted request with the first tag value; and receiving, by the bridge device, a completion message including the first tag value, wherein the root port is to determine whether the completion message is to be encrypted in accordance with the end-to-end encrypted channel based on the first tag value.

Example 12. The method of example 11, wherein the root port is to associate a second tag value with the non-posted request to indicate whether the root port is associated with a trusted execution environment, the second tag value to be included with the completion message.

Example 13. The method of examples 11 or 12, wherein root port is to store a mode value in a register to indicate whether the root port is associated with the trusted execution environment, wherein the root port is to compare the second tag value with the mode value and is to generate a failure if the second tag value does not match the mode value.

Example 14. The method of any of examples 11-13, wherein the first tag value comprises a first bit to be set to 1 to indicate that the non-posted request is received over an end-to-end encrypted channel.

Example 15. The method of any of examples 11-14, wherein if the non-posted request is directed to a memory, the bridge device is to store the first tag value and the second tag value in a first entry of a memory transaction tracker, and wherein the bridge device is to read the first and second tag values from the first entry and include the first and second tag values with the completion message.

Example 16. The method of any of examples 11-15, wherein if the non-posted request is directed to an input-output memory management unit (IOMMU), the bridge device is to provide the non-posted request including the first and second tag values to the IOMMU, which is to store the first and second tag values in an address translation services (ATS) request tracker, and subsequently include the first and second tag values with the completion message.

Example 17. The method of any of examples 11-16, wherein the non-posted request comprises a page request and wherein the completion message comprises a page request response message.

Example 18. The method of any of examples 11-17, wherein if the non-posted request is directed to a completer device, the completer device is to store the first and second tag values in a non-posted request tracker, wherein the completer device is to subsequently include the first and second tag values with the completion message.

Example 19. The method of any of examples 11-18, wherein the completer device comprises an accelerator device or a peer device coupled to the interconnect fabric via a completer side bridge device.

Example 20. The method of any of examples 11-19 wherein the first tag value comprises a selective stream identifier (ID).

Example 21. A machine-readable medium having program code stored thereon which, when executed by a machine, causes the machine to perform operations, comprising: receiving, at a root port, a non-posted request from a requestor device; associating a first tag value with a non-posted request to indicate whether the non-posted request is received over an end-to-end encrypted channel; transmitting, by a bridge device, the non-posted request with the first tag value; and receiving, by the bridge device, a completion message including the first tag value, wherein the root port is to determine whether the completion message is to be encrypted in accordance with the end-to-end encrypted channel based on the first tag value.

Example 22. The machine-readable medium of example 21, wherein the root port is to associate a second tag value with the non-posted request to indicate whether the root port is associated with a trusted execution environment, the second tag value to be included with the completion message.

Example 23. The machine-readable medium of examples 21 or 22, wherein root port is to store a mode value in a register to indicate whether the root port is associated with the trusted execution environment, wherein the root port is to compare the second tag value with the mode value and is to generate a failure if the second tag value does not match the mode value.

Example 24. The machine-readable medium of any of examples 21-23, wherein the first tag value comprises a first bit to be set to 1 to indicate that the non-posted request is received over an end-to-end encrypted channel.

Example 25. The machine-readable medium of any of examples 21-24, wherein if the non-posted request is directed to a memory, the bridge device is to store the first tag value and the second tag value in a first entry of a memory transaction tracker, and wherein the bridge device is to read the first and second tag values from the first entry and include the first and second tag values with the completion message.

Example 26. The machine-readable medium of any of examples 21-25, wherein if the non-posted request is directed to an input-output memory management unit (IOMMU), the bridge device is to provide the non-posted request including the first and second tag values to the IOMMU, which is to store the first and second tag values in an address translation services (ATS) request tracker, and subsequently include the first and second tag values with the completion message.

Example 27. The machine-readable medium of any of examples 21-26, wherein the non-posted request comprises a page request and wherein the completion message comprises a page request response message.

Example 28. The machine-readable medium of any of examples 21-26, wherein if the non-posted request is directed to a completer device, the completer device is to store the first and second tag values in a non-posted request tracker, wherein the completer device is to subsequently include the first and second tag values with the completion message.

Example 29. The machine-readable medium of any of examples 21-28, wherein the completer device comprises an accelerator device or a peer device coupled to the interconnect fabric via a completer side bridge device.

Example 30. The machine-readable medium of any of examples 21-29, wherein the first tag value comprises a selective stream identifier (ID).

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus, the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A processor, comprising:
a plurality of cores;
a memory controller to couple to a memory;
an interconnect fabric coupled to the plurality of cores and the memory controller; and
a root complex to support end-to-end encrypted channels between devices, the root complex comprising:
a root port to receive non-posted requests from a requestor device, the root port to associate a first tag value with a non-posted request to indicate whether the non-posted request is received over an end-to-end encrypted channel; and
a bridge device to transmit the non-posted request with the first tag value and to subsequently receive a completion message including the first tag value,
wherein the root port is to determine whether the completion message is to be encrypted in accordance with the end-to-end encrypted channel based on the first tag value.

2. The processor of claim 1, wherein the root port is to associate a second tag value with the non-posted request to indicate whether the root port is associated with a trusted execution environment, the second tag value to be included with the completion message.

3. The processor of claim 2, wherein the root port comprises a register to store a mode value to indicate whether the root port is associated with the trusted execution environment, wherein the root port is to compare the second tag value included with the completion message with the mode value and is to generate a failure if the second tag value does not match the mode value.

4. The processor of any of claims 1 to 3, wherein the first tag value comprises a first bit, the root port to set the first bit to 1 to indicate that the non-posted request is received over an end-to-end encrypted channel.

5. The processor of claim 2 or 3, further comprising:
a memory transaction tracker, wherein if the non-posted request is directed to the memory, the bridge device is to store the first tag value and the second tag value in a first entry of the memory transaction tracker associated with the non-posted request, and wherein the bridge device is to read the first and second tag values from the first entry and include the first and second tag values with the completion message.

6. The processor of claim 2 or 3, further comprising:
an input-output memory management unit (IOMMU);
an address translation services (ATS) request tracker associated with the IOMMU,
wherein if the non-posted request is directed to the IOMMU, the bridge device is to provide the non-posted request including the first and second tag values to the IOMMU, which is to store the first and second tag values in the ATS request tracker, and subsequently include the first and second tag values with the completion message.

7. The processor of claim 6, wherein the non-posted request comprises a page request and wherein the completion message comprises a page request response message.

8. The processor of claim 2 or 3, further comprising:
a completer device to receive the non-posted request from the bridge device, the completer device including a non-posted request tracker to store the first and second tag values,
wherein the completer device is to subsequently include the first and second tag values with the completion message.

9. The processor of claim 8 wherein the completer device comprises an accelerator device or a peer device coupled to the interconnect fabric via a completer side bridge device.

10. The processor of any of claims 1 to 9 wherein the first tag value comprises a selective stream identifier (ID).

11. A method, comprising:
receiving, at a root port, a non-posted request from a requestor device;
associating a first tag value with a non-posted request to indicate whether the non-posted request is received over an end-to-end encrypted channel;
transmitting, by a bridge device, the non-posted request with the first tag value; and
receiving, by the bridge device, a completion message including the first tag value,
wherein the root port is to determine whether the completion message is to be encrypted in accordance with the end-to-end encrypted channel based on the first tag value.

12. The method of claim 11, wherein the root port is to associate a second tag value with the non-posted request to indicate whether the root port is associated with a trusted execution environment, the second tag value to be included with the completion message.

13. The method of claim 12, wherein the root port is to store a mode value in a register to indicate whether the root port is associated with the trusted execution environment, wherein the root port is to compare the second tag value with the mode value and is to generate a failure if the second tag value does not match the mode value.

14. The method of any of claims 11 to 13, wherein the first tag value comprises a first bit to be set to 1 to indicate that the non-posted request is received over an end-to-end encrypted channel.

15. The method of claim 12 or 13, wherein if the non-posted request is directed to a memory, the bridge device is to store the first tag value and the second tag value in a first entry of a memory transaction tracker, and wherein the bridge device is to read the first and second tag values from the first entry and include the first and second tag values with the completion message.
